(19) Europäisches Patentamt
European Patent Office
Office européen des brevets

(11) EP 1 288 791 A1

(12) # EUROPÄISCHE PATENTANMELDUNG

(43) Veröffentlichungstag:
**05.03.2003 Patentblatt 2003/10**

(51) Int Cl.[7]: **G06F 17/30**

(21) Anmeldenummer: **01119749.8**

(22) Anmeldetag: **27.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Data Becker GmbH & Co. KG.**
**40223 Düsseldorf (DE)**

(72) Erfinder: **Müller, Thomas**
**41236 Mönchengladbach (DE)**

(74) Vertreter: **Schweiger, Martin, Dipl.-Ing.**
**Schweiger & Partner**
**Anwaltskanzlei**
**Karl-Theodor-Strasse 69**
**80803 München (DE)**

(54) **Computersystem sowie Verfahren zum Betrieb einer erweiterbaren Datenbank**

(57) Ein Computersystem (1) weist mindestens eine Datentabelle, mindestens einen Eintragsindex und genau einen Zwischenindex auf, wobei jeder Datentabelle ein Eintragsindex zugeordnet ist und wobei der Zwischenindex aus den Eintragsindizes bildbar ist. Die Datentabelle enthält mehrere Eintragstexte aufweisende Datensätze. Die Eintragsindizes und der Zwischenindex weisen weitere Informationen zu den Datensätzen auf.

Für eine Stichwortsuchfunktion ist ein Suchbegriff in das Computersystem (1) eingebbar. Unter Verwendung der in den Eintragsindizes und der im Zwischenindex enthaltenen Informationen sind Datensätze ausgebbar, die Übereinstimmungen mit dem Suchbegriff aufweisen.

71

| | Erster Buchstabe | Zweiter Buchstabe | Dritter Buchstabe | Nummer der Datentabelle/des Eintragsindexes | Laufende Reihenfolgenummer im Eintragsindex |
|---|---|---|---|---|---|
| 72 | b | l | a | 2 | 1 |
| | g | r | ü | 1 | 2 |
| | r | o | t | 1 | 3 |
| 73 | w | e | i | 2 | 2 |

Fig. 17

EP 1 288 791 A1

**Beschreibung**

Computersystem sowie Verfahren zum Betrieb einer erweiterbaren Datenbank

Die Erfindung betrifft ein Computersystem mit einer Datenbank, die mehrere Datentabellen, mehrere Eintragsindizes und einen Zwischenindex aufweist sowie ein Verfahren zum Betrieb eines solchen Computersystems.

Im Stand der Technik sind zum einen Computersysteme mit Datenbanken bekannt, die sich gliedern in Structured Query Language-Datenbanken und Datenbank-Standardprogramme. Zum anderen sind Computersysteme mit Volltext-Datenbanksystemen geläufig.

Bekannte Datenbank-Standardprogramme sind Microsoft Access, dBase, FoxPro, CA-Clipper, Informix und Paradox. Bekannte Volltext-Datenbanksysteme sind Oracle und Adabas D.

Eine Datenbank ist ein elektronisches Archiv für die strukturierte, speicherplatzsparende Aufbewahrung großer Mengen inhaltlich zusammengehöriger Daten, aus dem Daten abrufbar sind. Ein Datenbanksystem umfaßt die aus den Primärdaten bestehende Datenbasis, eine Datenbankbeschreibung und mehrere Datenbank-Programme.

Bei den bekannten Datenbanken ist von Nachteil, daß sie häufig nicht von Nur-Lese-Medien wie CD-ROM, DVD-ROM und Internet lauffähig sind. Weiterhin ist von Nachteil, daß die bekannten Datenbanken meist keine oder nur eine sehr langsame Volltextsuchfunktion bereithalten. Des weiteren weisen die bekannten Datenbanken Geschwindigkeits- oder sogar Stabilitätsprobleme auf, wenn sie Datensätze unterschiedlicher Längen enthalten. Sie sind somit für den Einsatz von Datensätzen, die unterschiedliche Längen aufweisen, nur bedingt geeignet.

Bei den Volltext-Datenbanksystemen ist von Nachteil, daß sie sehr viel Speicher und schnelle Prozessoren benötigen, um schnell ablaufen zu können. Diese Volltext-Datenbanksysteme erstellen Volltext-Indizes dynamisch in Echtzeit, um die Durchsuchbarkeit der Datenbank zu gewährleisten. Bei großen Datenmengen ist dies ein sehr zeitintensiver Prozeß, der sich negativ auf die Bearbeitungsdauer von Suchanfragen auswirkt.

Es ist daher Aufgabe der Erfindung, ein Computersystem sowie ein Verfahren zum Betreiben eines Computersystems bereitzustellen, mit dem eine geschwindigkeits- und speichereffiziente Verwaltung von großen Datenmengen in der Datenbank gewährleistet ist, das auf Nur-Lese-Medien wie CD-ROM, DVD-ROM und Internet lauffähig ist und das eine effiziente Suchfunktion insbesondere im Volltext bereitstellt.

Diese Aufgabe wird durch den Gegenstand der unabhängigen Ansprüche gelöst. Vorteilhafte Ausgestaltungen ergeben sich aus den Unteransprüchen.

Gemäß der Erfindung weist das Computersystem ein relativ schnelles Speichermedium wie einen Arbeitsspeicher RAM, wenigstens ein relativ langsames Speichermedium wie ein CD-ROM-Laufwerk oder eine Festplatte sowie ein Datenbankprogramm auf.

Für die Durchführung einer Stichwortsuchfunktion ist eine besondere Gliederung der Datenbank vorgesehen. Diese weist dazu wenigstens eine als Datei ausgebildete Datentabelle mit mehreren Datensätzen auf, die auf dem relativ langsamen Speichermedium angeordnet ist. Weiterhin ist je ein Eintragsindex zu jeder Datentabelle vorgesehen, der auf dem relativ langsamen Speichermedium angeordnet ist. Jeder Eintragsindex enthält mehrere Eintragsindexzeilen. Jede Eintragsindexzeile entspricht einem Datensatz. Jede Eintragsindexzeile weist zu je einem Datensatz eine Information über die Position des entsprechenden Datensatzes in der Datentabelle und ein zugeordnetes Stichwort auf.

Gemäß einem ersten Aspekt der Erfindung können pro Datensatz ein oder mehrere Stichwörter vorgesehen sein. Falls mehrere Stichwörter zu einem Datensatz vorgesehen sind, so sind diese Stichwörter in verschiedenen Eintragsindexzeilen dargestellt.

Eine Ausgestaltung der erfindungsgemäßen Gliederung der Datenbank, in der pro Datensatz genau ein Stichwort vorgesehen ist, ist besonders speichereffizient.

Außerdem beinhaltet die Gliederung der Datenbank einen Zwischenindex, der auf dem relativ schnellen Speichermedium angeordnet ist und der mehrere Zwischenindexzeilen enthält. Jede Zwischenindexzeile entspricht einer Eintragsindexzeile in einem der Eintragsindizes 1:M. Jede Zwischenindexzeile weist Teile der in den Eintragsindizes vorgesehenen Stichwörter, eine Information über die Position der entsprechenden Eintragsindexzeile im jeweiligen Eintragsindex und die laufende Nummer des Eintragsindexes auf. Diese Teile der vorgesehenen Stichwörter werden vorzugsweise alphabetisch aufsteigend sortiert vorgesehen.

Für eine Stichwortsuchfunktion ist ein Suchbegriff in das Computersystem eingebbar. Unter Verwendung der in den Eintragsindizes und dem Zwischenindex enthaltenen Informationen sind Datensätze ausgebbar, die mit dem Suchbegriff Übereinstimmungen aufweisen.

Die Stichwortsuchfunktion kann auch als phonetische Suchfunktion vorgesehen sein. Hierfür sind die Stichwörter in den Eintragsindizes und Teile der Stichwörter im Zwischenindex als phonetischer Code gespeichert. Der vom Benutzer eingegebene Suchbegriff wird zunächst in seinen phonetischen Code umgewandelt. Der Ablauf der phonetischen Suchfunktion entspricht genau dem Ablauf der Stichwortsuchfunktion.

Einmalige Aufbereitungsprozesse wie die Erstellung der Eintragsindizes und des Zwischenindexes werden auf einer Produktionsplattform durchgeführt. Der Benutzer auf einer Zielplattform kann auf die Eintragsindizes und den Zwischenindex zugreifen, die auf der Produktionsplattform erstellt wurden. Hierbei wird von der Möglichkeit Gebrauch gemacht, Rechenleistung und Rechenzeit von der Zielplattform des Benutzers auf die Produktionsplattform des Herstellers der Datenbank zu verlagern.

Aus Gründen der optimalen Speichereffizienz ist es wünschenswert, jedem Datensatz genau ein Stichwort zuzuordnen. Erfindungsgemäß ist auch eine Zuordnung mehrerer Stichwörter zu einem Datensatz möglich.

Durch die erfindungsgemäße Gliederung der Datenbank werden sehr vorteilhafte Suchzeiten der Stichwortsuchfunktion im Sekundenbruchteilbereich erreicht. Die Erfindung ist in der Lage, große Datenmengen, die im Bereich von mehr als 200.000 Einträgen und mehreren Millionen Wörtern liegen können, geschwindigkeits- und speichereffizient zu verwalten.

Gemäß einer Ausführungsform der Erfindung liegen der oder die Eintragsindizes alphabetisch nach Stichwörtern der Eintragsindexzeilen sortiert im relativ langsamen Speichermedium insbesondere auf der Festplatte bzw. auf CD- bzw. DVD-ROM-Laufwerk vor. Der Zwischenindex wird durch Zusammenführung der Eintragsindizes in einem Reißverschlußverfahren auf dem relativ schnellen Speichermedium insbesondere auf dem Direktzugriffsspeicher bzw. auf dem Arbeitsspeicher RAM erzeugt und liegt dementsprechend ebenfalls alphabetisch nach Stichwörtern sortiert vor.

Somit ist nach Erstellung der Eintragsindizes sowie des Zwischenindexes keine weitere Sortierung mehr notwendig. Dies vereinfacht den Erstellvorgang des Zwischenindexes erheblich und gewährleistet die Durchführbarkeit des erfindungsgemäßen Verfahrens auf Computersystemen mit begrenzten Speicherkapazitäten.

Gemäß einem Gedanken der Erfindung kann das Computersystem in den Eintragsindexzeilen der Eintragsindizes und in den Zwischenindexzeilen des Zwischenindexes zusätzlich jeweils ein Attributsfeld aufweisen. In diesem Attributsfeld kann ein Attributswert vorgesehen sein, wobei jedem Attributswert ein Attributstext entspricht. Mittels dieser Attributswerte sind den einzelnen Datensätzen in den Eintragsindexzeilen und in den Zwischenindexzeilen Attributstexte zuordenbar. Diese Attributstexte sind in Attributstabellen hinterlegt, die jeweils mehrere Attributstabellenzeilen aufweisen.

Bei einer Stichwortsuche kann vom Benutzer zusätzlich zu dem Suchbegriff ein Suchattributswert in das Computersystem eingegeben werden. Bei einer Attributssuche kann vom Benutzer ein Suchattributswert in das Computersystem eingegeben werden. Unter Verwendung der im Zwischenindex und in den Eintragsindizes enthaltenen Informationen sind Datensätze ausgebbar, die hinsichtlich des Stichworts und hinsichtlich des Attributswerts bzw. hinsichtlich des Attributswerts Übereinstimmungen mit dem Suchbegriff und mit dem Suchattributswert bzw. mit dem Suchattributswert aufweisen.

Durch die Bereitstellung von Attributswerten, die Attributstexten zugeordnet sind, wird eine Verbesserung der Strukturierung der Datensätze erreicht. Die den Attributswerten zugeordneten Attributstexte können auf einfache Weise aus den Attributstabellen ermittelt werden. Die Attributswerte der den Datensätzen zugeordneten Attributstexten können in die Stichwortsuchfunktion miteinbezogen werden. Dadurch kann eine Suchanfrage präziser gefaßt werden und ein genaueres und schnelleres Ergebnis erzielt werden. Dies erhöht die Funktionalität und die Benutzerfreundlichkeit der erfindungsgemäßen Datenbank wesentlich.

Mit der Erfindung können weitere Attributsfelder in jeder Eintragsindexzeile eines Eintragsindexes und somit in jeder Zwischenindexzeile des Zwischenindexes vorgesehen werden. Die Attributsfelder gliedern sich in Attributsgruppen, wobei jeder Attributsgruppe je eine Spalte im Zwischenindex und/oder je eine Spalte in den Eintragsindizes entspricht. Jeder Attributsgruppe ist eine mehrere Attributstabellenzeilen aufweisende Attributstabelle zugeordnet, die Attributswerte und zugeordnete Attributstext enthält.

Bei einer Stichwortsuche ist zusätzlich zum Suchbegriff für jede Attributsgruppe vom Benutzer je ein Suchattributswert im Rahmen der Stichwortsuche in das Computersystem eingebbar.

Bei einer Attributssuche ist für jede Attributsgruppe vom Benutzer je ein Suchattributswert im Rahmen der Stichwortsuche in das Computersystem eingebbar. Für jede Attributsgruppe kann je ein Suchattributswert in die Stichwortsuchfunktion miteinbezogen werden. Unter Verwendung der im Zwischenindex und der im Eintragsindex enthaltenen Informationen sind Datensätze ausgebbar, die hinsichtlich des betreffenden Stichworts und hinsichtlich der Attributswerte bzw. hinsichtlich der Attributswerte Übereinstimmungen mit dem Suchbegriff und mit den Suchattributswerten bzw. mit den Suchattributswerten aufweisen.

Jede Attributsgruppe im Eintragsindex und/oder im Zwischenindex entspricht je einer Attributstabelle, welche die Attributswerte und die zugehörigen Attributstexte enthält.

Bei der erfindungsgemäßen Ausgestaltung des Zwischenindexes mit mehreren Attributsgruppen zur Aufnahme von Attributswerten ergibt sich der Speicherbedarf in Bytes des Zwischenindexes bei einer Anzahl von bis zu 256 Datenbanken wie folgt:

Speicherbedarf des Zwischenindexes = Anzahl der Zwischenindexzeilen * (8 + Anzahl der Attributsgruppen)

Dementsprechend wird eine weitere Verbesserung der Strukturierung und der Sortierbarkeit der Datensätze erreicht. Eine Suchanfrage kann so präziser gefaßt werden und ein sehr genaues und besonders schnelles Ergebnis erzielt werden. Dies erhöht die Funktionalität und die Benutzerfreundlichkeit der Datenbank wesentlich.

Gemäß einer weiteren Ausgestaltung der Erfindung sind bei der Stichwortsuchfunktion für die Eingabe von Suchattributswerten in das Computersystem die den Attributswerten entsprechenden Attributstexte anzeigbar. Bei der Ausgabe von Datensätzen sind die den jeweiligen Attributswerten zugeordneten Attributstexte ausgebbar.

Durch diese Ausgestaltung der Erfindung wird die Funktionalität und Bedienerfreundlichkeit der Stichwortsuchfunktion weiter verbessert.

Gemäß einem Grundgedanken der Erfindung enthaltenn die Zwischenindexzeilen des Zwischenindexes jeweils die drei ersten Buchstaben der betreffenden Stichwörter aus den entsprechenden Eintragsindexzeilen und jeweils eine Information über die Position der entsprechenden Eintragsindexzeile im jeweiligen Eintragsindex.

Beim Verfahren der Stichwortsuchfunktion werden die drei ersten Buchstaben des Suchbegriffs mit den jeweils in den Zwischenindexzeilen enthaltenen drei ersten Buchstaben der Stichwörter auf Übereinstimmung geprüft. Die Übereinstimmung aufweisenden Zwischenindexzeilen werden vom Computersystem gemerkt.

Die Erfindung kann auch mit einer anderen Anzahl von in den Zwischenindexzeilen enthaltenen Anfangsbuchstaben der Stichwörter vorgesehen werden. Dadurch ergibt sich ein anderer Speicherraum, den der Zwischenindex benötigt. Beim Verfahren der Stichwortsuchfunktion werden in diesem Fall die in den Zwischenindexzeilen enthaltenen Buchstaben der Stichwörter mit der gleichen Anzahl der Buchstaben, die den Beginn des Suchbegriffs bilden, auf Übereinstimmung geprüft. Die Übereinstimmung aufweisenden Zwischenindexzeilen werden vom Computersystem gemerkt

Die Verwendung des erfindungsgemäßen Zwischenindexes, der die ersten drei Buchstaben der Stichwörter enthält, gewährleistet insbesondere, daß Suchoperationen unter 4 Zeichen vollständig Arbeitsspeicher RAM-basiert ablaufen können. Nur bei der Darstellung der Suchergebnisse ist ein selektiver DVD/CD-ROM-Zugriff bzw. ein selektiver Festplatten-Zugriff notwendig. Die erfindungsgemäße Datenbank gewährleistet so eine besonders speichereffiziente und schnelle Verwaltung der Datensätze und eine besonders schnelle Durchführung der Stichwortsuchfunktion. Die erfindungsgemäße Datenbank ist zur Handhabung großer Datenmengen geeignet.

Weiterhin weist die Gliederung des Datenbankprogramms einen Filterindex auf, der auf dem relativ schnellen Speichermedium gebildet wird und der mehrere Filterindexzeilen enthält. Der Filterindex enthält maximal so viele Zeilen wie der Zwischenindex. Jede Filterindexzeile entspricht einer Zwischenindexzeile und enthält Informationen über die Position der dem jeweiligen Datensatz entsprechenden Zwischenindexzeile im Zwischenindex. Die Filterindexzeilen sind aus den Zwischenindexzeilen bildbar, die Übereinstimmung hinsichtlich des Suchbegriffs mit den Stichwörtern und hinsichtlich der Suchattributswerte mit den Attributswerten aufweisen. Diejenigen Datensätze, die als Ergebnis der Stichwortsuchfunktion ausgegeben werden, können unter Verwendung der in den Filterindexzeilen und in den entsprechenden Zwischenindexzeilen enthaltenen Informationen bestimmt werden.

Im Filterindex sind die relevanten Informationen zum Auffinden der Datensätze vorhanden, die ein Ergebnis der Stichwortsuchfunktion darstellen. Der Schritt des Auslesens der Ergebnis-Datensätze beinhaltet den Zugriff auf den Filterindex, wodurch der Zugriff auf den vielfach größeren Zwischenindex ersetzt wird. Durch die Verwendung des Filterindexes kann die erfindungsgemäße Datenbank besonders vorteilhaft und geschwindigkeitseffizient ausgestaltet werden.

Gemäß der Erfindung gliedern sich die einem Datensatz zugehörigen Informationen in einen Eintragstext, in ein oder in mehrere Stichwörter, in Attributswerte und in Informationen über die Position des Datensatzes in der Datentabelle. Diese einem Datensatz zugehörigen Informationen werden unterschiedlich abgespeichert. Dadurch wird eine vorteilhafte Verwaltung der Datensätze und eine schnelle und speichereffiziente Durchführung der Stichwortsuche gewährleistet.

Die Eintragstexte der Datensätze werden direkt hintereinander in Datentabellen abgespeichert. Die den Datensätzen zugehörigen Informationen wie Stichwörter, Attributswerte und Informationen über die Position des Datensatzes in der Datentabelle werden separat in denjenigen Eintragsindizes abgelegt, die den jeweiligen Datentabellen entsprechen. Dadurch können mit der erfindungsgemäßen Datenbank unterschiedlich lange Eintragstexte speicheroptimal verwaltet werden.

Gemäß der Erfindung liegt ein Großteil der Inhalte der Datenbank, besonders die Datentabellen und die Eintragsindizes auf Nur-Lese-Medien, wie CD-ROMs, DVD-ROMs und Internet vor.

Der Zwischenindex liegt im Arbeitsspeicher RAM. Er ist zwischenzeitlich auf CD-/DVD-ROM speicherbar und wird bei Betrieb der Datenbank in den Arbeitsspeicher RAM geladen.

Die Datentabellen und die Eintragsindizes werden auf der Produktionsplattform des Herstellers der Software, die wesentlich mehr Speicher und Rechengeschwindigkeit aufweist als die Zielplattform des Benutzers, erstellt und einmalig abgelegt. Rechenleistung und Rechenzeit werden vorteilhafterweise von der Zielplattform auf die Produktionsplattform verlagert, indem umfangreiche Aufbereitungsprozesse wie die Erstellung des Zwischenindexes auf der Produktionsplattform ausgeführt werden. Durch die Erfindung wird der benötigte Speicherraum im Arbeitsspeicher RAM für die Verwaltung der Datensätze stark reduziert.

Dementsprechend ist die Erfindung besonders geeignet für den Einsatz in multimedialen Nachschlagewerken auf CD-ROM und DVD-ROM, die bereits für die Darstellung der multimedialen Elemente umfangreichen Speicherraum im Arbeitsspeicher RAM beanspruchen, und die keiner regelmäßigen Änderung bedürfen. Desweiteren ist die Erfindung in der Lage, große Textmengen besonders geschwindigkeits- und speichereffizient zu verwalten.
Das Verfahren ist zur Ausführung auf einem erfindungsgemäßen Computersystem bestimmt, wie es obenstehend beschrieben worden ist. Das Computersystem weist mehrere Datentabellen, mehrere Eintragsindizes und einen Zwischenindex auf.
Gemäß der Erfindung ist auf diesem Computersystem eine Stichwortsuchfunktion vorgesehen, die Datensätze aus einer Datenbank ausliest. Hierfür wird ein Suchbegriff in das Computersystem eingelesen und wenigstens ein Teil des Suchbegriffs mit den in den Zwischenindexzeilen enthaltenen Informationen auf Übereinstimmung geprüft. Die Übereinstimmung aufweisenden Zwischenindexzeilen werden gemerkt und die diesen Zwischenindexzeilen entsprechenden Eintragsindexzeilen werden in den Arbeitsspeicher RAM geladen. Danach wird der Suchbegriff in voller Länge mit den in den Eintragsindexzeilen enthaltenen Stichwörtern auf Übereinstimmung geprüft.
Als Suchergebnis wird eine Liste der mit dem Suchbegriff übereinstimmenden Stichworte aus dem Eintragsindex auf dem Ausgabemedium ausgegeben. Die Sortierung dieser Liste ergibt sich aus der Vorsortierung der Index-Tabellen insbesondere aus der Sortierung des Eintragsindexes.
Bei Auswahl eines Stichwortes aus der so erzeugten Liste erfolgt ein Zugriff auf die dem Stichwort entsprechenden Eintragsindexzeile und auf den dem Stichwort entsprechenden Datensatz. Anschließend erfolgt die Ausgabe des diesem Stichworts zugeordneten Datensatzes auf dem Ausgabemedium.
Die Stichwortsuchfunktion kann auch als phonetische Suchfunktion vorgesehen sein. Hierfür sind die Stichwörter in den Eintragsindizes und Teile der Stichwörter im Zwischenindex und im Eintragsindex als phonetischer Code gespeichert. Der vom Benutzer eingegebene Suchbegriff wird zunächst in seinen phonetischen Code umgewandelt. Der Ablauf der phonetischen Suchfunktion entspricht genau dem Ablauf der Stichwortsuchfunktion.
Die erfindungsgemäß vorgesehene Stichwortsuchfunktion ermöglicht eine Suche nach allen hinterlegten Stichwörtern der gesamten Datenbank und gewährleistet so eine sehr vorteilhafte Funktionalität und Benutzerfreundlichkeit. Durch die sehr speichereffiziente Ausgestaltung der Stichwortsuchfunktion ergibt sich ein erheblicher Geschwindigkeitsvorteil gegenüber anderen Möglichkeiten der Durchführung einer Stichwortsuche, wie der Möglichkeit des sequentiellen Durchsuchens sämtlicher Datensätze in den Datentabellen.
Gemäß einer Ausführungsform der Erfindung wird der Zwischenindex wird durch Zusammenführung der alphabetisch sortierten Eintragsindizes in einem Reißverschlußverfahren im Direktzugriffsspeicher bzw. Arbeitsspeicher RAM erzeugt und liegt dementsprechend ebenfalls alphabetisch nach Stichwörtern sortiert vor.
Danach ist keine weitere Sortierung des Zwischenindexes mehr notwendig. Somit ist eine besonders geschwindigkeitseffiziente und speicheroptimale Durchführbarkeit des erfindungsgemäßen Verfahrens gewährleistet.
In der Erfindung können den einzelnen Datensätzen zusätzlich Attributstexte zugeordnet werden, durch welche diese Datensätze verschiedenen Bereichen zuordenbar sind. Diese Attributstexte werden in Attributstabellen, die mehrere Attributstabellenzeilen aufweisen, abgelegt. Jedem Attributstext wird in einer Attributstabellenzeile je ein Attributswert zugeordnet. Die Attributswerte dieser Attributstexte sind in den Eintragsindexzeilen enthalten, die den jeweiligen Datensätzen entsprechen.
Beim Verfahren der Stichwortsuche kann nach den Attributswerten gesucht werden, die in den Zwischenindexzeilen und in den Eintragsindexzeilen abgelegt sind. Hierbei wird zusätzlich zum Suchbegriff mindestens ein Suchattributswert in das Computersystem eingelesen.
Die Stichwortsuchfunktion fährt nur in denjenigen Zwischenindexzeilen fort, für die eine Übereinstimmung hinsichtlich der Attributswerte vorhanden ist, indem wenigstens ein Teil des Suchbegriffs mit den in den Zwischenindexzeilen enthaltenen Informationen verglichen wird. Diejenigen Zwischenindexzeilen werden vom Computersystem gemerkt, die sowohl hinsichtlich des Suchbegriffes als auch hinsichtlich der Attributswerte Übereinstimmung aufweisen.
Beim Verfahren der Attributssuche wird nach den Attributswerten gesucht, die in den Zwischenindexzeilen und in den Eintragsindexzeilen abgelegt sind. Hierbei wird mindestens ein Suchattributswert in das Computersystem eingelesen. Danach werden die eingelesenen Suchattributswerte mit den in den jeweiligen Zwischenindexzeilen enthaltenen Attributswerten auf Übereinstimmung geprüft.
Bei der Attributssuchfunktion werden diejenigen Zwischenindexzeilen vom Computersystem gemerkt, die hinsichtlich der Attributswerte Übereinstimmung aufweisen. Der Vergleich des Suchbegriffes mit den in den Zwischenindexzeilen und in den Eintragsindexzeilen enthaltenen Stichwörtern entfällt, da bei einer Attributssuche kein Suchbegriff eingebbar ist.
Die mit Attributswerten ausgestaltete Stichwortsuchfunktion weist eine besonders benutzerfreundliche Suchfunktionalität auf. Eine Suchanfrage kann so sehr präzise gefaßt und vom Computersystem besonders schnell ausgeführt werden.
Gemäß einem Gedanken der Erfindung können bei der Eingabe von Suchattributswerten in das Computersystem die den Attributswerten entsprechenden Attributstexte anzeigbar sein. Bei der Ausgabe von Datensätzen können die den jeweiligen Attributswerten zugeordneten Attributstexte mit ausgegeben werden. Jede Gruppe von Attributsfeldern zur Aufnahme von Attributswerten im Eintragsindex und/oder im Zwischenindex entspricht je einer Attributstabelle. Jede Attributstabelle, enthält eine Gruppe von Attributswerten und zugehörigen Attributstexten.

Das Verfahren ist zur Ausführung auf einem erfindungsgemäßen Computersystem bestimmt, wie es obenstehend beschrieben worden ist. Das Computersystem weist mehrere Datentabellen, mehrere Eintragsindizes, einen Zwischenindex und zusätzlich mindestens eine Attributstabelle auf.

Die derart besonders benutzerfreundlich ausgestaltete Stichwortsuchfunktion erleichtert die Miteinbeziehung von Suchattributswerten in die Stichwortsuchfunktion für den Benutzer und stellt die Ergebnisse der Stichwortfunktion, mit den jeweiligen Attributstexten versehen, besonders übersichtlich dar.

Gemäß einem der Erfindung zugrunde liegenden Gedanken können in den Zwischenindexzeilen jeweils die drei ersten Buchstaben der betreffenden Stichwörter enthalten sein. Beim Verfahren der Stichwortsuchfunktion werden die drei ersten Buchstaben des Suchbegriffs mit den jeweils in den Zwischenindexzeilen enthaltenen drei ersten Buchstaben der Stichwörter auf Übereinstimmung geprüft. Die Übereinstimmung aufweisenden Zwischenindexzeilen werden vom Computersystem gemerkt. Danach werden diejenigen Eintragsindexzeilen in den Arbeitsspeicher RAM geladen, die den so ermittelten Zwischenindexzeilen entsprechen.

Die Erfindung kann auch mit einer anderen Anzahl von in den Zwischenindexzeilen enthaltenen Anfangsbuchstaben der Stichwörter vorgesehen werden. Dadurch ergibt sich ein anderer Speicherraum, den der Zwischenindex benötigt. Beim Verfahren der Stichwortsuchfunktion werden in diesem Fall die in den Zwischenindexzeilen enthaltenen Buchstaben der Stichwörter mit der gleichen Anzahl der Buchstaben, die den Beginn des Suchbegriffs bilden, auf Übereinstimmung geprüft. Die Übereinstimmung aufweisenden Zwischenindexzeilen werden vom Computersystem gemerkt. Danach werden diejenigen Eintragsindexzeilen in den Arbeitsspeicher RAM geladen, die den so ermittelten Zwischenindexzeilen entsprechen.

Die Verwendung des erfindungsgemäßen Zwischenindexes gewährleistet insbesondere, daß Suchoperationen unter 4 Zeichen vollständig Arbeitsspeicher RAM-basiert ablaufen können. Nur bei der Darstellung der Suchergebnisse ist ein selektiver DVD/CD-ROM-Zugriff bzw. ein selektiver Festplatten-Zugriff notwendig.

Die Überprüfung auf Übereinstimmung der drei ersten Buchstaben des Suchbegriffs mit den ersten drei Buchstaben der Stichwörter kann dementsprechend vollständig im Arbeitsspeicher RAM ablaufen. Die erfindungsgemäße Datenbank gewährleistet so eine besonders speichereffiziente und schnelle Verwaltung der Datensätze und eine besonders schnelle Durchführung der Stichwortsuchfunktion. Die erfindungsgemäße Datenbank ist zur Handhabung großer Datenmengen geeignet.

Das Verfahren ist zur Ausführung auf einem erfindungsgemäßen Computersystem bestimmt, wie es obenstehend beschrieben worden ist. Das Computersystem weist mehrere Datentabellen, mehrere Eintragsindizes, einen Zwischenindex, einen Filterindex und gegebenenfalls mindestens eine Attributstabelle auf.

Eine weitere Idee der Erfindung betrifft das Vorsehen eines Filterindexes zur Durchführung der Stichwortsuchfunktion. Der Filterindex weist eine oder mehrere Filterindexzeilen auf, wobei jede Filterindexzeile einer Zwischenindexzeile zugeordnet ist. Der Filterindex wird im Anschluß an die Überprüfung auf Übereinstimmung des Suchbegriffes und ggf. des Attributswerts mit den in den Zwischenindexzeilen enthaltenen Informationen gebildet. Der Filterindex wird aus denjenigen Zwischenindexzeilen gebildet, bei denen eine Übereinstimmung hinsichtlich des Suchbegriffes und gegebenenfalls hinsichtlich des Attributswerts gefunden wurde.

In dem Filterindex sind die Informationen über die Position der gesuchten Datensätze im Zwischenindex enthalten. Über diese Zwischenindexzeilen werden die den gesuchten Datensätzen entsprechenden Eintragsindexzeilen in einem der Eintragsindizes bestimmt. Nach Bildung des Filterindexes werden die den Filterindexzeilen entsprechenden Zwischenindexzeilen in den Arbeitsspeicher RAM geladen. Dies geschieht selektiv, wobei nur die den Filterindexzeilen entsprechenden Eintragsindexzeilen aus dem Eintragsindex eingelesen werden, die der Benutzer im Suchfenster auf dem Bildschirm sieht. Beim Scrollen des Suchfensters durch den Benutzer werden die weiteren Eintragsindexzeilen in Echtzeit nachgeladen. Der Filterindex wird sortiert vorgesehen wie der Zwischenindex, aus dem er gebildet ist.

Im Filterindex sind genau die zum Auffinden der gesuchten Datensätze relevanten Informationen gespeichert. Durch die Verwendung des Filterindexes kann die erfindungsgemäße Stichwortsuchfunktion besonders schnell und speichereffizient ausgeführt werden.

Für die Durchführung einer Stichwortsuchfunktion ist eine besonders vorteilhafte Abspeicherung der den einzelnen Datensätzen zugehörigen Informationen vorgesehen.

Die einem Datensatz zugehörigen Informationen gliedern sich in einen Eintragstext, in ein oder in mehrere Stichwörter, in Attributswerte und in Informationen über die Position des Datensatzes in der Datentabelle. Die Eintragstexte werden in einer Datentabelle hintereinander abgespeichert. Alle Einträge im Eintragsindex sind gleich groß und die Stichwörter belegen jeweils 30 Zeichen. Die Konstruktion der Datentabelle bildet somit einen vorteilhaften Kompromiß aus Geschwindigkeit und Speichereffizienz.

Geschwindigkeitseffizienz ist hierbei nur ein nachrangiges Kriterium, da Datenbankzugriffe meist auf einen einzigen Eintrag und demzufolge auf einen kleinen Bruchteil der Datenbank erfolgen. Die weiteren Informationen, wie zugeordnete Stichwörter, Attributswerte und Informationen über die Position des Datensatzes in der Datentabelle werden separat in den Eintragsindexzeilen der den Datentabellen zugehörigen Eintragsindizes abgelegt.

Durch die erfindungsgemäße Abspeicherung der Informationen ist die Erfindung in der Lage, große Datenmengen sehr speichereffizient zu verwalten. Die Erfindung unterstützt Datensätze mit Inhalten, die sich in ihrer Länge unterscheiden, und sie ist auf einfache Weise erweiterbar. Durch die erfindungsgemäße Abspeicherung der Informationen wird eine besonders schnelle Verwaltung der Datensätze und eine besonders schnelle und speichereffiziente Ausführung der Stichwortsuche gewährleistet. Die verwendete Datenbankstruktur ist darüberhinaus einfach und leicht implementierbar.

Zusammenfassend ergibt sich, daß die einzelnen Datensätze von der erfindungsgemäßen Datenbank speicheroptimal ablegbar und geschwindigkeitsoptimal abrufbar sind.

Die Suchgeschwindigkeit der Stichwortsuche verhält sich bei der Stichwortsuche weitestgehend indifferent zur Anzahl der Suchtreffer.

Als Datenbank-Management-System für die erfindungsgemäße Datenbank auf der Produktionsseite, nicht bei der Runtime kann eine beliebige Datenbanksoftware, wie Microsoft Access, MS SQL Server, mySQL oder ein ähnliches Produkt benutzt werden, da sich diese für die redaktionelle Wartung gut eignen.

Die erfindungsgemäße Datenbank ist in der Lage, dem Benutzer eine Liste der Stichwörter sämtlicher Datensätze anzuzeigen, wobei diese Liste sowohl als eine komplette Liste sämtlicher Stichwörter der Datensätze aller Datentabellen als auch als eine Liste sämtlicher Stichwörter der Datensätze aller Datentabellen, die den etwaigen eingelesenen Suchkriterien entsprechen, angezeigt werden kann. Die Software auf der Produktionsplattform bringt die zugrundeliegenden Daten der Datenbank dafür in die richtige Form. Mittels der Software auf der Zielplattform ist eine solche Liste anzeigbar.

Die erfindungsgemäße Datenbank sieht sowohl eine Stichwortsuche, als auch eine Attributssuche vor, die miteinander verknüpft werden können.

Bei der Ausführungsform der Erfindung ist eine freie Kombination der Suchmethoden vorgesehen, wobei eine Verknüpfung mitttels des Booleschen UND-Operators unterstützt wird.

Die erfindungsgemäße Datenbank unterstützt auch eine häufige Aktualisierung, ist aber besonders geeignet für eine Datenbank, die sich über einen längeren Zeitraum nicht verändert bzw. für eine Datenbank, in der sich nur einzelne Datensätze ändern.

Gemäß der Ausgestaltung der Erfindung werden die Eintragstexte in einer Datentabelle hintereinander abgespeichert, und zwar ohne ein Zeichen, welches das Ende eines Datensatzes angibt. Es ist auch möglich, jeweils das Ende eines Eintragstextes in der Datentabelle mit einem Byte-Zeichen zu markieren, das im Eintragstext nie vorkommt, wie beispielsweise der sogenannte Null-Terminator (das "\0"-Zeichen) in der Programmiersprache C. Diese Methode weist die Eigenschaft auf, daß der benötigte Speicherplatz beim Einlesen der Nutzdaten in den Arbeitsspeicher RAM erst nach dem kompletten Einlesevorgang bekannt ist. Gemäß einer weiteren Eigenschaft dieser Ausgestaltung der Erfindung lassen sich in Textdaten leicht bestimmte Zeichen ausmachen, die nicht im Eintragsindex vorkommen. Dies ist bei Binärdaten jedoch nicht der Fall, was eine Umschreibung der Daten notwendig machen würde.

Gemäß der Ausgestaltung der erfindungsgemäßen Datenbank läßt sich der Eintragstext mittels üblicher Verfahren wie Quicksort und Bubblesort sortieren, ohne daß die Datentabelle mitsortiert werden müßte. Sowohl die Datentabelle als auch der Eintragsindex werden einmalig auf der Produktionsplattform erstellt. Sie verändern sich nach ihrer Erstellung nicht und können dementsprechend auf einem langsamen Nur-Lese-Medium wie CD-DVD-ROM abgelegt werden.

Beim Zugriff auf einen Datensatz muß seine laufende Nummer im Eintragsindex bekannt sein. Die physikalische Position einer Eintragsindexzeile innerhalb des Eintragsindexes ist berechenbar, wobei sich diese Position aus der Multiplikation der Nummer der Eintragsindexzeile mit dem Speicherbedarf pro Eintragsindexzeile ergibt. Mit den in der Eintragsindexzeile enthaltenen Informationen über die Position und die Größe des Datensatzes innerhalb der Datentabelle kann der Eintragstext des Datensatzes ermittelt werden.

Durch den Eintragsindex kann ein Stichwortindex leicht realisiert werden. Aufgrund der großen Menge der zu verwaltenden Informationen ist es nicht sinnvoll, den gesamten Eintragsindex im Arbeitsspeicher RAM zu halten. Auf einem als Bildschirm ausgestalteten Ausgabemedium ist nur ein Bruchteil der gesamten Stichworte sichtbar, wobei die anderen Stichwörter meist mittels Rollbalken sichtbar gemacht werden. Tatsächlich sichtbar sind, je nach Ausgestaltung der Benutzeroberfläche, nur 10-30 Einträge, die einen Speicherraum von weniger als 2 Kilo-Bytes einnehmen.

Dementsprechend ist der Eintragsindex auf dem Speichermedium CD/DVD-ROM-Laufwerk bzw. auf der Festplatte vorgesehen, wobei jeweils diejenigen Eintragsindexzeilen in den Arbeitsspeicher RAM eingelesen werden, die auf dem Ausgabemedium anzeigbar sind. Hierfür liegt der Eintragsindex vorzugsweise alphabetisch sortiert vor. Das Einlesen dieser Eintragsindexzeilen in den Arbeitsspeicher RAM geht zügig vonstatten, da die einzelnen Eintragsindexzeilen sequentiell hintereinander auf dem Speichermedium CD/DVD-ROM-Laufwerk bzw. auf der Festplatte abgespeichert sind.

Jede Datentabelle weist einen zugehörigen Eintragsindex auf. Aus allen Eintragsindizes wird genau ein Zwischenindex generiert. Dazu werden alle Datentabellen und die dazugehörigen Eintragsindizes durchnumeriert. Bei einer maximalen Gesamtzahl von 256 Datentabellen ist 1 Byte zur Differenzierung ausreichend. Die alphabetisch richtige Zusammenführung aller Eintragsindizes zu einem Zwischenindex geschieht hierbei in einem Reißverschlußverfahren. Bei der Erstellung des Zwischenindexes wird aus allen Eintragsindizes jeweils der Datensatz mit dem alphabetisch nächsten Stichwort in die zu bildende Zwischenindexzeile übernommen.

Gemäß einem zweiten Aspekt der Erfindung weist das Computersystem ein relativ schnelles Speichermedium, wie einen Arbeitsspeicher RAM, wenigstens ein relativ langsames Speichermedium, wie ein CD-ROM-Laufwerk oder eine Festplatte, und ein Datenbankprogramm auf.

Für die Durchführung einer Volltextsuchfunktion ist eine besondere Gliederung der Datenbank vorgesehen. Diese weist dazu wenigstens eine als Datei ausgebildete Datentabelle mit mehreren Datensätzen auf, die auf dem relativ langsamen Speichermedium angeordnet ist. Weiterhin ist je ein Eintragsindex zu jeder Datentabelle vorgesehen, der auf dem relativ langsamen Speichermedium angeordnet ist. Jeder Eintragsindex enthält mehrere Eintragsindexzeilen. Jede Eintragsindexzeile entspricht einem Datensatz. Jede Eintragsindexzeile weist eine Information über die Position des entsprechenden Datensatzes in der Datentabelle auf. Weiterhin kann in der Eintragsindexzeile wenigstens ein einem entsprechenden Datensatz zugeordnetes Stichwort sowie eine Identifikationsnummer enthalten sein.

Weiterhin beinhaltet die Gliederung der Datenbank einen Volltext-Zwischenindex, der auf dem relativ schnellen Speichermedium angeordnet ist. Der Volltext-Zwischenindex weist mehrere Volltext-Zwischenindexzeilen auf. Jede Volltext-Zwischenindexzeile entspricht einer Volltext-Wortindexzeile und enthält Teile der in den Datensätzen enthaltenen Wörter.

Außerdem sieht die Gliederung der Datenbank zu jeder Datentabelle einen Volltext-Wortindex vor, der auf dem relativ langsamen Speichermedium abgelegt ist. Der Volltext-Wortindex beinhaltet mehrere Volltext-Wortindexzeilen. Jede Volltext-Wortindexzeile entspricht genau einer Volltext-Zwischenindexzeile. Jede Volltext-Wortindexzeile enthält ein Wort aus einem Datensatz sowie einen Zeiger auf eine Volltext-Referenzindexzeile eines Volltext-Referenzindexes.

Weiterhin weist die Gliederung der Datenbank je einen Volltext-Referenzindex zu jedem Volltext-Wortindex auf, der auf dem relativ langsamen Speichermedium angeordnet ist. Jede Volltext-Referenzindexzeile enthält je ein Zeichen, das entweder auf eine Eintragsindexzeile verweist oder das eine Abschlußmarke, vorzugsweise die Zahl "0", enthält.

Des weiteren sieht die Gliederung der Datenbank einen Volltext-Filterindex zu jedem Eintragsindex vor. Jeder Volltext-Filterindex gliedert sich in mehrere Volltext-Filterindexzeilen und ist auf dem relativ schnellen Speichermedium angeordnet. Jeder VolltextFilterindex enthält Informationen, ob ein bestimmter Suchbegriff in der dem Volltext-Filterindex entsprechenden Eintragsindex enthalten ist. Dabei ist jeder Volltext-Filterindex einem Eintragsindex zugeordnet.

Jede Volltext-Filterindexzeile gliedert sich in eine Information, die aussagt, ob ein bestimmter Suchbegriff in dem der entsprechenden Eintragsindexzeile zugeordneten Datensatz enthalten ist oder nicht. Diese Information ist vorzugsweise als Binärwert ausgebildet. Dabei besagt der Wert "1", daß der Suchbegriff in dem der entsprechenden Eintragsindexzeilen zugeordneten Datensatz enthalten ist, der Wert "0" sagt aus, daß der Suchbegriff nicht enthalten ist. Im Volltext-Filterindex ist kein Zeiger notwendig, da die Position im Filterindex der Position im Eintragsindex entspricht.

Für eine Volltextsuchfunktion ist ein Suchbegriff in das Computersystem eingebbar. Unter Verwendung der in den Eintragsindizes, der in den Volltext-Zwischenindizes, der in den Volltext-Wortindizes, der in den Volltext-Referenzindizes und der in den Volltext-Filterindizes enthaltenen Informationen sind Datensätze ausgebbar, in denen der gewünschte Suchbegriff enthalten ist.

Gemäß einem Grundgedanken der Erfindung liegt ein Großteil der Informationen der Datenbank, insbesondere die Datentabellen, die Eintragsindizes, die Volltext-Wortindizes sowie die Volltext-Referenzindizes, auf dem relativ langsamen Speichermedium vor, wie dem CD-ROM-Laufwerk oder der Festplatte. Dabei erfolgt jeweils ein selektiver und partieller Zugriff auf die Datentabellen, auf die Eintragsindizes, auf die Volltext-Wortindizes und auf die Volltext-Referenzindizes. Lediglich die Volltext-Zwischenindizes und die Volltext-Filterindizes werden komplett im relativ schnellen Speichermedium gehalten, insbesondere im Arbeitsspeicher RAM.

Durch diese Gliederung der Datenbank werden sehr vorteilhafte Suchzeiten der Volltextsuche im Sekundenbruchteilbereich erreicht. Die Erfindung ist in der Lage, große Datenmengen, die im Bereich von mehr als 200.000 Einträgen und mehreren Millionen Wörter liegen können, geschwindigkeits- und speichereffizient zu verwalten.

Einmalige Aufbereitungsprozesse, wie die Erstellung der Eintragsindizes, der Volltext-Wortindizes und der Volltext-Referenzindizes, werden auf einer Produktionsplattform durchgeführt. Dementsprechend werden Rechenleistung und Rechenzeit von der Zielplattform des Benutzers auf die Produktionsplattform des Herstellers der Datenbank verlagert.

Gemäß einer weiteren Ausführungsform der Erfindung weist die Gliederung der Datenbank zusätzlich für jede Datentabelle eine Verknüpfungstabelle auf. Diese Verknüpfungstabelle ist auf dem relativ schnellen Speichermedium angeordnet, insbesondere auf dem Arbeitsspeicher RAM. Jede Verknüpfungstabelle enthält mehrere Verknüpfungstabellenzeilen, die aus mehreren Volltext-Filterindizes gebildet werden. Jede Verknüpfungstabellenzeile entspricht einer Eintragsindexzeile und sagt aus, ob in dem der Eintragsindexzeile entsprechenden Datensatz verschiedene Suchbegriffe in einer benutzerdefinierten Kombination enthalten sind.

Gemäß dieser Ausführungsform der Erfindung sind mehrere Suchbegriffe für eine Volltextsuchfunktion in das Computersystem eingebbar. Diese Suchbegriffe können durch Boolesche Operatoren, insbesondere durch "und", "oder", "und nicht" miteinander verknüpft werden. Für die Durchführung der Volltextsuchfunktion werden die Eintragsindizes, die Volltext-Zwischenindizes, die Volltext-Wortindizes, die Volltext-Referenzindizes, die Volltext-Filterindizes und die Verknüpfungstabellen herangezogen. In den Verknüpfungstabellen werden die Informationen aus den Volltext-Filterindizes zusammengeführt.

Durch die Volltextsuchfunktion wird eine Suche nach zwei oder mehreren Suchbegriffen ermöglicht, wobei für jeden Suchbegriff und für jede Datentabelle ein separater Volltext-Filterindex erstellt wird.

In den Volltext-Filterindizes ist die Information enthalten, ob ein Suchbegriff in dem entsprechenden Datensatz enthalten ist oder nicht. In den Verknüpfungstabellen werden diese Informationen zusammengeführt, wobei Boolesche Operatoren, wie "und", "oder", "und nicht", durch einen Benutzer vorgegeben werden. Diejenigen Datensätze werden ausgegeben, welche die gewünschten Suchbegriffe in der gewählten Booleschen Verknüpfung enthalten.

Gemäß einer weiteren Ausführungsform der Erfindung sind zwei oder mehr Suchbegriffe in das Computersystem eingebbar. Diese Suchbegriffe können durch Boolesche Operatoren, insbesondere "und", "oder", "und nicht", miteinander verknüpft werden. Durch diese Ausführungsform der Erfindung sind Datensätze der Datentabelle ausgebbar, die mit den Suchbegriffen übereinstimmende Wörter enthalten. Zu Beginn der Volltextsuche werden zwei oder mehr Suchbegriffe in das Computersystem eingegeben, die durch Boolesche Operatoren miteinander verknüpfbar sind. Anschließend werden separat für jeden Suchbegriff Volltext-Filterindizes für jeden Eintragsindex gemäß dem vorstehend beschriebenen Verfahren erzeugt. Danach wird für jeden Eintragsindex eine Verknüpfungstabelle erzeugt, in dem die Informationen der Volltext-Filterindizes zusammengefaßt und mittels des Booleschen Operators miteinander verknüpft werden.

Aus den Volltext-Filterindizes der ersten beiden Suchbegriffe wird eine Verknüpfungstabelle erstellt. Anschließend erfolgt eine Verknüpfung der gebildeten Verknüpfungstabelle mit dem Volltext-Filterindex des nächsten Suchbegriffs. Hierbei werden die Informationen des Volltext-Filterindexes mit Informationen der vorhandenen Verknüpfungstabelle mittels des Booleschen Operators miteinander verknüpft. Die so erzeugte neue Verknüpfungstabelle ersetzt die vorhandene Verknüpfungstabelle. Diese Verknüpfung wird für alle weiteren Suchbegriffe wiederholt.

Danach werden diejenigen Verknüpfungstabellenzeilen bestimmt, welche die Information enthalten, daß die Volltextsuchbegriffe in der gesuchten logischen Verknüpfung in den jeweils über Eintragsindexzeilen zugeordneten Datensätzen enthalten sind. Dies sind vorzugsweise diejenigen Verknüpfungstabellenzeilen, die einen Wert "1" aufweisen. Danach erfolgt die Ausgabe derjenigen Datensätze, die den ermittelten Verknüpfungstabellenzeilen entsprechen.

Diese Ausführungsform der Erfindung bietet den Vorteil, daß die zugrundeliegende Datenbank nach mehreren Suchbegriffen sowie nach Kombinationen von Suchbegriffen durchsuchbar ist. Diese Volltextsuche nach Kombinationen von Suchbegriffen ist durch die erfindungsgemäße Gliederung der Datenbank besonders speichereffizient und geschwindigkeitsoptimal möglich. Somit ist eine besonders vorteilhafte Funktionalität und Bedienerfreundlichkeit der Datenbank gewährleistet.

Durch die erfindungsgemäße Gliederung der Datenbank mittels mehrerer Indizes wird eine besonders speichereffiziente und geschwindigkeitsoptimale Durchführung der Volltextsuchfunktion gewährleistet.

Gemäß einer weiteren Idee der Erfindung, können Teile der Datenbank, insbesondere Teile der Datentabellen, Teile der Eintragsindizes, Teile der Volltext-Wortindizes und Teile der Volltext-Referenzindizes, auf einem Computernetz wie dem Internet vorgesehen sein. Auf diese Teile der Datenbank ist ein Zugriff durch ein Computersystem besonders vorteilhaft möglich.

Die erfindungsgemäße Gliederung und der erfindungsgemäße Aufbau der Datenbank eignet sich besonders für sehr große Datenbanken, insbesondere Nachschlagewerke und Lexika, die auf CD-ROM bzw. DVD-ROM vorliegen und die keiner häufigen Änderung bedürfen.

Die Erfindung betrifft weiterhin ein Verfahren zum Auslesen derjenigen Datensätze aus einer Datenbank, die Wörter enthalten, die mit einem in das Computersystem eingebbaren Suchbegriff Übereinstimmungen aufweisen.

Dabei wird zuerst ein Suchbegriff in das Computersystem eingelesen und wenigstens ein Teil des Suchbegriffs auf Übereinstimmungen mit dem Volltext-Zwischenindex verglichen. Diejenigen Volltext-Zwischenindexzeilen werden gemerkt, die Übereinstimmungen mit dem Suchbegriff aufweisen.

Anschließend werden diejenigen Volltext-Wortindexzeilen in das relativ schnelle Speichermedium eingelesen, die den selektierten Volltext-Zwischenindexzeilen entsprechen. Daran anschließend wird der Suchbegriff in voller Länge mit den in den Volltext-Wortindexzeilen enthaltenen Stichwörtern verglichen, wobei übereinstimmende Volltext-Wortindexzeilen gemerkt werden.

Ausgehend von den gemerkten Volltext-Wortindexzeilen erfolgt ein Aufruf der Volltext-Referenzindexzeilen der den jeweiligen Volltext-Wortindizes entsprechenden Volltext-Referenzindizes. Ausgehend von der aufgerufenen Volltext-Referenzindexzeile wird der Volltext-Referenzindex zeilenweise nach unten durchlaufen bis zum Auffinden der Abschlußmarke.

Die in den jeweiligen Volltext-Referenzindexzeilen enthaltenen laufenden Nummern der Eintragsindexzeilen werden gemerkt. Die Abschlußmarke im Volltext-Referenzindex ist vorzugsweise als Wert "0" vorgesehen.

Anschließend wird aus den gemerkten laufenden Nummern der Eintragsindexzeilen für jeden Eintragsindex ein Volltext-Filterindex erstellt, wobei für jede gemerkte Eintragsindexzeile eine separate Volltext-Filterindexzeile erzeugt wird, wobei die Anzahl aller Eintragsindexzeilen mit der Anzahl aller Filterindexzeilen übereinstimmt. Der Volltext-Filterindex wird im relativ schnellen Speichermedium, insbesondere im Arbeitsspeicher RAM, abgelegt. Die laufende Nummer im Filterindex stimmt mit der laufenden Nummer im Eintragsindex überein. Jede Volltext-Filterindexzeile weist eine Information auf, die angibt, ob der Suchbegriff in dem der entsprechenden Eintragsindexzeile zugeordneten Datensatz enthalten ist oder nicht. Dabei kennzeichnet vorzugsweise der Wert "1" einen den entsprechenden Suchbegriff enthaltenden Datensatz, der Wert "0" einen den Suchbegriff nicht enthaltenden Datensatz.

Anschließend werden alle diejenigen Volltext-Filterindexzeilen selektiert, die auf einen den Suchbegriff enthaltenden Datensatz verweisen. Vorzugsweise sind dies diejenigen Volltext-Filterindexzeilen, die einen Wert "1" aufweisen. Schließlich erfolgt eine Ausgabe derjenigen Datensätze, die den so bestimmten Volltext-Filterindexzeilen entsprechen. Zur Bestimmung der Position dieser Datensätze in den Datentabellen werden die den Volltext-Filterindexzeilen entsprechenden Eintragsindexzeilen verwendet.

Gemäß dieser Ausführungsform der Erfindung werden sämtliche Aufbereitungsschritte, die viel Zeit und viel Speicherplatz benötigen, auf der Produktionsplattform vorgenommen. Sowohl die Datentabelle, welche die Datensätze mit den einzelnen Wörtern enthält, als auch die zum Auffinden einzelner Wörter in den Datentabellen notwendigen Indizes, insbesondere die Eintragsindizes, die Volltext-Wortindizes und die Volltext-Referenzindizes, werden auf dem relativ langsamen Speichermedium vorgesehen, insbesondere auf dem CD- bzw. DVD-ROM-Laufwerk oder auf der Festplatte.

Das erfindungsgemäße Verfahren zum Auslesen von Datensätzen aus einer Datenbank erzeugt die Volltext-Zwischenindizes, die Volltext-Filterindizes und die Verknüpfungstabellen im relativ schnellen Speichermedium, insbesondere im Arbeitsspeicher RAM.

Weiterhin greift das erfindungsgemäße Verfahren nicht auf die Datentabellen, auf die Eintragsindizes, auf die Volltext-Wortindizes und auf die Volltext-Referenzindizes in ihrer Gesamtheit zu. Es erfolgt ein partieller Zugriff auf diejenigen Datensätze bzw. Indexzeilen, die durch die Anwendung des Volltext-Zwischenindexes, des Volltext-Filterindexes und der Verknüpfungstabelle vorselektiert werden.

Zur weiteren Vereinfachung des Verfahrens werden mehrfach vorkommende Wörter in den einzelnen Indizes zusammengefaßt und in genau einer Zeile des entsprechenden Indexes dargestellt. Die Eintragsindizes, die Volltext-Wortindizes und die Volltext-Referenzindizes liegen alphabetisch sortiert vor.

Des weiteren sieht das erfindungsgemäße Verfahren einen Volltext-Zwischenindex vor, der nur Teile der in den Datentabellen enthaltenen Wörter enthält und demzufolge speicherplatzsparend aufgebaut ist. Durch diesen Volltext-Zwischenindex wird der Bereich der speicherintensiven Volltext-Wortindizes, auf die nachfolgend zugegriffen wird, stark begrenzt.

Weiterhin ist von Vorteil, daß die Volltext-Zwischenindizes sowie die Volltext-Wortindizes gleich aufgebaut sind und gleich numerierte Zeilen sich jeweils entsprechen.

Mit der erfindungsgemäßen Gliederung ist die Datenbank in der Lage, große Datenmengen sehr speichereffizient zu verwalten. Eine besonders schnelle Verwaltung der Datensätze sowie eine besonders schnelle und speichereffiziente Ausführung der Volltextsuche ist gewährleistet. Die verwendete Datenbankstruktur ist darüber hinaus einfach nachvollziehbar und leicht implementierbar.

Gemäß einer weiteren Ausführungsform der Erfindung weisen die Zeilen des Volltext-Zwischenindexes jeweils die zwei ersten Buchstaben der betreffenden Stichwörter auf. Der Volltext-Zwischenindex kann auch mit einer anderen Anzahl von Buchstaben pro Volltext-Zwischenindexzeile vorgesehen werden. Im erfindungsgemäßen Verfahren werden die in den Volltext-Zwischenindexzeilen enthaltenen Buchstaben der Wörter mit den jeweiligen ersten Buchstaben der Suchbegriffe auf Übereinstimmung geprüft. Hierbei werden die Übereinstimmung aufweisenden Volltext-Zwischenindexzeilen gemerkt.

Durch diese Ausgestaltung der Erfindung wird eine besonders speicheroptimale und besonders geschwindigkeitseffiziente Durchführung der Volltextsuchfunktion bereitgestellt.

Weiterhin ist die erfindungsgemäße Datenbank geeignet für die Darstellung und Integration von Multimedia-Anwendungen, insbesondere Text-, Bild- und Tonanwendungen. Die erfindungsgemäße Datenbank kann durch einen Benutzer beliebig erweitert werden, wobei die der Datenbank zugrundeliegenden Datentabellen, die Eintragsindizes, die Volltext-Wortindizes und die Volltext-Referenzindizes aktualisiert bzw. zusätzliche Datentabellen hinzugefügt werden.

Wörter, die für eine Volltextsuche keinen Wert haben, wie beispielsweise "der", "die" oder "das" können dadurch aus der Volltextsuche ausgeschlossen werden, indem sie nicht im Eintragsindex und in den aus dem Eintragsindex hergeleiteten Indizes, insbesondere im Volltext-Zwischenindex, im Volltext-Wortindex, im Volltext-Referenzindex, und im Volltext-Filterindex enthalten sind.

Gemäß einer weiteren Ausführungsform der Erfindung sind mehrere Suchbegriffe in das Computersystem eingebbar. Diese Suchbegriffe können durch Boolesche Operatoren, insbesondere "und", "oder", "und nicht" miteinander verknüpft werden. Durch diese Ausführungsform der Erfindung sind Datensätze der Datentabelle ausgebbar, die mit den Suchbegriffen übereinstimmende Wörter enthalten. Zu Beginn der Volltextsuche nach mehreren Suchbegriffen werden mehrere Suchbegriffe in das Computersystem eingegeben, die durch Boolesche Operatoren miteinander verknüpfbar sind. Anschließend werden separat für jeden Suchbegriff Volltext-Filterindizes für jeden Eintragsindex gemäß dem vorstehend beschriebenen Verfahren erzeugt. Danach wird für jeden Eintragsindex eine Verknüpfungstabelle erzeugt, in dem die Informationen der Volltext-Filterindizes zusammengefaßt und mittels der Booleschen Operatoren miteinander verknüpft werden.

Falls drei oder mehr Suchbegriffe eingelesen werden, werden aus den Informationen der ersten zwei ermittelten Volltext-Filterindizes eine erste Verknüpfungstabelle erstellt. Anschließend wird für jeden weiteren Filterindex eine neue Verknüpfungstabelle erzeugt. Hierbei werden die Informationen des Volltext-Filterindexes mit Informationen der vorhandenen Verknüpfungstabelle mittels des Booleschen Operators miteinander verknüpft. Die so erzeugte neue Verknüpfungstabelle ersetzt die vorhandene Verknüpfungstabelle.

Danach werden diejenigen Verknüpfungstabellenzeilen bestimmt, welche die Information enthalten, daß die Volltextsuchbegriffe in der gesuchten logischen Verknüpfung in den jeweils über Eintragsindexzeilen zugeordneten Datensätzen enthalten sind. Dies sind vorzugsweise diejenigen Verknüpfungstabellenzeilen, die einen Wert "1" aufweisen. Danach erfolgt die Ausgabe derjenigen Datensätze, die den ermittelten Verknüpfungstabellenzeilen entsprechen.

Durch diese erfindungsgemäße Ausgestaltung ist eine besonders benutzerfreundliche Volltextsuche nach mehreren Suchbegriffen bereitgestellt. Mehrere Suchbegriffe sind durch eine Benutzer vorgebbar und mittels eines oder mehrerer Booleschen Operatoren miteinander verknüpfbar. Somit ist eine besonders vorteilhafte Funktionalität der Datenbank gewährleistet. Durch die erfindungsgemäße Gliederung der Datenbank mittels mehrerer Indizes wird eine speichereffiziente und geschwindigkeitsoptimale Durchführung der Volltextsuchfunktion nach mehreren Suchbegriffen gewährleistet.

Gemäß einer weiteren Ausführungsform der Erfindung weisen die Volltext-Zwischenindexzeilen des Volltext-Zwischenindexes jeweils die zwei ersten Buchstaben der betreffenden Stichwörter auf. Der Volltext-Zwischenindex kann auch mit einer anderen Anzahl von Buchstaben pro Volltext-Zwischenindexzeile vorgesehen werden. Im erfindungsgemäßen Verfahren werden die in den Volltext-Zwischenindexzeilen enthaltenen Buchstaben der Wörter mit den jeweiligen ersten Buchstaben der Suchbegriffe auf Übereinstimmung geprüft. Hierbei werden die Übereinstimmung aufweisenden Volltext-Zwischenindexzeilen gemerkt.

Durch diese Ausgestaltung der Erfindung wird eine besonders speicheroptimale und besonders geschwindigkeitseffiziente Durchführung der Volltextsuchfunktion bereitgestellt.

Weiterhin ist die erfindungsgemäße Datenbank geeignet für die Darstellung und Integration von Multimedia-Anwendungen, insbesondere Text-, Bild- und Tonanwendungen.

Die erfindungsgemäße Datenbank kann durch einen Benutzer beliebig erweitert werden, wobei die der Datenbank zugrundeliegenden Datentabellen, die Eintragsindizes, die Volltext-Wortindizes, die Volltext-Referenzindizes aktualisiert werden müssen.

Wörter, die für eine Volltextsuche keinen Wert haben wie beispielsweise "der", "die", "das" können dadurch aus der Volltextsuche ausgeschlossen werden, indem sie nicht im Eintragsindex und in den auf dem Eintragsindex hergeleiteten Indexe, insbesondere dem Volltext-Zwischenindex, dem Volltext-Wortindex, Volltext-Referenzindex, und in dem Volltext-Filterindex, enthalten sind.

Gemäß einem dritten Aspekt der Erfindung weist das Computerprogramm ein relativ schnelles Speichermedium, wie einen Arbeitsspeicher RAM, wenigstens ein relativ langsames Speichermedium, wie ein CD-ROM-Laufwerk oder eine Festplatte, sowie ein Datenbankprogramm auf.

Dabei weist das Computersystem eine als Datei ausgebildete Basis-Datentabelle und wenigstens eine ebenfalls als Datei ausgebildete Erweiterungs-Datentabelle auf. In der Basis-Datentabelle, die auf dem relativ langsamen Speichermedium insbesondere auf einer DVD- bzw. CD-ROM-Speicherplatte angeordnet ist, ist ein Großteil der Inhalte der Datenbank enthalten. Die Basis-Datentabelle wird häufig durch den Hersteller des Software zur Verfügung gestellt, wobei die Datentabelle mit ihrem gesamten Inhalt auf der Produktionsplattform des Herstellers erzeugt wird. Erweiterungs-Datentabellen, die häufig wesentlich kleiner als die Basis-Datentabelle ausgebildet sind, aber nicht zwangsläufig kleiner als die Basis-Datentabelle ausgebildet sein müssen, sind durch einen oder mehrere Benutzer der Datenbank auf den Zielplattformen erzeugbar. Dementsprechend werden die Erweiterungs-Datentabellen vorzugsweise auf dem relativ langsamen Speichermedium, wie der Festplatte abgelegt.

Des weiteren ist zu der Basis-Datentabelle sowie zu jeder Erweiterungs-Datentabelle ein separater Eintragsindex vorgesehen. Jede Eintragsindexzeile der Eintragsindizes entspricht genau einem Basisdatensatz oder genau einem Erweiterungs-Datensatz. In jeder Eintragsindexzeile ist sowohl eine Information über die Position des entsprechenden Basisdatensatzes oder des entsprechenden Erweiterungs-Datensatzes in der jeweiligen Datentabelle als auch ein Stichwort zu dem jeweiligen Datensatz vorgesehen.

Des weiteren weist das erfindungsgemäße Computersystem einen Zwischenindex auf, der vorzugsweise auf dem relativ schnellen Speichermedium, insbesondere auf dem Arbeitsspeicher RAM, angeordnet ist. Jede Zwischenindexzeile dieses Zwischenindexes entspricht genau einer Eintragsindexzeile eines Eintragsindexes. Jede Zwischenindexzeile weist einen Teil des in der entsprechenden Eintragsindexzeile vorgesehenen Stichworts sowie eine Information über die Position der dieser Zwischenindexzeile entsprechenden Eintragsindexzeile im jeweiligen Eintragsindex auf sowie die Information, welche Datentabelle zu verwenden ist.

Gemäß der Erfindung kann die Datenbank durch einen oder mehrere Benutzer vorteilhaft um eine beliebige Anzahl von Datensätzen bzw. neuen Inhalten erweitert werden. Gemäß der Erfindung ist ein Großteil der Information in der Basis-Datentabelle enthalten. Weitere durch einen Benutzer ergänzbare Informationen werden in den Erweiterungs-Datentabellen gespeichert. Erfindungsgemäß erfolgt der Zugriff auf die Datensätze bzw. Inhalte der Datentabellen mittels einer Vielzahl von Indizes, insbesondere mittels Eintragsindizes und mittels des Zwischenindexes. Die notwendige Erstellung und Sortierung von Gesamtindizes, insbesondere von Eintragsindizes, ist ein sehr langsames und sehr speicherintensives Verfahren. Die Erstellung dieser Gesamtindizes, insbesondere des Eintragsindexes für die Basis-Datentabelle geschieht auf der Produktionsplattform. Die durch einen oder mehrere Benutzer erzeugten Erweiterungs-Datentabellen sind häufig wesentlich kleiner als die Basis-Datentabelle. Somit ist es möglich, auf den Computersystemen der Benutzer, die häufig in Bezug auf die Speicherkapazität begrenzt sind, die für die Erweiterungs-Datentabellen notwendigen Indizes, insbesondere die Eintragsindizes, zu erzeugen.

Gemäß einem Grundgedanken der Erfindung werden die Basis-Datentabelle und die Erweiterungs-Datentabellen, die jeweils nur in sich sortiert sind, schnell und ohne großen Speicheroder Rechenaufwand zusammengeführt. Diese Zusammenführung geschieht durch den Zwischenindex, in dem Informationen zu allen Eintragsindexzeilen sämtlicher Eintragsindizes enthalten sind.

Durch die erfindungsgemäße Gliederung der Datenbank ist eine benutzerdefinierte Ergänzung, Aktualisierung und Überarbeitung der Datenbank sehr vorteilhaft möglich. Durch die erfindungsgemäße Gliederung der Datenbank wird eine schnelle und speicheroptimale Verwaltung der enthaltenen Datensätze sowie die Durchführung von Stichwortsuchfunktionen sowie Volltextsuchfunktionen sehr vorteilhaft gewährleistet. Des weiteren weist die erfindungsgemäße Datenbank eine extrem einfache und leicht implementierbare Datenbankstruktur auf.

Gemäß einer Ausführungsform der Erfindung weist jede Eintragsindexzeile und/oder jede Zwischenindexzeile zusätzlich ein Feld zur Aufnahme einer Identifikationsnummer auf. Die Identifikationsnummer bestimmt den der jeweiligen Eintragsindexzeile und/oder der jeweiligen Zwischenindexzeile entsprechenden Datensatz eindeutig.

Durch das Vorsehen von Identifikationsnummern kann eine besonders leichte und besonders transparente Verwaltung der Datensätze der Datenbank erreicht werden.

Gemäß einer weiteren Ausführungsform der Erfindung sind verschiedene Nummernkreise für die Identifikationsnummern vorsehbar. Es kann ein erster Nummernkreis vorgesehen werden für Basisdatensätze und für Erweiterungsdatensätze, die Basisdatensätze ersetzen. Des weiteren kann ein weiterer Nummernkreis vorgesehen sein für Erweiterungsdatensätze, die als neue Datensätze in die Erweiterungs-Datentabelle aufzunehmen sind und die keine vorhandenen Basisdatensätze ersetzen. Somit können durch einen Benutzer Erweiterungsdatensätze erzeugt werden, die vorhandene Basisdatensätze ersetzen.

Dementsprechend ist durch das Vorsehen von Nummernkreisen für die Identifikationsnummern eine Aktualisierung der Datenbank sowie eine benutzerdefinierte Anpassung der Datenbank sehr schnell und sehr benutzerfreundlich möglich.

Die Erfindung betrifft weiterhin ein Verfahren zum Einfügen von Erweiterungsdatensätzen in eine als Datei ausgestaltete Erweiterungs-Datentabelle einer erweiterbaren Datenbank mit einem Datenbankprogramm auf einem Computersystem.

Zu Beginn dieses Verfahrens ist durch einen Benutzer ein Eintragstext und wenigstens ein zugeordnetes Stichwort in das Computersystem eingebbar. Dieser Eintragstext wird als Erweiterungs-Datensatz in einer Erweiterungs-Datentabelle durch das Datenbankprogramm gespeichert. Diese Erweiterungs-Datentabelle ist häufig auf dem relativ langsamen Speichermedium abgelegt, insbesondere auf der Festplatte. Anschließend wird zu diesem Erweiterungs-Datensatz eine entsprechende Erweiterungs-Eintragsindexzeile erzeugt. Diese Erweiterungs-Eintragsindexzeile weist eine Information über die Position des entsprechenden Erweiterungs-Datensatzes in der Erweiterungs-Datentabelle sowie das dem Erweiterungs-Datensatz zugeordnete Stichwort auf. Der um diese Erweiterungs-Eintragsindexzeile ergänzte Erweiterungs-Eintragsindex wird auf dem relativ langsamen Speichermedium abgelegt, insbesondere auf der Festplatte des Computersystems.

Die Schritte der Speicherung des Eintragstextes als Erweiterungs-Datensatz sowie die Speicherung der zugehörigen Informationen in der entsprechenden Erweiterungs-Eintragsindexzeile werden für jeden vom Benutzer eingegebenen Eintragsindex wiederholt. Anschließend wird der Zwischenindex vom Computersystem durch das Datenbankprogramm aktualisiert. Dabei entspricht jede Zwischenindexzeile genau einer Erweiterungs-Eintragsindexzeile in einem der Eintragsindizes. In jeder Zwischenindexzeile ist ein Teil des in der entsprechenden Eintragsindexzeile vorgesehenen Stichworts und eine Information über die Position der entsprechenden Eintragsindexzeile im jeweiligen Eintragsindex enthalten.

Dieses erfindungsgemäße Verfahren stellt die Möglichkeit bereit, neue Einträge sehr benutzerfreundlich und geschwindigkeitsoptimal in die Datenbank aufzunehmen. Durch die Zuordnung eines oder mehrerer Stichwörter zu einem Datensatz wird eine thematische Gliederung und Einordnung sowie eine leichte Wiederfindbarkeit der eingegebenen Datensätze ermöglicht.

Die Erweiterungs-Datentabellen entsprechen hinsichtlich der Form und dem Aufbau genau den Basis-Datentabellen. Dadurch wird eine besonders günstige Gliederung der Datenbank erreicht.

Die ergänzten Datensätze werden in die entsprechenden Erweiterungs-Datentabellen sowie in die entsprechenden Eintragsindizes aufgenommen. Diese Eintragsindizes werden mit dem Basis-Eintragsindex im Zwischenindex zusammengeführt. Somit erscheinen die Basis-Datentabelle sowie die Erweiterungs-Datentabelle dem Benutzer als eine Datenbank. Die Größe der einzelnen Datentabellen wirkt sich dabei nicht negativ auf die Geschwindigkeit des Gesamtsystems aus.

Gemäß einer weiteren Ausführungsform der Erfindung werden nach dem Einfügen von Erweiterungs-Datensätzen die weiteren Indizes der Datenbank automatisch ergänzt und abgespeichert. Dabei werden die Volltext-Wortindizes und die Volltext-Referenzindizes auf dem relativ langsamen Speichermedium, insbesondere auf der Festplatte, abgelegt. Bei der Durchführung einer Volltextsuche werden die Volltext-Zwischenindizes sowie die Volltext-Filterindizes automatisch aktualisiert erzeugt und im relativ schnellen Speichermedium abgelegt, insbesondere im Arbeitsspeicher RAM. Bei Durchführung einer Stichwortsuche werden aus den erzeugten Eintragsindizes sowie den Zwischenindizes im relativ schnellen Speichermedium RAM Filterindizes gebildet.

Durch diese automatische Aktualisierung und Abspeicherung der Erweiterungs-Datensätze wird eine vorteilhafte und zeitnahe Verwaltung der Datenbank sichergestellt. Die Durchführung von Stichwortsuchen sowie von Volltextsuchen ist jederzeit möglich, wobei automatisch auf die neueste Version der Datenbank zugegriffen wird.

Gemäß einer weiteren Ausführungsform der Erfindung sind bei der Eingabe von Erweiterungs-Datensätzen in das Computersystem zusätzlich Identifikationsnummern durch einen Benutzer vorsehbar. Hierbei wird jedem Eintragstext genau eine Identifikationsnummer zugeordnet, die in der Erweiterungs-Eintragsindexzeile des Erweiterungs-Eintragsindexes abgelegt wird, die dem Erweiterungs-Datensatz der entsprechenden Erweiterungs-Datentabelle zugeordnet ist.

Bei dieser Ausführungsform der Erfindung ist von Vorteil, daß jeder Basisdatensatz sowie jeder Erweiterungs-Datensatz durch die ihm zugeordnete Identifikationsnummer eindeutig charakterisiert ist. Durch die Verwendung von Identifikationsnummern kann zielgerichtet auf die den Identifikationsnummern entsprechenden Datensätze zugegriffen werden.

Gemäß einer weiteren Ausführungsform der Erfindung sind verschiedene Nummernkreise für die Identifikationsnummern vorgesehen. Durch die Auswahl der Identifikationsnummern aus den Nummernkreisen ist festgelegt, ob ein Erweiterungs-Datensatz der dieselbe Identifikationsnummer aufweist wie ein vorhandener Basisdatensatz, diesen im Zwischenindex ersetzt oder ob ein Erweiterungs-Datensatz als neuer Datensatz in die Erweiterungs-Datentabelle eingefügt wird und keinen vorhandenen Basisdatensatz ersetzt. Somit kann ein Benutzer bei der Eingabe von Erweiterungsdatensätzen in das Computersystem besonders einfach und besonders vorteilhaft festlegen, ob der Erweiterungs-Datensatz eine zusätzliche Information in der Datenbank darstellen soll oder ob der Erweiterungs-Datensatz einen bereits vorhandenen Basisdatensatz ersetzt.

Durch diese Ausführungsform der Erfindung ist eine besonders benutzerfreundliche und transparente Aktualisierung und Ergänzung der Datenbank möglich.

Die Erfindung betrifft weiterhin ein Verfahren zum Einfügen von als Datei ausgestalteten Erweiterungs-Datentabellen in eine erweiterbare Datenbank mit einem Datenbankprogramm auf einem Computersystem.

Bei diesem Verfahren wird durch einen Benutzer das Erzeugen einer neuen Erweiterungs-Datentabelle sowie eines neuen Erweiterungs-Eintragsindexes veranlaßt. Dies erfolgt durch die Auswahl eines entsprechenden Menüpunktes oder einer entsprechenden Routine durch den Benutzer in dem Datenbankprogramm. Anschließend werden durch das Datenbankprogramm sowohl eine Erweiterungs-Datentabelle als auch ein zugehöriger Erweiterungs-Eintragsindex erzeugt. Danach wird vom Computersystem mindestens ein Erweiterungs-Datensatz sowie ein zugeordnetes Stichwort und/oder eine zugeordnete Identifikationsnummer eingelesen. Daran anschließend wird von dem Datenbankprogramm der Erweiterungs-Datensatz in der erzeugten Erweiterungs-Datentabelle abgespeichert sowie die zugehörigen Informationen, insbesondere das zugeordnete Stichwort und/oder die zugeordnete Identifikationsnummer auf dem relativ langsamen Speichermedium, beispielsweise auf der Festplatte in dem entsprechenden Erweiterungs-Eintragsindex abgelegt.

Gemäß einer weiteren Ausführungsform der Erfindung werden nach dem Erzeugen der Erweiterungs-Datentabelle und des zugehörigen Erweiterungs-Eintragsindexes die für die Verwaltung der Datensätze sowie für die Stichwortsuchfunktion und die Volltextsuchfunktion benötigten Indizes automatisch erstellt und entsprechend abgespeichert. Direkt nach dem Erzeugen der Erweiterungs-Datentabelle und des Erweiterungs-Eintragsindexes werden der entsprechende Volltext-Wortindex und der entsprechende Volltext-Referenzindex automatisch einmalig erstellt und abgespeichert. Bei der Durchführung einer Stichwortsuche wird der Zwischenindex neu gebildet, wobei die in den Erweiterungs-Eintragsindizes enthaltenen Informationen berücksichtigt werden. Aus dem Zwischenindex wird ein entsprechender Filterindex erstellt.

Bei einer Volltextsuchfunktion werden aus den vorhandenen Volltext-Wortindizes ein entsprechender Volltext-Zwischenindex gebildet und ein zugehöriger Volltext-Filterindex erzeugt.

Bei diesen Ausführungsformen der Erfindung ist von Vorteil, daß neue Erweiterungs-Datentabellen, insbesondere zu abgeschlossenen Themenkreisen, sehr einfach und sehr schnell in bestehende Datenbanken integriert werden können.

Die mittels des erfindungsgemäßen Datenbankprogramms verwaltbaren Daten sind nicht auf reine Textinhalte beschränkt, sondern können auch als Bild- und Toninhalte vorgesehen werden.

Weiterhin ist es vorgesehen, daß in einzelnen Datensätzen Querverweise zu anderen Datensätzen enthalten sind. Mittels dieser Querverweise kann von einem Datensatz zu einem nächsten Datensatz gesprungen werden, der sowohl innerhalb derselben Datentabelle als auch innerhalb einer anderen Datentabelle angeordnet sein kann.

Bei der Adressierung dieser Querverweise ist die Position des Datensatzes und die Nummer der Datentabelle bekannt, die diesen Datensatz aufweist. Diese Information über die Position des Datensatzes ist in der entsprechenden Eintragsindexzeile enthalten.

Im Fall des Vorsehens von Querverweisen ist die Priorisierung von Einträgen mittels Identifikationsnummern zu beachten. Wenn ein Erweiterungs-Datensatz einen Basis-Datensatz ersetzt, so erfolgt eine Umlenkung der Querverweise auf den Erweiterungs-Datensatz. Dabei ist das Datenbankprogramm so vorsehbar, daß bei dem Einfügen von Erweiterungsdatensätzen die Querverweise automatisch auf diesen Datensatz umgelenkt werden.

Querverweise auf andere Datensätze sind beispielsweise mit Platzhalterzeichen formulierbar. Das Identifikationsmerkmal des Datensatzes, auf den verwiesen wird, ist seine Identifikationsnummer. Die tatsächliche Ausgestaltung eines Querformates ist beliebig wählbar. Die erfindungsgemäße Konstruktion von Querverweisen erfolgt unter Verwendung der Identifikationsnummern der einzelnen Datensätze.

Sind mehrere Datentabellen in der Datenbank enthalten, so sind mehrere verschiedene Fälle von Querverweisen möglich. Querverweise von Basis-Datensätzen auf weitere Basis-Datensätze sind erfindungsgemäß vorgesehen. Querverweise von Basis-Datensätzen auf Erweiterungs-Datensätze, welche die Basis-Datentabelle erweitern, sind nicht vorgesehen. In diesem Falle waren zum Zeitpunkt der Erstellung der Basis-Datentabelle die Erweiterungsdatensätze nicht bekannt.

Querverweise von Basisdatensätzen auf Erweiterungsdatensätzen, welche die Basisdatensätze überschreiben, sind erlaubt. Hierbei soll der aktuellste Eintrag in der Erweiterungs-Datentabelle Priorität haben.

Querverweise von Erweiterungs-Datensätzen auf Basis-Datensätze sind erfindungsgemäß ebenfalls vorgesehen. Querverweise von Erweiterungs-Datensätzen auf weitere Erweiterungs-Datensätze sind erfindungsgemäß grundsätzlich erlaubt. Lediglich Querverweise von Erweiterungs-Datensätzen auf weitere Erweiterungs-Datensätze in anderen Erweiterungs-Datentabellen, welche die Basis-Datentabelle erweitern, sind nicht zulässig. Dadurch wird ausgeschlossen, daß eine Erweiterungs-Datentabelle konstruierbar ist, die nur in Verbindung mit einer anderen Erweiterungs-Datentabelle funktionstüchtig ist.

Weiterhin ist es erfindungsgemäß vorgesehen, daß in jeder Erweiterungs-Datentabelle jede Identifikationsnummer genau einmal vorkommt. Mehrere Erweiterungs-Datentabellen dürfen die gleichen Identifikationsnummern verwenden, wobei jeweils die aktuellsten Erweiterungs-Datensätze priorisiert werden, sofern diese Erweiterungs-Datensätze Basis-Datensätze ersetzen. Liegt das Ziel eines Querverweises, also die Identifikationsnummer, im Nummernkreis der Basis-Datentabelle, so wird zunächst überprüft, ob diese in einer der Erweiterungs-Datentabellen vorkommt. Ist dies der Fall, so wird der jeweilig Erweiterungs-Datensatz angezeigt. Ansonsten wird der Basis-Datensatz dargestellt. Liegt das Ziel eines Querverweises im Nummernkreis der Erweiterungs-Datentabelle, so wird stets der Erweiterungs-Datensatz dargestellt, der diese Identifikationsnummer trägt.

Durch diese Art der Querverweiserstellung ist gewährleistet, daß alle denkbaren Formen von Querverweisen die gleiche Form aufweisen. Durch Erweiterungs-Datentabellen aktualisierte Einträge der Basis-Datentabelle werden automatisch den Basisdatensätzen vorgezogen.

Bei der Verwendung von Querverweisen ist es notwendig, Identifikationsnummern zur Position der Eintragsindexzeile im entsprechenden Eintragsindex sowie zur zugeordneten Datentabelle aufzulösen. Dazu wird ein Identindex benötigt, der bei der Generierung des jeweiligen Eintragsindexes miterzeugt wird. Dazu wird die Identifikationsnummer der Position der Eintragsindexzeile im Eintragsindex entgegengesetzt. Danach wird der Identindex nach der Identifikationsnummer sortiert. Die Suche der passenden Identifikationsnummer wird im Datenbankprogramm durch ein geeignetes Verfahren, insbesondere durch das bekannte Boolesche Halbierungsverfahren durchgeführt. Der Identindex weist einen Speicherbedarf von 8 Bytes pro Eintrag auf.

Der Identindex kann auf dem relativ langsamen Speichermedium, insbesondere auf der Festplatte, belassen werden. Das Auflösen eines Querverweises ist nicht zeitkritisch. In der Praxis wird jeweils nur ein Querverweis gleichzeitig aufgelöst. Für jede Datentabelle existiert ein separater Identindex.

Zur Auswahl des richtigen Identindexes wird zuerst überprüft, ob die Identifikationsnummer aus dem Nummernkreis einer Erweiterungs-Datentabelle stammt. Stammt der verweisende Eintrag aus einer Erweiterungs-Datentabelle, so wird der Identindex dieser Datentabelle verwendet. Stammt die Identifikationsnummer aus dem Nummernkreis der Basis-Datentabelle, so werden unabhängig davon, ob der verweisende Eintrag aus einer Erweiterungs-Datentabelle oder aus einer Basis-Datentabelle stammt, zunächst die Erweiterungs-Datentabellen nach passenden Einträgen durchsucht. Neueren Erweiterungs-Datentabellen wird dabei der Vorzug gegeben. Wird kein Treffer erzielt, so wird die nächst ältere Erweiterungs-Datentabelle durchsucht, bis am Schluß die Basis-Datentabelle für eine Durchsuchung herangezogen wird.

Die Erfindung ist im allgemeinen Fall in einem Computerprogramm zur Stichwortsuche in einer Datenbank, zur Volltextsuche in einer Datenbank und zum Einfügen von neuen Datensätzen in eine Datenbank verwirklicht.

Das Computerprogramm ist dabei so ausgebildet, daß nach Eingabe eines oder mehrerer Suchbegriffe in das Computersystem eines der oben beschriebenen erfindungsgemäßen Verfahren ausführbar ist, wobei als Ergebnis des Verfahrens eine Liste von mit dem Suchbegriff übereinstimmenden Wörtern bzw. Datensätzen ausgebbar ist.

Weiterhin ist das Computerprogramm dabei so ausgebildet, daß nach Eingabe eines oder mehrerer Datensätze in das Computersystem ein erfindungsgemäßes Verfahren gemäß einem der vorhergehenden Ansprüche ausführbar ist, wobei diese eingefügten Datensätze in den entsprechenden Datentabellen gespeichert sind und für sämtliche Anwendungen der Datenbank zur Verfügung stehen.

Durch das erfindungsgemäß verbesserte Computerprogramm ergeben sich erhebliche Laufzeitverbesserungen gegenüber den bekannten Programmen zum Betrieb von erweiterbaren Datenbanken.

Die Erfindung betrifft außerdem ein Computerprogramm, das auf einem Speichermedium enthalten ist, das in einem Computerspeicher abgelegt ist, das in einem Direktzugriffsspeicher enthalten ist oder das auf einem elektrischen Trägersignal übertragen wird.

Die Erfindung betrifft weiterhin einen Datenträger mit einem solchen Computerprogramm sowie ein Verfahren, bei dem ein solches Computerprogramm aus einem elektronischen Datennetz wie beispielsweise aus dem Internet auf einen an das Datennetz angeschlossenen Computer heruntergeladen wird.

Die Erfindung ist in der Zeichnung anhand von drei Ausführungsbeispielen näher veranschaulicht.

Figur 1 zeigt eine perspektivische Ansicht eines Computersystems mit einer erfindungsgemäßen Datenbank,

Figur 2 zeigt eine erste Datentabelle und eine zweite Datentabelle gemäß einem Ausführungsbeispiel der erfindungsgemäßen Datenbank gemäß einem ersten Ausführungsbeispiel,

Figur 3 zeigt einen ersten Eintragsindex der ersten Datentabelle aus Figur 2 und einen zweiten Eintragsindex der zweiten Datentabelle aus Figur 2 gemäß einem ersten Ausführungsbeispiel,

Figur 4 zeigt eine Attributstabelle des ersten Eintragsindexes aus Figur 3 und des zweiten Eintragsindexes aus Figur 3 gemäß einem ersten Ausführungsbeispiel,

Figur 5 zeigt einen Zwischenindex zu der ersten Datentabelle und zu der zweiten Datentabelle aus Figur 2 gemäß einem ersten Ausführungsbeispiel,

Figur 6 zeigt einen Filterindex zu der ersten Datentabelle und zu der zweiten Datentabelle aus Figur 2 gemäß einem ersten Ausführungsbeispiel,

Figur 7 zeigt einen ersten Volltext-Zwischenindex zu der ersten Datentabelle aus Figur 2 und einen zweiten Volltext-Zwischenindex zu der zweiten Datentabelle aus Figur 2 gemäß einem zweiten Ausführungsbeispiel,

Figur 8 zeigt einen ersten Volltext-Wortindex zu der ersten Datentabelle aus Figur 2 und einen zweiten Volltext-Wortindex zu der zweiten Datentabelle aus Figur 2 gemäß einem zweiten Ausführungsbeispiel,

Figur 9 zeigt einen Volltext-Referenzindex zu der ersten Datentabelle aus Figur 2 gemäß einem zweiten Ausführungsbeispiel,

Figur 10 zeigt einen Volltext-Referenzindex zu der zweiten Datentabelle aus Figur 2 gemäß einem zweiten Ausführungsbeispiel,

Figur 11 zeigt einen ersten Volltext-Filterindex und einen zweiten Volltext-Filterindex zu der ersten Datentabelle aus Figur 2 gemäß einem zweiten Ausführungsbeispiel,

Figur 12 zeigt einen ersten Volltext-Filterindex und einen zweiten Volltext-Filterindex zu der zweiten Datentabelle aus Figur 2 gemäß einem zweiten Ausführungsbeispiel,

Figur 13 zeigt eine erste Verknüpfungstabelle des ersten Volltext-Filterindexes und des zweiten Volltext-Filterindexes zu der ersten Datentabelle aus Figur 2 und eine zweite Verknüpfungstabelle des ersten Volltext-Filterindexes und des zweiten Volltext-Filterindexes zu der zweiten Datentabelle aus Figur 2 gemäß einem zweiten Ausführungsbeispiel,

Figur 14 zeigt eine Basis-Datentabelle und eine Erweiterungs-Datentabelle gemäß einem dritten Ausführungsbeispiel,

Figur 15 zeigt einen Basis-Eintragsindex der Basis-Datentabelle aus Figur 14 gemäß einem dritten Ausführungsbeispiel,

Figur 16 zeigt einen Erweiterungs-Eintragsindex der Erweiterungs-Datentabelle aus Figur 14 gemäß einem dritten Ausführungsbeispiel,

Figur 17 zeigt einen Zwischenindex zu dem Basis-Eintragsindex aus Figur 15 und zu dem Erweiterungs-Eintragsindex aus Figur 16 gemäß einem dritten Ausführungsbeispiel.

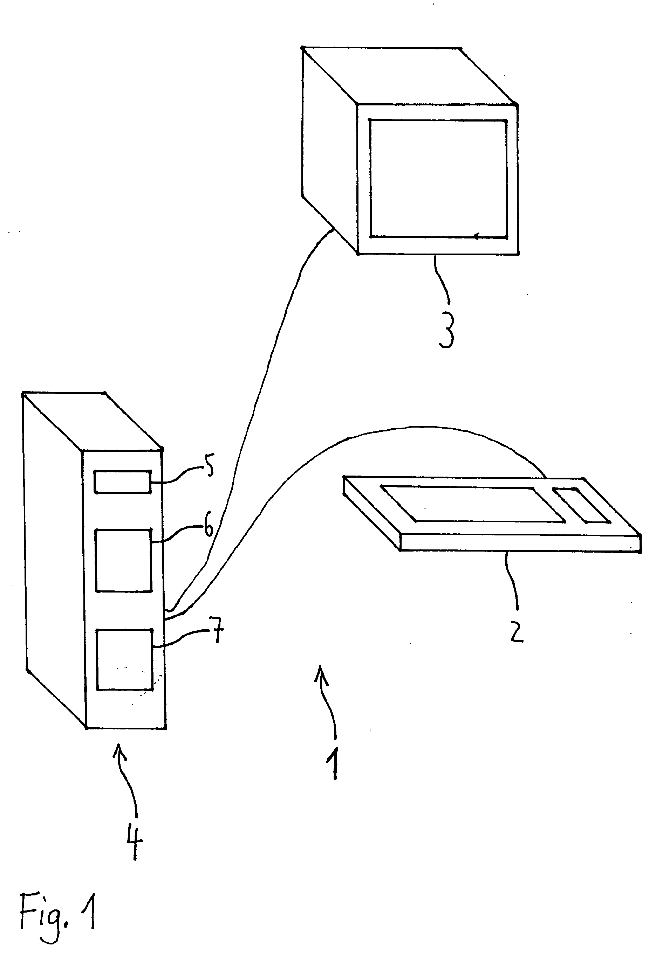

Figur 1 zeigt eine schematische perspektivische Ansicht eines Computersystems 1, das zum Betrieb einer erfindungsgemäßen Datenbank eingesetzt wird.

Das Computersystem 1 gliedert sich in eine Eingabeeinheit 2, in eine Ausgabeeinheit 3 und in eine Rechen- und Speichereinheit 4.

Die Eingabeeinheit 2 ist als Tastatur ausgestaltet. Die Ausgabeeinheit 3 weist einen Monitor, sowie einen in dieser Ansicht nicht gezeigten Drucker auf.

Die Rechen- und Speichereinheit 4 hat ein CD/DVD-ROM-Laufwerk 5, eine Festplatte 6 und einen hier schematisch dargestellten Arbeitsspeicher RAM 7. Das CD/DVD-ROM-Laufwerk 5, die Festplatte 6 und der Arbeitsspeicher RAM 7 sind Speichermedien zur Aufnahme und Wiedergabe von Daten. Sie unterscheiden sich in bezug auf Speicherkapazität, in bezug auf die Art des Datenzugriffs und in bezug auf die Geschwindigkeit des Datenzugriffs.

Das CD/DVD-ROM-Laufwerk 5 ist zur Aufnahme einer hier nicht gezeigten Speicherplatte wie einer CD-ROM oder einer DVD-ROM vorgesehen. Es ist nur ein Lese-Zugriff auf die gespeicherten Daten möglich. Das CD/DVD-ROM-Laufwerk 5 weist einen im Vergleich zu anderen Speichermedien relativ langsamen Datenzugriff auf. Typische Speicherplatten haben als CD-ROM eine Speicherkapazität von 650 MB oder als DVD-ROM eine Speicherkapazität 5 GB oder 9 GB.

Die Festplatte 6 erlaubt sowohl Lese- als auch Schreibzugriffe auf gespeicherte Daten und ist gekennzeichnet durch eine etwas über derjenigen des CD/DVD-ROM-Laufwerks 5 liegenden Geschwindigkeit des Datenzugriffs. Die Speichergrößen aktueller Festplatten bewegen sich im Gigabyte-Bereich.

Der Arbeitsspeicher RAM 7 weist einen sehr schnellen Datenzugriff, aber eine im Vergleich mit der Festplatte 6 und dem CD/DVD-ROM-Laufwerk 5 relativ geringe Speicherkapazität auf. Die Speichergrößen aktueller Arbeitsspeicher RAM 7 bewegen sich im Bereich von hundert Megabyte. Der Arbeitsspeicher RAM 7 erlaubt Lese- und Schreibzugriff.

Über die Eingabeeinheit 2 gibt ein hier nicht gezeigter Benutzer Daten in das Computersystem 1 ein. Die Rechen- und Speichereinheit 4 bearbeitet diese Daten und erzeugt Ausgabeinformationen, die über die Ausgabeeinheit 3 ausgebbar sind.

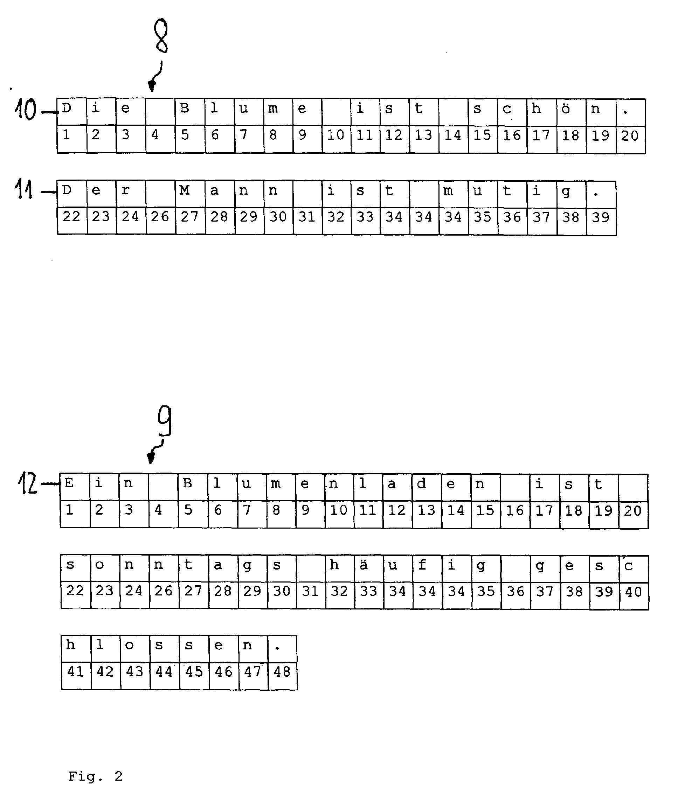

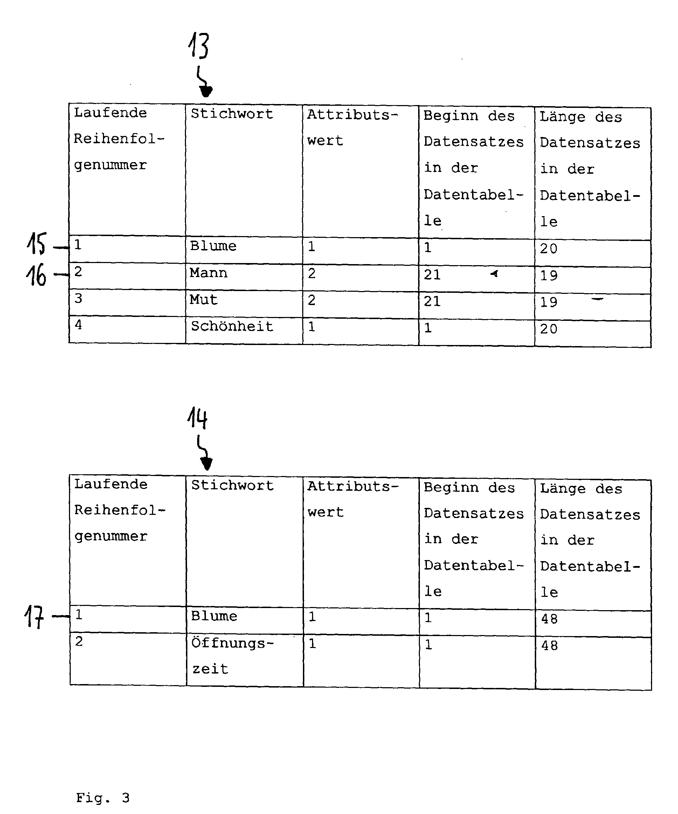

Auf dem Computersystem 1 ist eine hier nicht gezeigte Datenbank verwirklicht, die mit Bezug auf Figur 2 und Figur 3 beschrieben wird.

Figur 2 zeigt eine erste Datentabelle 8 und eine zweite Datentabelle 9 der erfindungsgemäßen Datenbank gemäß einem ersten Ausführungsbeispiel.

Die Datenbank umfaßt eine Vielzahl von weiteren, hier nicht dargestellten Datentabellen. Die Datentabellen sind durchnumeriert. Die Datentabellen enthalten in der erfindungsgemäßen Datenbank abgespeicherte Daten.

Hier sind zur Vereinfachung nur eine erste Datentabelle 8 und eine zweite Datentabelle 9 dargestellt. Die erste Datentabelle 8 trägt die laufende Nummer 1. Die zweite Datentabelle 9 trägt die laufende Nummer 2.

Im Ausführungsbeispiel sind die erste Datentabelle 8 und die zweite Datentabelle 9 auf dem CD/DVD-ROM-Laufwerk 5 abgelegt.

Die erste Datentabelle 8 und die zweite Datentabelle 9 stellen im Ausführungsbeispiel eine Datei eines hier nicht gezeigten Dateisystems des Computersystems 1 dar.

Die Datentabellen weisen jeweils eine Vielzahl von Feldern auf, wobei jedes Feld genau ein Zeichen enthält. Im Ausführungsbeispiel hat je ein Feld eine Speichergröße von 1 Byte = 8 Bit. Mit der Erfindung können auch andere Speichergrößen pro Feld der Datentabelle verwirklicht werden. Die Felder der ersten Datentabelle 8 und der zweiten Datentabelle 9 sind in Figur 2 mit Ordnungsnummern fortlaufend durchnumeriert dargestellt. Diese Numerierung wird vorteilhafterweise nicht mit abgespeichert, sondern vom Dateisystem des Computersystems 1 bereitgestellt.

Die Größe der Datentabelle wird durch den in ihr enthaltenen Eintragstext bestimmt. Die maximale Größe der Datentabelle ist im vorliegenden Fall zur einfacheren Erklärung auf $2^{32}$ = 4.294.967.296 Zeichen begrenzt. Mit der Erfindung können auch größere Datentabellen verwirklicht werden. Die Felder der Datentabelle gliedern sich in Datensätze, die hintereinander abgespeichert werden, und zwar ohne ein besonderes Trennzeichen zwischen zwei Datensätzen. Das Auffinden und die Selektion der einzelnen Datensätze der Datentabellen geschieht über Zeiger, die sich auf die Numerierung der Datentabelle beziehen.

In Figur 2 sind ein Ausschnitt der ersten Datentabelle 8 mit einem ersten Datensatz 10 "Die Blume ist schön." und mit einem zweiten Datensatz 11 "Der Mann ist mutig.", sowie ein Ausschnitt der zweiten Datentabelle 9 mit einem dritten Datensatz 12 "Ein Blumenladen ist sonntags häufig geschlossen." gezeigt. Der besseren Übersichtlichkeit halber ist unter jedem Feld der ersten Datentabelle 8 und unter jedem Feld der zweiten Datentabelle 9 die dem betreffenden Feld entsprechende Ordnungsnummer angegeben. Die Ordnungsnummern sind bei 1 beginnend aufsteigend durchnumeriert. Alle Zeichen jedes Datensatzes, auch die Leerzeichen und die Sonderzeichen, belegen jeweils separate Felder in der Datentabelle. In der ersten Datentabelle 8 belegt der erste Datensatz 10 die Felder mit den Ordnungsnummern 1 bis 20, und der zweite Datensatz 11 belegt die Felder mit den Ordnungsnummern 21 bis 39. Die Größe der ersten Datentabelle 8 beträgt 39 Zeichen. In der zweiten Datentabelle 9 belegt der dritte Datensatz 12 die Felder mit den Ordnungsnummern 1-48. Die Größe der zweiten Datentabelle 9 beträgt 48 Zeichen.

Figur 3 zeigt einen ersten Eintragsindex 13, auf den beim Auslesen von Daten aus der ersten Datentabelle 8 zugegriffen wird, und einen zweiten Eintragsindex 14, auf den beim Auslesen von Daten aus der zweiten Datentabelle 9 zugegriffen wird, gemäß dem ersten Ausführungsbeispiel.

Sowohl zur ersten Datentabelle 8 als auch zur zweiten Datentabelle 9 und zu jeder weiteren Datentabelle der erfindungsgemäßen Datenbank existiert jeweils genau ein separater Eintragsindex, wobei je eine Zeile des betreffenden Eintragsindexes Informationen zu genau einem entsprechenden Datensatz der betreffenden Datentabelle enthält. In der erfindungsgemäßen Datenbank ist eine Vielzahl von Datentabellen und Eintragsindizes enthalten. Die Datentabellen und Eintragsindizes sind durchnumeriert, wobei jeder Datentabelle genau ein Eintragsindex entspricht. Demjenigen Eintragsindex, welcher der jeweiligen Datentabelle entspricht, ist dieselbe Nummer zugeordnet wie der entsprechenden Datentabelle.

Jede Zeile des Eintragsindexes enthält eine laufende Reihenfolgenummer, genau ein Stichwort, ein oder mehrere jeweils ein Attributswert enthaltende Attributsfelder, einen Zeiger auf den Beginn des zugehörigen Datensatzes in der Datentabelle sowie eine Information über die Länge des zugehörigen Datensatzes in der betreffenden Datentabelle. Wenn zu einem Datensatz mehrere Stichwörter vorhanden sind, dann wird in dem hier beschriebenen Ausführungsbeispiel zu jedem Stichwort eine neue Eintragsindexzeile geführt, die hinsichtlich der übrigen Informationen mit den anderen Zeilen zu dem betreffenden Datensatz übereinstimmt. Zu jedem Datensatz der betreffenden Datentabelle ist ein oder mehrere Stichwörter in dem zugehörigen Eintragsindex gespeichert.

In Figur 3 sind der erste Eintragsindex 13 und der zweite Eintragsindex 14 dargestellt, die sich in jeweils fünf Spalten gliedern. Der erste Eintragsindex 13 und der zweite Eintragsindex 14 und alle weiteren Eintragsindizes enthalten jeweils eine Vielzahl von Eintragsindexzeilen.

Die erste Spalte des ersten Eintragsindexes 13 und des zweiten Eintragsindexes 14 enthält aufsteigend zu jeder Eintragsindexzeile deren laufende Reihenfolgenummer, welche die Position der Eintragsindexzeile im Eintragsindex angibt. Diese jeweilige laufende Reihenfolgenummer einer Eintragsindexzeile wird vorteilhafterweise nicht mit abgespeichert, sondern sie wird vom Dateisystem des Computersystems 1 bereitgestellt.

In der zweiten Spalte des ersten Eintragsindexes 13 und des zweiten Eintragsindexes 14 ist zu jeder Eintragsindexzeile das Stichwort enthalten, das auf den der betreffenden Eintragsindexzeile entsprechenden Datensatz verweist. Die Eintragsindexzeilen des ersten Eintragsindexes 13 und des zweiten Eintragsindexes 14 sind alphabetisch nach den jeweils enthaltenen Stichwörtern sortiert.

In der dritten Spalte des ersten Eintragsindexes 13 und des zweiten Eintragsindexes 14 befindet sich zu jeder Eintragsindexzeile je ein Attributsfeld. In diesem Attributsfeld ist ein Attributswert enthalten, der einem Attributstext zugeordnet ist und der sich auf den Inhalt des Datensatzes bezieht.

Die vierte Spalte des ersten Eintragsindexes 13 und des zweiten Eintragsindexes 14 enthält zu jeder Eintragsindexzeile je einen Zeiger auf die Position des Beginns des Datensatzes in der dem jeweiligen Eintragsindex entsprechenden Datentabelle. Die fünfte Spalte des ersten Eintragsindexes 13 und des zweiten Eintragsindexes 14 beinhaltet zu jeder Eintragsindexzeile einen Eintrag, welcher der Länge des Datensatzes in der dem jeweiligen Eintragsindex entsprechenden Datentabelle entspricht. Die Position und Größe des entsprechenden Datensatzes in der Datentabelle ist über diese Einträge in der vierten und fünften Spalte des Eintragsindexes eindeutig bestimmt.

Im Ausführungsbeispiel gemäß Figur 3 weist der erste Eintragsindex 13 zur ersten Datentabelle 8 vier Zeilen auf. Der zweite Eintragsindex 14 zur zweiten Datentabelle 9 umfaßt zwei Zeilen.

Nachfolgend ist der Aufbau des ersten Eintragsindexes 13 anhand einer ersten Eintragsindexzeile 15 veranschaulicht.

Die erste Eintragsindexzeile 15 befindet sich im ersten Eintragsindex 13 an der ersten Position. Dementsprechend ist in der ersten Eintragsindexzeile 15 in der Spalte "Laufende Reihenfolgenummer" ein Wert "1" eingetragen. Die erste Eintragsindexzeile 15 enthält in der Spalte "Stichwort" einen Begriff "Blume". Demzufolge ist der ersten Eintragsindexzeile 15 im ersten Eintragsindex 13 ein Stichwort "Blume" zugewiesen. Der ersten Eintragsindexzeile 15 ist ein Attributswert zugeordnet. Aus der Spalte "Attributswert" der ersten Eintragsindexzeile 15 ergibt sich der Attributswert "1". In der Spalte "Beginn des Datensatzes in der Datentabelle" ist für die erste Eintragsindexzeile 15 ein Wert "1" eingetragen, in der Spalte "Länge des Datensatzes in der Datentabelle" ist für die erste Eintragsindexzeile 15 ein Wert "20" eingetragen. Dementsprechend ist der ersten Eintragsindexzeile 15 der Bereich in der ersten Datentabelle 8 zugewiesen, der an Position 1 beginnt und eine Länge von 20 Feldern aufweist. Es handelt sich um den ersten Datensatz 10: "Die Blume ist schön."

Nachfolgend ist der Aufbau des ersten Eintragsindexes 13 anhand einer zweiten Eintragsindexzeile 16 veranschaulicht.

Die zweite Eintragsindexzeile 16 befindet sich im ersten Eintragsindex 13 an der zweiten Position und trägt demzufolge die laufende Reihenfolgenummer "2". Die zweite Eintragsindexzeile 16 enthält das Stichwort "Mann" und ist dem Attributswert "2" zugeordnet. Die zweite Eintragsindexzeile 16 verweist auf den Beginn des Datensatzes in der Datentabelle "21" und auf die Länge des Datensatzes von "19" Zeichen. Es handelt sich um den zweiten Datensatz 11 "Der Mann ist mutig.".

Die dritte Eintragsindexzeile 17 befindet sich im zweiten Eintragsindex 14 an der ersten Position und trägt demzufolge die laufende Reihenfolgenummer "1". Die dritte Eintragsindexzeile 17 enthält das Stichwort "Blume" und ist dem Attributswert "1" zugeordnet. Die dritte Eintragsindexzeile 17 verweist auf den dritten Datensatz 12 "Ein Blumenladen ist sonntags häufig geschlossen.", der in der zweiten Datentabelle 9 an Position "1" beginnt und eine Länge von "48" Zeichen hat.

Der gesamte Speicherbedarf eines Eintragsindexes ermittelt sich aus der Multiplikation der Anzahl der Eintragsindexzeilen mit der Summe des Speicherbedarfs pro Eintragsindexzeile.

Die Position einer Eintragsindexzeile innerhalb des Eintragsindexes ermittelt sich aus der Multiplikation der Nummer der Eintragsindexzeile mit der Summe des Speicherbedarfs pro Eintragsindexzeile.

Im Ausführungsbeispiel ist die Länge des Stichwortes im ersten Eintragsindex 13 und im zweiten Eintragsindex 14 jeweils auf 30 Zeichen begrenzt. Ein Stichwort belegt dementsprechend einen Speicherraum von 30 Bytes. Der Attributswert ist durch ein Zeichen dargestellt, das einen Speicherraum von 1 Byte = 8 Bit einnimmt. Bei dieser Darstellung können $2^8$ = 256 verschiedene Attribute repräsentiert werden. Der Zeiger auf den Beginn des Datensatzes in der Datentabelle nimmt im Ausführungsbeispiel einen Speicherraum von 4 Bytes = 32 Bits ein. Der Eintrag in der fünften Spalte des ersten Eintragsindexes 13 und des zweiten Eintragsindexes 14, der jeweils die Länge des jeweiligen Datensatzes in der Datentabelle definiert, belegt im Ausführungsbeispiel einen Speicherraum von ebenfalls 4 Bytes = 32 Bits. Demzufolge ergibt sich die maximale Größe der Datentabelle zu $2^{32}$ = 4.294.967.296 Zeichen.

Im Ausführungsbeispiel belegt eine Eintragsindexzeile im Eintragsindex einen Speicherraum von 39 Bytes.

Die Eintragsindizes der Datentabellen sind vorzugsweise auf dem CD/DVD-ROM-Laufwerk 5 oder auf der Festplatte 6 gespeichert, da diese Speichermedien eine relativ große Speicherkapazität aufweisen.

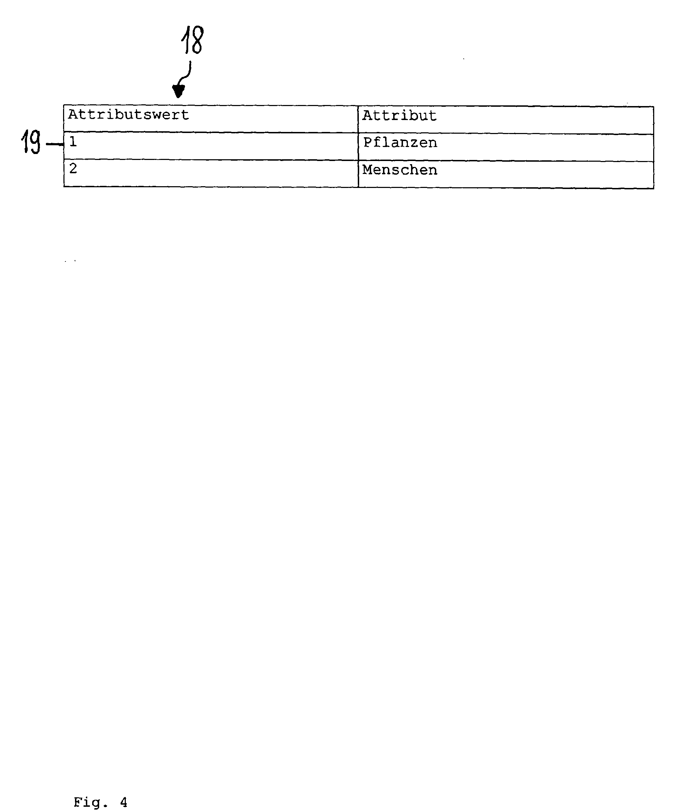

Figur 4 zeigt eine Attributstabelle 18 gemäß dem ersten Ausführungsbeispiel, auf die beim Auslesen von Daten sowohl vom ersten Eintragsindex 13 als auch vom zweiten Eintragsindex 14 und von jedem weiteren Eintragsindex zugegriffen wird.

Zum ersten Eintragsindex 13, zum zweiten Eintragsindex 14 und zu allen weiteren hier nicht gezeigten Eintragsindizes der erfindungsgemäßen Datenbank existiert insgesamt genau eine Attributstabelle 18, die mehrere Attributstabellenzeilen aufweist. Jede Attributstabelle bezieht sich auf je eine Gruppe von Attributsfeldern in den Eintragsindizes bzw. im Zwischenindex. Die Attributstabelle 18 gliedert sich in eine Spalte, welche den Attributswert enthält, und in eine Spalte, welche die Bezeichnung des Attributs enthält. Jede Attributstabellenzeile beinhaltet einen Attributswert und einen zugeordneten Attributstext. In der Attributstabelle 18 sind die jeweiligen Attributstexte einzelnen Attributswerten zugeordnet.

Eine Attributstabellenzeile 19 befindet sich an der ersten Position der Attributstabelle 18. Die Attributstabellenzeile 19 enthält in der ersten Spalte einen Attributswert "1" Sie ist in der zweiten Spalte dem Attributstext "Pflanzen" zugeordnet. Demzufolge entspricht der Attributswert "1" dem Attributstext "Pflanzen".

Der Attributswert ist durch ein Zeichen dargestellt, das einen Speicherraum von 1 Byte = 8 Bit einnimmt. Bei dem gewählten Ausführungsbeispiel gemäß Figur 4 können $2^8$ = 256 verschiedene Attributswerte in der Attributstabelle 18 abgelegt werden. Im Ausführungsbeispiel ist die Länge des Attributstexts jeweils auf 30 Zeichen begrenzt. Der Attributstext belegt dementsprechend einen Speicherraum von 30 Bytes. Somit beträgt der benötigte Speicherraum pro Attributstabellenzeile 31 Bytes. Die erfindungsgemäße Datenbank kann auch mit einem anderen Speicherbedarf der Attributstabelle 18 gestaltet werden.

Alternativ kann der Attributswert durch die Position des Attributs innerhalb der Attributstabelle 18 vorgesehen sein, wobei die Position des Attributs innerhalb der Attributstabelle 18 automatisch durch das Dateisystem des Computersystems 1 bereitstellbar ist. In diesem Fall ergibt sich der benötigte Speicherraum pro Attributstabellenzeile zu 30 Bytes.

Die Attributstabelle 18 ist im Ausführungsbeispiel auf CD/DVD-ROM-Laufwerk abgelegt.

In einem hier nicht gezeigten Ausführungsbeispiel können weitere Gruppen von Attributsfeldern im Eintragsindex und im Zwischenindex vorgesehen sein, welche die einzelnen Datensätze in den Datentabellen anhand von bestimmten Merkmalen näher bestimmen. Die Attributswerte sind in weiteren Spalten der Eintragsindizes und des Zwischenindexes darstellbar. Zu jeder Gruppe von Attributsfeldern wird eine separate Attributstabelle mit mehreren Attributstabellenzeilen gebildet.

Denkbar ist beispielsweise die Gruppe von Attributsfeldern:

"Sprache", die aussagt, in welcher Sprache der betreffende Datensatz vorliegt. Attributstexte wären beispielsweise:

"Deutsch", "Englisch", "Französisch" und "Spanisch". In diesem Falle würde separat zur vorhandenen Attributstabelle 18 eine weitere Attributstabelle erstellt werden, die den Attributstexten "Deutsch", "Englisch", "Französisch" und "Spanisch" die Attributswerte "1", "2", "3" und "4" zuordnet. Der Aufbau dieser Sprachentabelle entspricht dem der Attributstabelle 18. Die Attributswerte dieser Sprachentabelle sind, vorzugsweise als 1-Byte-Werte codiert, in weiteren Spalten des Zwischenindexes darstellbar.

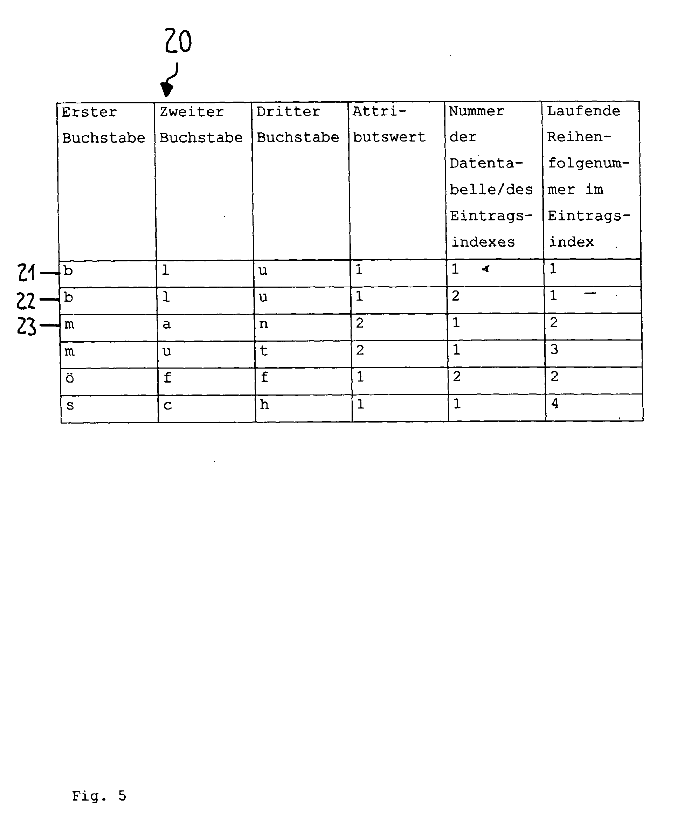

Figur 5 zeigt einen Zwischenindex 20 gemäß dem ersten Ausführungsbeispiel, auf den beim Auslesen von Daten aus der ersten Datentabelle 8 und aus der zweiten Datentabelle 9 zugegriffen wird.

Zur ersten Datentabelle 8, zur zweiten Datentabelle 9 und zu allen weiteren Datentabellen der erfindungsgemäßen Datenbank existiert insgesamt genau ein Zwischenindex 20, wobei je eine Zeile des betreffenden Zwischenindexes 20 Informationen zu genau einer entsprechenden Eintragsindexzeile eines Eintragsindexes enthält.

Jede Zeile des Zwischenindexes 20 enthält die ersten drei Buchstaben je eines Stichworts, das einem betreffenden Datensatz zugeordnet ist und in der dem Datensatz entsprechenden Eintragsindexzeile abgelegt ist, einen Attributswert des zugeordneten Attributstexts, eine Nummer der Datentabelle/des Eintragsindexes, die den entsprechenden Datensatz enthält, und die laufende Reihenfolgenummer der Eintragsindexzeile innerhalb des Eintragsindexes, die dem betreffenden Datensatz entspricht.

Jede Zeile des Zwischenindexes 20 entspricht genau einer Eintragsindexzeile und dementsprechend genau einem Datensatz. Zu jedem Datensatz ist genau eine Zeile im Zwischenindex 20 vorgesehen. Die Numerierung der Zeilen des Zwischenindexes 20 ergibt sich durch ihre physikalische Reihenfolge.

Der Zwischenindex wird aus den sortiert vorliegenden Eintragsindexen durch ein Reißverschlußverfahren erzeugt. Die Zeilen des Zwischenindexes 20 sind so angeordnet, daß die dreibuchstabigen Wortanfänge alphabetisch aufsteigend sortiert sind. Dabei geht die alphabetische Sortierung über die ersten drei Zeichen der Zwischenindexzeilen hinaus und ist über die gesamten den jeweiligen Zwischenindexzeilen entsprechenden Stichwörter aus dem Eintragsindex ausgeführt.

Mehrere Zwischenindexzeilen des Zwischenindexes 20, die identische dreibuchstabige Wortanfänge der Stichwörter aufweisen, sind im Zwischenindex 20 in separaten Zeilen dargestellt und werden nicht zusammengefaßt.

Der Zwischenindex 20 gliedert sich in sechs Spalten. Die erste Spalte enthält jeweils den Anfangsbuchstaben des entsprechenden Stichworts, die zweite Spalte enthält jeweils den zweiten Buchstaben des entsprechenden Stichworts, und die dritte Spalte enthält jeweils den dritten Buchstaben des entsprechenden Stichworts. Sämtliche Buchstaben in den ersten drei Spalten "Erster Buchstabe", "Zweiter Buchstabe" und "Dritter Buchstabe" sind klein geschrieben. Die vierte Spalte weist den Attributswert auf, die dem Datensatz einen bestimmtes Attributstext zuordnet. Der Attributstext zu dem jeweiligen Attributswert ist gemäß Figur 4 in der Attributstabelle 18 hinterlegt. In der fünften Spalte befindet sich die Nummer der Datentabelle/des Eintragsindexes, in welcher der betreffende Datensatz enthalten ist. Diese Nummer entspricht der Nummer des Eintragsindexes, welcher der betreffenden Datentabelle zugeordnet ist. In der sechsten Spalte ist die Position der dem Datensatz entsprechenden Eintragsindexzeile innerhalb des betreffenden Eintragsindexes angegeben.

Im Ausführungsbeispiel gemäß Figur 5 weist der Zwischenindex 20 insgesamt sechs Zeilen auf. Von diesen Zeilen werden nachfolgend eine erste Zwischenindexzeile 21, eine zweite Zwischenindexzeile 22 und eine dritte Zwischenindexzeile 23 erläutert.

Die erste Zwischenindexzeile 21 ist an der ersten Position des Zwischenindexes 20 angeordnet.

Die Spalte "Erster Buchstabe" beinhaltet dementsprechend für die erste Zwischenindexzeile 21 den Buchstaben "b" als ersten Buchstaben des Stichworts "Blume". In der Spalte "Zweiter Buchstabe" der ersten Zwischenindexzeile 21 ist der zweite Buchstabe "1" des Stichworts "Blume" eingetragen, und in der Spalte "Dritter Buchstabe" befindet sich in der ersten Zwischenindexzeile 21 der dritte Buchstabe "u" dieses Stichworts. Somit lauten die drei Anfangsbuchstaben des Stichworts der ersten Zwischenindexzeile 21 "blu". Die Spalte "Attributswert" ist beispielhaft eingefügt. Sie weist in der ersten Zwischenindexzeile 21 den Attributswert "1" auf. In der Spalte "Nummer der Datentabelle/des Eintragsindexes" befindet sich für die erste Zwischenindexzeile 21 eine Zahl "1", und in der Spalte "Laufende Reihenfolgenummer im Eintragsindex" befindet sich für die erste Zwischenindexzeile 21 ebenfalls eine Zahl "1". Somit befindet sich derjenige Datensatz, der zu dieser ersten Zwischenindexzeile 21 gehört, in der ersten Datentabelle 8 und weist im ersten Eintragsindex 13 die laufende Reihenfolgenummer "1" auf.

Demzufolge entspricht die erste Zwischenindexzeile 21 dem ersten Datensatz 10 "Die Blume ist schön." in der ersten Datentabelle 8 aus Figur 2 und der ersten Eintragsindexzeile 15 des ersten Eintragsindexes 13 aus Figur 3, die dem ersten Datensatz 10 das Stichwort "Blume" zuordnet.

Die zweite Zwischenindexzeile 22 befindet sich an der zweiten Position des Zwischenindexes 20.

In den ersten drei Spalten der zweiten Zwischenindexzeile 22 sind die drei Anfangsbuchstaben des Stichworts "blu" enthalten. In der Spalte " Attributswert" ist der zweiten Zwischenindexzeile 21 das Attribut mit dem Attributswert "1" zugeordnet. In der Spalte "Nummer der Datentabelle/des Eintragsindexes" befindet sich für die zweite Zwischenindexzeile 22 eine Zahl "2" und in der Spalte "Laufende Reihenfolgenummer im Eintragsindex" befindet sich für die zweite Zwischenindexzeile 22 eine Zahl "1". Somit befindet sich derjenige Datensatz, der zu der zweiten Zwischenindexzeile 22 gehört, in der zweiten Datentabelle 9 und weist im zweiten Eintragsindex 14 die laufende Reihenfolgenummer "1" auf.

Es handelt sich um den dritten Datensatz 12 "Ein Blumenladen ist sonntags häufig geschlossen." in der zweiten Datentabelle 9 aus Figur 2. Diesem dritten Datensatz 12 ist in der dritten Eintragsindexzeile 17 des zweiten Eintragsindexes 14 aus Figur 3 das Stichwort "Blume" zugeordnet.

Die dritte Zwischenindexzeile 23 ist an der dritten Position des Zwischenindexes 20 angeordnet. In den ersten drei Spalten der dritten Zwischenindexzeile 23 sind die drei Anfangsbuchstaben des Stichworts "man" enthalten. In der Spalte " Attributswert" ist der dritten Zwischenindexzeile 23 der Attributswert "2" zugeordnet. Derjenige Datensatz, der zu der dritten Zwischenindexzeile 23 gehört, befindet sich demzufolge in der ersten Datentabelle 8 und weist im ersten Eintragsindex 13 die laufende Reihenfolgenummer "2" auf.

Die dritte Zwischenindexzeile 23 entspricht dem zweiten Datensatz 11 "Der Mann ist mutig." in der ersten Datentabelle 8 aus Figur 2. Diesem zweiten Datensatz 11 ist in der zweiten Eintragsindexzeile 16 des ersten Eintragsindexes 13 aus Figur 3 das Stichwort "Mann" zugeordnet.

Unter der Voraussetzung, daß die Konstellation der Buchstabenverteilung in den Wörtern gleichförmig ist und daß es keine Umlaute, Satzzeichen oder Zahlen im Stichwortkatalog gibt, ergibt sich die Anzahl der Übereinstimmungen zwischen Suchbegriff und Zwischenindexzeilen aus der Division der Anzahl der Zwischenindexzeilen durch $26^3$ = 17.576.

Der Speicherbedarf des Zwischenindexes 20 in diesem Ausführungsbeispiel beläuft sich auf 9 Bytes pro Zwischenindexzeile. Die ersten drei Buchstaben des Stichwortes benötigen je einen Speicherraum von 1 Byte. Der Attributswert nimmt einen Speicherraum von 1 Byte ein. Der Speicherbedarf für die Nummer der Datentabelle/des Eintragsindexes beträgt in der vorliegenden Ausführung 1 Byte. Dadurch ist die Gesamtzahl der Datentabellen in diesem Ausführungsbeispiel auf 256 limitiert. Der Zeiger auf die laufende Reihenfolgenummer des betreffenden Datensatzes innerhalb des Eintragsindexes nimmt 4 Bytes Speicherplatz ein. Die Erfindung kann auch mit einer zeilen- und spaltenmäßig größeren Datentabelle verwirklicht werden.

Der Zwischenindex 20 wird beim Aufrufen eines Computerprogramms zur Verwaltung der Datentabellen durch Zusammenführen der Eintragsindexe im Reißverschlußverfahren erzeugt. Er ist im Arbeitsspeicher RAM 7 abgelegt.

Das Vorgehen bei der Stichwortsuche in der erfindungsgemäßen Datenbank wird nachfolgend erläutert.

Beim Starten des erfindungsgemäßen Datenbankprogramms des Computersystems 1 wird aus dem ersten Eintragsindex 13, aus dem zweiten Eintragsindex 14 und aus allen anderen Eintragsindizes im Arbeitsspeicher RAM 7 genau ein Zwischenindex 20 gemäß Figur 5 erzeugt. Dieser wird nicht vor jeder Suche erzeugt, sondern nur nach Einbindung einer zusätzlichen Datenbank.

Für eine Stichwortsuche gemäß dem Ausführungsbeispiel gibt ein Benutzer über das Eingabemedium 2 einen Suchbegriff "Blume" in die Rechen- und Speichereinheit 4 ein und startet eine Stichwortsuchfunktion des Datenbankprogramms.

Anschließend werden die Inhalte eines etwaigen bestehenden Filterindexes 24 gelöscht.

Die ersten drei Buchstaben des vom Benutzer eingegebenen Suchbegriffes werden mit den ersten drei Buchstaben aller Stichwörter verglichen, die in den einzelnen Zwischenindexzeilen des Zwischenindexes 20 enthalten sind. Hierbei wird der gesamte Zwischenindex 20 durchlaufen.

Für diejenigen Zwischenindexzeilen, bei denen die ersten drei Buchstaben des Suchbegriffes mit den ersten drei Buchstaben des jeweiligen Stichwortes übereinstimmen, werden die Stichwörter der entsprechenden Eintragsindexzeilen in voller Länge in den Arbeitsspeicher RAM 7 geladen.

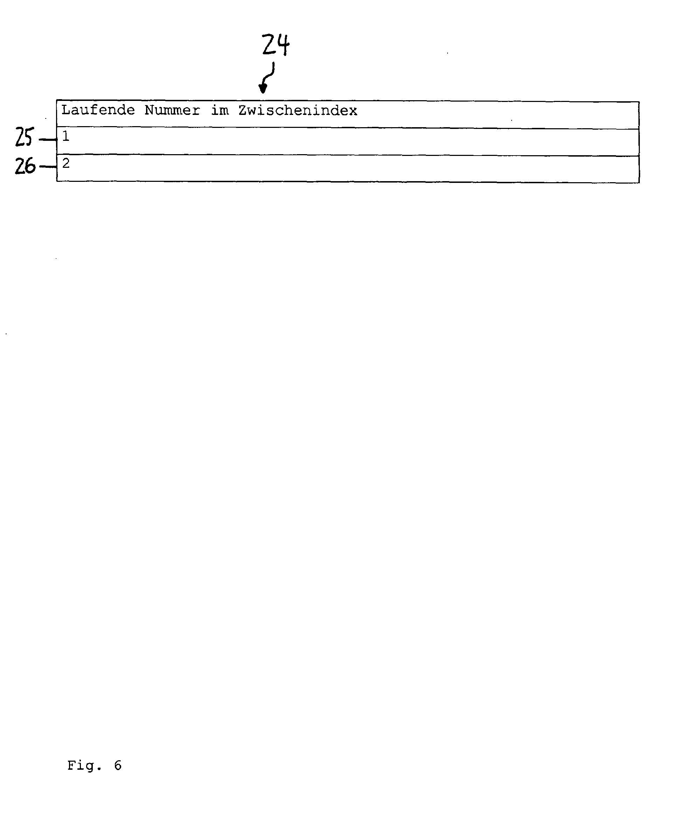

Diejenigen Zwischenindexzeilen, bei denen sich eine Übereinstimmung ergibt, werden in den in Figur 6 gemäß dem ersten Ausführungsbeispiel dargestellten Filterindex 24 kopiert, wobei nur die Informationen über die Position des Datensatzes im Zwischenindex 20 vom Zwischenindex 20 in den Filterindex 24 übernommen werden.

Der Filterindex 24 enthält danach genau diejenigen Zwischenindexzeilen, in denen sowohl die ersten drei Buchstaben des Suchbegriffes mit den ersten drei Buchstaben der Stichwörter in den Zwischenindexzeilen als auch der Suchbegriff in voller Länge mit dem Stichwort aus den entsprechenden Eintragsindexzeilen übereinstimmen.

Nachfolgend ist die Struktur des in Figur 6 gezeigten Filterindexes 24 erläutert.

Für den Zwischenindex 20 ist genau ein Filterindex 24 vorgesehen. Der Filterindex 24 weist eine Anzahl von Filterindexzeilen auf, wobei die Anzahl der Filterindexzeilen auch Null sein kann. Der Filterindex 24 enthält eine Spalte "Laufende Nummer im Zwischenindex", in der die laufende Nummer innerhalb des zugehörigen Zwischenindexes enthalten ist, die auf den entsprechenden Datensatz verweist.

Im vorliegenden Ausführungsbeispiel befindet sich eine erste Filterindexzeile 25 an der ersten Position des Filterindexes 24. In der Spalte "Laufende Nummer des Zwischenindexes" der ersten Filterindexzeile 25 ist eine Zahl "1" eingetragen.

Derjenige Datensatz, der zu der ersten Filterindexzeile 25 gehört, befindet sich in der ersten Datentabelle 8/im ersten Eintragsindex 13, und zwar an der Position mit der laufenden Reihenfolgenummer "1". Dies wird über den Zwischenindex 20 ermittelt. Es handelt sich um den ersten Datensatz 10 "Die Blume ist schön.".

Eine zweite Filterindexzeile 26 ist an der zweiten Position des Filterindexes 24 angeordnet. Sie weist in der Spalte "Laufende Nummer im Zwischenindex" eine Zahl "2" auf.

Dementsprechend befindet sich derjenige Datensatz, der zu der zweiten Filterindexzeile 26 gehört, in der zweiten Datentabelle 9/im zweiten Eintragsindex 14 und weist im zweiten Eintragsindex 14 die laufende Reihenfolgenummer "1" auf. Dies wird über den Zwischenindex 20 ermittelt. Es handelt sich um den dritten Datensatz 12 "Ein Blumenladen ist sonntags häufig geschlossen.".

Der Speicherraum der laufenden Reihenfolgenummer des Eintragsindexes ist mit 4 Byte veranschlagt. Dementsprechend beträgt der benötigte Speicherraum des Filterindexes 24 im Ausführungsbeispiel 4 Bytes für jede Filterindexzeile des Filterindexes 24. Die Erfindung kann mit einem anderen Speicherraum pro Filterindexzeile des Filterindexes 24 vorgesehen werden.

Der Filterindex wird im Arbeitsspeicher RAM 7 gebildet und abgelegt.

Im Ausführungsbeispiel werden also die ersten drei Buchstaben "blu" des vom Benutzer eingegebenen Suchbegriffes "Blume" auf Übereinstimmungen mit den anhand der ersten drei Buchstaben alphabetisch sortierten Stichwörter in den Zwischenindexzeilen des Zwischenindexes 20 untersucht.

Im Zwischenindex 20 ergeben sich gemäß dem Ausführungsbeispiel in Figur 5 zwei Übereinstimmungen der ersten drei Buchstaben "blu" des Suchbegriffes mit den alphabetisch sortierten ersten drei Buchstaben "blu" in den Zwischenindexzeilen, und zwar mit der ersten Zwischenindexzeile 21 und mit der zweiten Zwischenindexzeile 22. Der Vergleich des Suchbegriffes in voller Länge mit den Stichwörtern aus den entsprechenden Eintragsindexzeilen ergibt ebenfalls eine Übereinstimmung.

Dementsprechend wird die laufende Nummer "1" der ersten Zwischenindexzeile 21 und die laufende Nummer "2" der zweiten Zwischenindexzeile 22 aus dem Zwischenindex 20 gemäß Figur 5 in den Filterindex 24 gemäß Figur 6 übernommen.

Im Filterindex 24 entspricht nun jede Filterindexzeile genau einer Übereinstimmung des Suchbegriffes mit einem Stichwort aus dem Eintragsindex.

Ausgehend von der ersten Filterindexzeile 25 und von der zweiten Filterindexzeile 26 wird nun auf die erste Zwischenindexzeile 21 und auf die zweite Zwischenindexzeile 22 des Zwischenindexes 20 zugegriffen.

Von der ersten Zwischenindexzeile 21 sowie von der zweiten Zwischenindexzeile 22 wird nun auf diejenigen Eintragsindizes zugegriffen, deren Nummer in der Spalte."Nummer der Datentabelle/des Eintragsindexes" des Zwischenindexes 20 enthalten ist. Innerhalb dieser Eintragsindizes wird nun auf diejenigen Eintragsindexzeilen zugegriffen, deren Nummer in der Spalte "Laufende Reihenfolgenummer im Eintragsindex" des erfindungsgemäß erzeugten Zwischenindexes 20 enthalten ist.

Danach erfolgt die Ausgabe einer Liste auf dem Ausgabemedium 3, welche die Stichwörter aus den so ermittelten Eintragsindexzeilen enthält.

Die im Ausführungsbeispiel als Ergebnis ausgegebene Liste weist die Stichwörter "Blume" und "Blume" auf Nach Auswählen eines Stichworts aus der Liste durch den Benutzer wird der dem Stichwort entsprechende Datensatz über die Positionsinformationen in den Spalten "Beginn des Datensatzes in der Datentabelle" und "Länge des Datensatzes in der Datentabelle" ermittelt und auf dem Ausgabemedium 3 als Ergebnis ausgegeben.

Beim Auswählen des ersten Stichworts "Blume" aus der erzeugten Liste wird der erste Datensatz 10 "Die Blume ist schön." als Ergebnis auf dem Ausgabemedium 3 ausgegeben. Diese Ausgabe kann um den zugeordneten Attributstext "Pflanzen" erweitert werden.

Beim Auswählen des zweiten Stichworts "Blume" aus der erzeugten Liste wird der dritte Datensatz 12 "Ein Blumenladen ist sonntags häufig geschlossen." als Ergebnis auf dem Ausgabemedium 3 ausgegeben. Diese Ausgabe kann um den zugeordneten Attributstext "Pflanzen" erweitert werden.

Die Stichwortsuchfunktion ist mit der Ausgabe der Ergebnisse abgeschlossen.

In einem weiteren, hier nicht gezeigten Ausführungsbeispiel können bei der Stichwortsuche weitere Suchkriterien wie beispielsweise ein oder mehrere vom Benutzer in das Computersystem 1 einzugebende Suchattributswerte miteinbezogen sein. In diesem Falle wird nicht nur die Übereinstimmung der ersten drei Buchstaben zwischen Stichwort im Zwischenindex 20 und dem Suchbegriff geprüft, sondern auch die Übereinstimmung des Attributswerts in der Zwischenindexzeile mit dem Suchattributswert. Eine Suchanfrage kann so enger gefaßt werden, um präzisere Suchergebnisse zu erhalten.

Bei der Eingabe des Stichworts durch den Benutzer sind folgende Fälle zu betrachten:

Der Benutzer gibt eine leere Zeichenfolge ein. Nun werden alle Datensätze der Datentabellen als Ergebnis ausgegeben.
Der Benutzer gibt ein Zeichen ein. Es werden alle Datensätze ausgegeben, deren erstes Zeichen im Zwischenindex dem ersten Zeichen im Suchbegriff entspricht.
Der Benutzer gibt zwei Zeichen ein. Es werden alle Datensätze ausgegeben, deren erstes und zweites Zeichen im Zwischenindex dem ersten und zweiten Zeichen im Suchbegriff entsprechen.
Der Benutzer gibt drei Zeichen ein. Es werden alle Datensätze ausgegeben, deren erstes, zweites und drittes Zeichen im Zwischenindex dem ersten, zweiten und dritten Zeichen im Suchbegriff entsprechen.
Der Benutzer gibt mehr als drei Zeichen ein. Dieser Fall ist im Ausführungsbeispiel erläutert worden. Hier werden alle Einträge gefiltert, deren erstes, zweites und drittes Zeichen im Zwischenindex dem ersten, zweiten und dritten Zeichen im Suchbegriff entsprechen und die in der kompletten Wortlänge des Suchbegriffes mit dem Stichwort der entsprechenden Eintragsindexzeilen übereinstimmen.

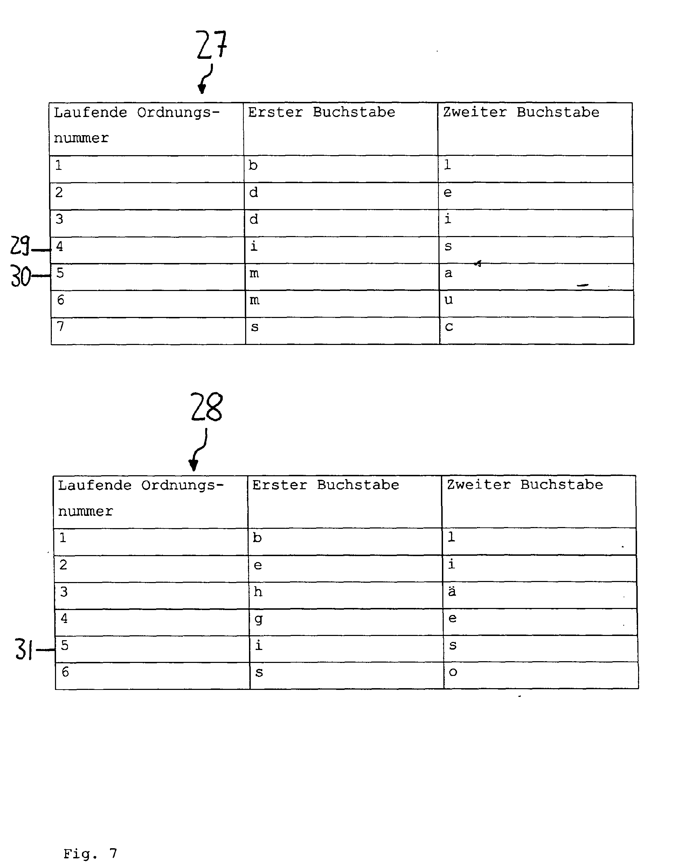

Figur 7 zeigt einen ersten Volltext-Zwischenindex 27 und einen zweiten Volltext-Zwischenindex 28 gemäß einem zweiten Ausführungsbeispiel.

Der erste Volltext-Zwischenindex 27 ist aus der ersten Datentabelle 8 gebildet. Auf den ersten Volltext-Zwischenindex 27 wird beim Auslesen von Daten aus der ersten Datentabelle 8 zugegriffen.

Der zweite Volltext-Zwischenindex 28 ist aus der zweiten Datentabelle 9 gebildet. Auf den zweiten Volltext-Zwischenindex 28 wird beim Auslesen von Daten aus der zweiten Datentabelle 9 zugegriffen. Zu jeder Datentabelle/ zu jedem Eintragsindex ist genau ein entsprechender Volltext-Zwischenindex vorgesehen.

Der erste Volltext-Zwischenindex 27, der zweite Volltext-Zwischenindex 28 und alle weiteren Volltext-Zwischenindizes sind für eine Volltextsuchfunktion vorgesehen und weisen je eine Vielzahl von Volltext-Zwischenindexzeilen auf.

Der Volltext-Zwischenindex gliedert sich in eine Spalte mit der laufenden Ordnungsnummer, in eine Spalte "Erster Buchstabe" und in eine Spalte "Zweiter Buchstabe".

Die Spalte mit der laufenden Ordnungsnummer der Volltext-Zwischenindexzeilen ist hier zur besseren Veranschaulichung dargestellt. Sie wird vorteilhafterweise nicht mit abgespeichert, sondern vom Dateisystem des Computersystems 1 bereitgestellt.

Der erste Volltext-Zwischenindex 27, der zweite Volltext-Zwischenindex 28 und alle weiteren Volltext-Zwischenindizes enthalten die ersten zwei Buchstaben sämtlicher Volltext-Wörter, die in den Datensätzen der den Volltext-Zwischenindizes zugehörigen Datentabellen enthalten sind. Die einzelnen Volltext-Zwischenindexzeilen sind vorzugsweise so angeordnet, daß die zwei Anfangsbuchstaben aller im Volltext-Zwischenindex enthaltenen Volltext-Wörter sowie die zugrundeliegenden Volltext-Wörter alphabetisch aufsteigend sortiert vorliegen.

Zu jedem Volltext-Wort ist eine Zeile im entsprechenden Volltext-Zwischenindex vorgesehen. Gleiche Volltext-Wörter werden in einer Volltext-Zwischenindexzeile dargestellt. Eine mehrfache Darstellung von gleichen Volltext-Wörtern im Volltext-Zwischenindex erfolgt nicht. Satzzeichen sind nicht in den in der Liste des Volltext-Wortindexes dargestellten Teilen der Volltext-Wörter enthalten.

Die ersten zwei Buchstaben der Volltext-Wörter weisen je einen Speicherraum von 1 Byte = 8 Bit auf. Pro im Volltext-Zwischenindex dargestelltem Volltext-Wort werden nur zwei Bytes Speicherplatz benötigt. Der Volltext-Zwischenindex ist im Arbeitsspeicher RAM 7 gebildet und abgelegt.

Nachfolgend sind eine erste Volltext-Zwischenindexzeile 29, eine zweite Volltext-Zwischenindexzeile 30 und eine dritte Volltext-Zwischenindexzeile 31 gemäß des Ausführungsbeispiels in Figur 7 veranschaulicht.

Die erste Volltext-Zwischenindexzeile 29 befindet sich im ersten Volltext-Zwischenindex 27 an der laufenden Ordnungsnummer "4", weist den ersten Buchstaben "i" und den zweiten Buchstaben "s" auf. Dementsprechend beinhaltet die erste Volltext-Zwischenindexzeile 29 ein Volltext-Wort, welches mit den ersten zwei Buchstaben "is" beginnt.

Die zweite Volltext-Zwischenindexzeile 30 befindet sich im ersten Volltext-Zwischenindex 27 an der laufenden Ordnungsnummer "5" und weist die ersten zwei Buchstaben "ma" auf. Demzufolge beinhaltet die zweite Volltext-Zwischenindexzeile 30 ein Volltext-Wort, welches mit den Buchstaben "ma" beginnt.

Die dritte Volltext-Zwischenindexzeile 31 befindet sich im zweiten Volltext-Zwischenindex 28 an der laufenden Ordnungsnummer 5, und sie weist die ersten zwei Buchstaben "is" auf. Dementsprechend beinhaltet sie ein Volltext-Wort, welches mit den Buchstaben "is" beginnt.

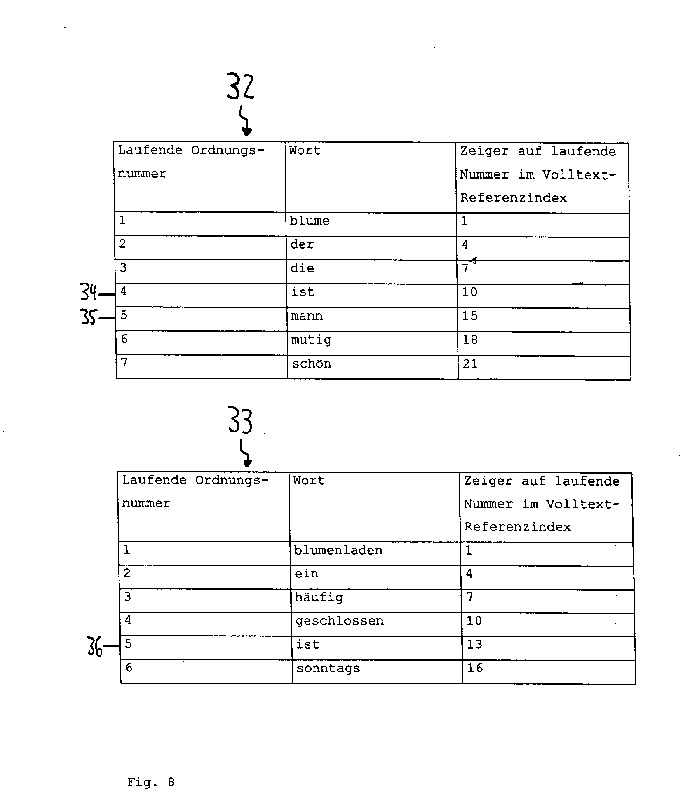

Figur 8 zeigt einen ersten Volltext-Wortindex 32 zur ersten Datentabelle 8 und einen zweiten Volltext-Wortindex 33 zur zweiten Datentabelle 9 gemäß dem zweiten Ausführungsbeispiel.

Auf den ersten Volltext-Wortindex 32, auf den zweiten Volltext-Wortindex 33 und auf alle weiteren Volltext-Wortindizes wird beim Auslesen von Daten aus den Datentabellen im Rahmen der Volltextsuchfunktion zugegriffen.

Jeder Volltext-Zwischenindex bezieht sich auf genau einen entsprechenden Volltext-Wortindex. Dementsprechend ist zu jeder Datentabelle/zu jedem Eintragsindex genau ein zugehöriger Volltext-Wortindex vorgesehen.

Der erste Volltext-Wortindex 32, der zweite Volltext-Wortindex 33 und alle weiteren Volltext-Wortindizes weisen eine Vielzahl von Volltext-Wortindexzeilen auf.

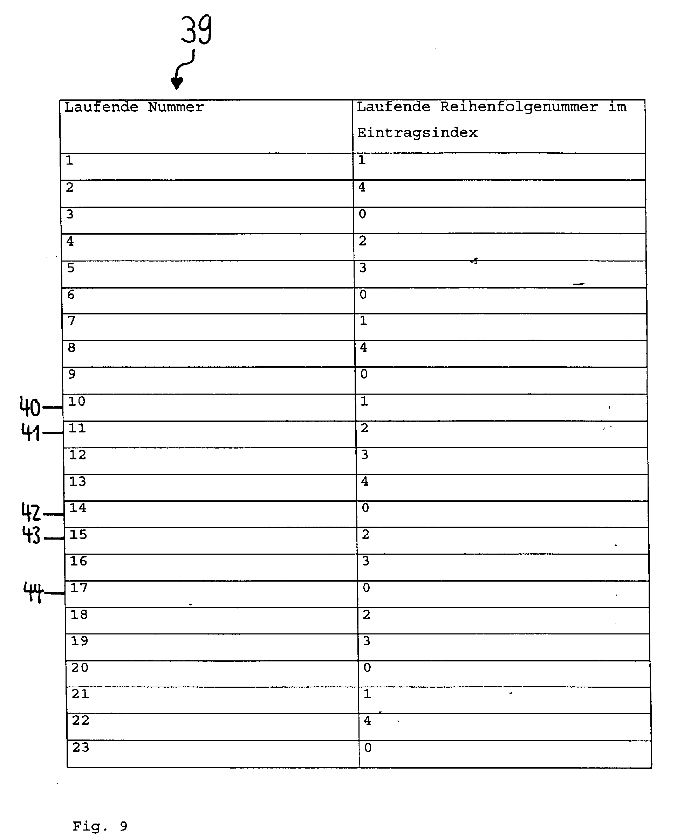

Der erste Volltext-Wortindex 32, der zweite Volltext-Wortindex 33 und alle weiteren Volltext-Wortindizes gliedern sich in je eine Spalte mit einer laufenden Ordnungsnummer, in je eine Spalte mit einer alphabetisch aufsteigend sortierten Liste von Volltext-Wörtern, die in den Datensätzen der dem Volltext-Wortindex entsprechenden Datentabelle enthalten sind, und in je eine Spalte mit einem Zeiger auf einen in Figur 9 gezeigten Volltext-Referenzindex.

Die laufende Ordnungsnummer des Volltext-Wortindexes ist identisch mit der laufenden Ordnungsnummer des dem jeweiligen Volltext-Wortindex zugehörigen Volltext-Zwischenindexes. Zeilen mit der gleichen laufenden Ordnungsnummer im Volltext-Zwischenindex und im Volltext-Wortindex betreffen dasselbe Volltext-Wort und denselben Datensatz aus derselben Datentabelle/aus demselben Eintragsindex. Die erste Spalte "Laufende Ordnungsnummer" ist zur besseren Übersicht aufgelistet. Sie wird vorteilhafterweise nicht mit abgespeichert, sondern vom Dateisystem des Computersystems 1 bereitgestellt.

Die zweite Spalte des Volltext-Wortindexes enthält eine vorzugsweise alphabetisch sortierte Liste von Volltext-Wörtern.

Identische Volltext-Wörter sind im Volltext-Wortindex in einer Volltext-Wortindexzeile zusammengefaßt dargestellt. Eine Darstellung von Satzzeichen im Volltext-Wortindex ist nicht vorgesehen.

Sehr häufig vorkommende Wörter, sogenannte Stop-Wörter, wie "der", "die", "das", "nicht", "aber" etc. werden bei großen Datenmengen von der erfindungsgemäßen Datenbank nicht in der alphabetisch sortierten Volltext-Wortliste des Volltext-Wortindexes dargestellt.

Jedem Wort im Volltext-Wortindex ist genau ein entsprechender Zeiger auf eine laufende Reihenfolgenummer innerhalb des dem Volltext-Wortindexes entsprechenden Volltext-Referenzindexes zugeordnet, der in Figur 9 gezeigt ist.

Der Speicherraum pro Volltext-Wort im Volltext-Wortindex ist im Ausführungsbeispiel auf 30 Zeichen = 30 Bytes festgelegt. Der Zeiger auf den Volltext-Referenzindex beansprucht einen Speicherraum von 4 Bytes. Somit beläuft sich der gesamte Speicherraum pro Volltext-Wortindexzeile auf 34 Bytes. Die Erfindung kann auch mit einem anderen Speicherraum pro Volltext-Wortindexzeile vorgesehen werden.

Der Volltext-Wortindex ist auf der Festplatte 6 oder auf dem CD/DVD-ROM-Laufwerk 5 abgelegt.

Im Ausführungsbeispiel gemäß Figur 8 ist der erste Volltext-Wortindex 32 zur ersten Datentabelle 8 anhand von sieben Zeilen veranschaulicht, der zweite Volltext-Wortindex 33 zur zweiten Datentabelle 9 ist anhand von sechs Zeilen veranschaulicht.

Nachfolgend sind eine erste Volltext-Wortindexzeile 34, eine zweite Volltext-Wortindexzeile 35 und eine dritte Volltext-Wortindexzeile 36 erläutert.

Die erste Volltext-Wortindexzeile 34 befindet sich im ersten Volltext-Wortindex 32 zur ersten Datentabelle 8 an der Position mit der laufenden Ordnungsnummer "4", und sie weist das Volltext-Wort "ist" auf. Der ersten Volltext-Wortindexzeile 34 ist der Zeiger auf die laufende Nummer "10" in einem entsprechenden in Figur 9 dargestellten ersten Volltext-Referenzindex 39 zugeordnet.

Die zweite Volltext-Wortindexzeile 35, die sich im ersten Volltext-Wortindex 32 an der Position der laufenden Ordnungsnummer "5" befindet, weist das Volltext-Wort "mann" auf. Die zweite Volltext-Wortindexzeile 35 verweist auf die laufende Nummer "15" im entsprechenden in Figur 9 dargestellten ersten Volltext-Referenzindex 39.

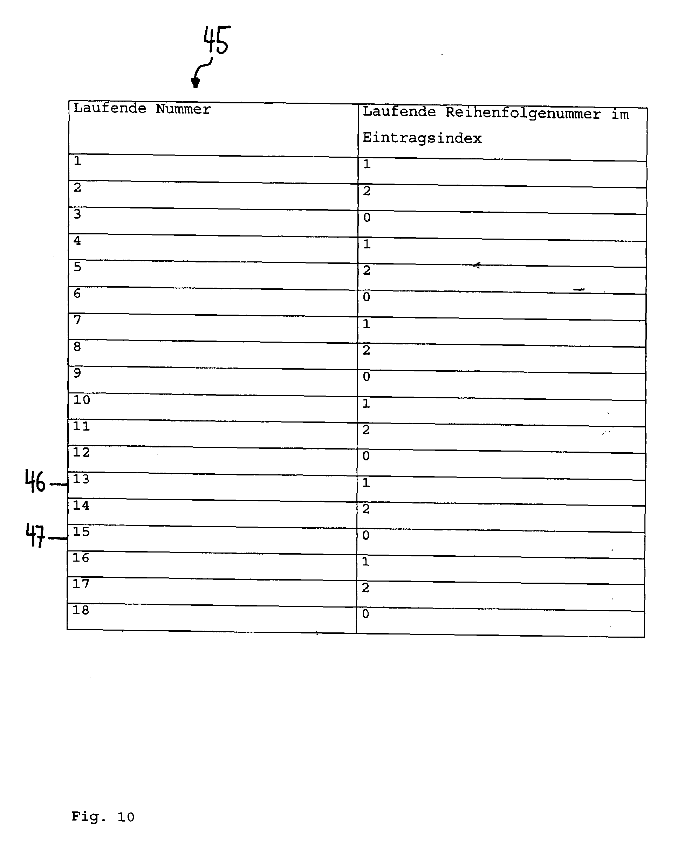

Die dritte Volltext-Wortindexzeile 36 nimmt im zweiten Volltext-Wortindex 33 zur zweiten Datentabelle 9 die laufende Ordnungsnummer "5" ein. Die dritte Volltext-Wortindexzeile 36 weist das Volltext-Wort "ist" auf, und sie verweist auf die laufende Nummer "13" in einem entsprechenden in Figur 10 dargestellten zweiten Volltext-Referenzindex 45.

Figur 9 zeigt einen ersten Volltext-Referenzindex 39 zur ersten Datentabelle 8 gemäß dem zweiten Ausführungsbeispiel, auf den beim Auslesen von Daten aus der ersten Datentabelle 8 im Rahmen der Volltextsuche zugegriffen wird.

Jeder Volltext-Referenzindex entspricht einem Volltext-Wortindex. Demzufolge ist zu jeder Datentabelle/zu jedem Eintragsindex genau ein entsprechender Volltext-Referenzindex vorhanden.

Der Volltext-Referenzindex gliedert sich in eine Spalte "Laufende Nummer" und in eine Spalte "Laufende Reihenfolgenummer im Eintragsindex". Die Spalte "Laufende Nummer" wird vom Dateisystem gestellt und ist hier zur Veranschaulichung aufgeführt.

In der ersten Spalte jeder Volltext-Referenzindexzeile befinden sich die laufenden Nummern, auf die Zeiger in der Spalte "Zeiger auf laufende Nummer im Volltext-Referenzindex" des entsprechenden Volltext-Wortindexes abgelegt sind.

In der zweiten Spalte jeder Volltext-Referenzindexzeile ist jeder laufenden Nummer genau eine Zahl zugeordnet.

Ist diese Zahl positiv, stellt sie einen Zeiger auf genau eine der Volltext-Referenzindexzeile entsprechende Eintragsindexzeile im ersten Eintragsindex 13 dar. Diese jeweilige Eintragsindexzeile verweist auf den Datensatz in der entsprechenden Datentabelle, in dem das gesuchte Volltext-Wort enthalten ist.

Ist diese Zahl Null, stellt sie eine Abschlußmarke dar, und sie verweist nicht auf eine Eintragsindexzeile. Die Rechenund Speichereinheit 4 erkennt, wenn es die Zahl Null liest, daß die Referenzen zu einem bestimmten Volltext-Wort beendet sind und daß die Referenzen zum nächsten Volltext-Wort beginnen.

Alle Zeiger auf eine Eintragsindexzeile, deren entsprechender Datensatz ein bestimmtes Volltext-Wort enthält, sind in dem Volltext-Referenzindex direkt untereinander angeordnet. Zeiger, die unterschiedlichen Volltext-Wörtern entsprechen, sind mittels der Abschlußmarke Null voneinander getrennt.

Der Zeiger auf die laufende Reihenfolgenummer des Eintragsindexes nimmt 4 Byte Speicherplatz ein. Somit beläuft sich der gesamte Speicherraum pro Volltext-Referenzindexzeile auf 4 Bytes.

Der Volltext-Referenzindex ist auf dem CD/DVD-ROM-Laufwerk 5 oder auf der Festplatte 6 abgelegt.

Nachfolgend sind eine erste Volltext-Referenzindexzeile 40, eine zweite Volltext-Referenzindexzeile 41, eine dritte Volltext-Referenzindexzeile 42, eine vierte Volltext-Referenzindexzeile 43 und eine fünfte Volltext-Referenzindexzeile 44 erläutert.

Die erste Volltext-Referenzindexzeile 40, welche die laufende Nummer "10" aufweist, wird von der ersten Volltext-Wortindexzeile 34 des zugehörigen ersten Volltext-Wortindexes 32 aufgerufen.

Die erste Volltext-Referenzindexzeile 40 weist in der Spalte "Laufende Reihenfolgenummer im Eintragsindex" eine Zahl "1" auf, womit der ersten Volltext-Referenzindex-zeile 40 die laufende Reihenfolgenummer "1" im zugehörigen ersten Eintragsindex 13 zugeordnet ist. Dies ist die erste Eintragsindexzeile 15, die das Stichwort "Blume" enthält und dem ersten Datensatz 10 "Die Blume ist schön." zugeordnet ist.

In der zweiten Volltext-Referenzindexzeile 41 ist der laufenden Nummer "11" des ersten Volltext-Referenzindexes 39 die laufende Reihenfolgenummer "2" im ersten Eintragsindex 13 zugeordnet. Somit ist der zweiten Volltext-Referenzindexzeile 41 die zweite Eintragsindexzeile 16 zugeordnet, die das Stichwort "Mann" enthält und auf den zweiten Datensatz 11 "Der Mann ist mutig." verweist.

Die dritte Volltext-Referenzindexzeile 42 weist in der Spalte "Laufende Nummer" eine Zahl "14" und in der Spalte "Laufende Reihenfolgenummer im Eintragsindex" eine Zahl "0" auf. Somit ist in der dritten Volltext-Referenzindexzeile 42 die Abschlußmarke enthalten. Der dritten Volltext-Referenzindexzeile 42 ist keine Eintragsindexzeile zugeordnet.

Demzufolge zeigt die dritte Volltext-Referenzindexzeile 42 an, daß die Zeiger auf die laufende Reihenfolgenummer im Eintragsindex zum Volltext-Wort "ist" beendet sind und eine Gruppe von Zeigern beginnt, die sich auf ein anderes Volltext-Wort bezieht.

Die vierte Volltext-Referenzindexzeile 43 wird von der zweiten Volltext-Wortindexzeile 35 des ersten Volltext-Wortindexes 32 aufgerufen. Die vierte Volltext-Referenzindexzeile 43 weist in der Spalte "Laufende Nummer" eine Zahl "15" und in der Spalte "Laufende Reihenfolgenummer im Eintragsindex" eine Zahl "2" auf. Somit ist der vierten Volltext-Referenzindexzeile 43 die zweite Eintragsindexzeile 16 im ersten Eintragsindex 13 zugeordnet, die das Stichwort "Mann" enthält und auf den zweiten Datensatz 11 "Der Mann ist mutig." verweist.

Die fünfte Volltext-Referenzindexzeile 44 weist in der Spalte "Laufende Nummer" eine Zahl "17" und in der Spalte "Laufende Reihenfolgenummer im Eintragsindex" eine Zahl "0" auf. Somit ist in der fünften Volltext-Referenzindexzeile 44 die Abschlußmarke enthalten.

Figur 10 zeigt einen zweiten Volltext-Referenzindex 45 zur zweiten Datentabelle 9 gemäß dem zweiten Ausführungsbeispiel, auf den beim Auslesen von Daten aus der zweiten Datentabelle 9 im Rahmen der Volltextsuche zugegriffen wird.

Der Aufbau des zweiten Volltext-Referenzindex 45 zur zweiten Datentabelle 9 entspricht dem Aufbau des ersten Volltext-Referenzindexes 39 gemäß dem Ausführungsbeispiel in Figur 9.

Nachfolgend sind eine sechste Volltext-Referenzindexzeile 46 und eine siebte Volltext-Referenzindexzeile 47 erläutert.

In der sechsten Volltext-Referenzindexzeile 46 ist der laufenden Nummer "13" des zweiten Volltext-Referenzindexes 45 die laufende Reihenfolgenummer "1" im zweiten Eintragsindex 14 zugeordnet. Es handelt sich um die dritte Eintragsindexzeile 17, die das Stichwort "Blume" enthält und auf den dritten Datensatz 12 "Ein Blumenladen ist sonntags häufig geschlossen." verweist.

Die siebte Volltext-Referenzindexzeile 47 weist in der Spalte "Laufende Nummer" eine Zahl "15" und in der Spalte "Laufende Reihenfolgenummer im Eintragsindex" eine Zahl "0" auf. Somit enthält die siebte Volltext-Referenzindexzeile 47 die Abschlußmarke.

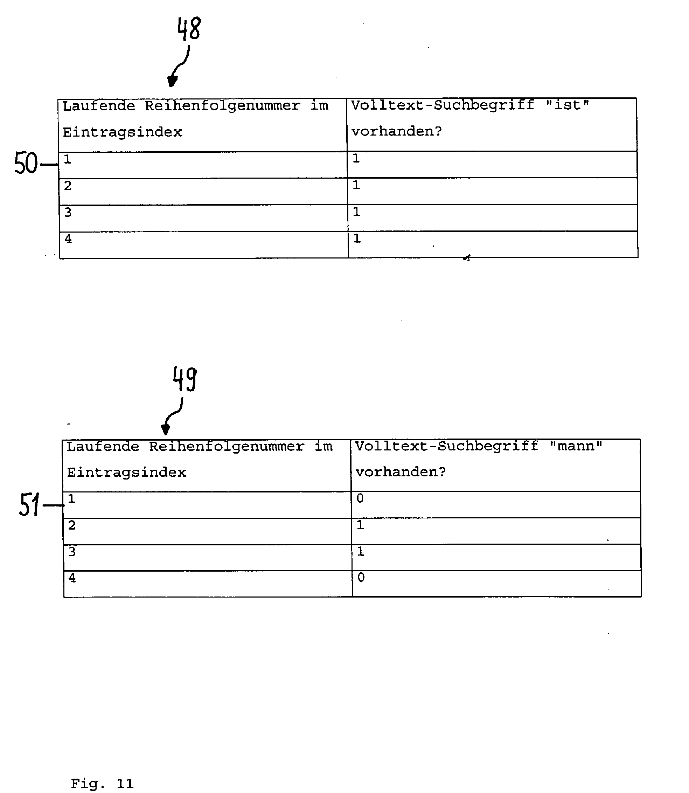

Figur 11 zeigt einen ersten Volltext-Filterindex 48 und einen zweiten Volltext-Filterindex 49 zur ersten Datentabelle 8 gemäß dem zweiten Ausführungsbeispiel.

Auf diese zwei Volltext-Filterindizes wird beim Auslesen von Daten aus den Datentabellen im Rahmen der Volltextsuchfunktion zugegriffen. Jeder Volltext-Filter-index weist mindestens eine Volltext-Filterindexzeile auf. Die Anzahl der Volltext-Filterindexzeilen im Volltext-Filterindex entspricht der Anzahl der Eintragsindexzeilen im zugehörigen Eintragsindex. Zu jedem Volltext-Suchbegriff ist je ein Volltext-Filterindex pro Datentabelle vorgesehen.

Die Volltext-Filterindizes gliedern sich in eine erste Spalte "Laufende Reihenfolgenummer im Eintragsindex" und in eine zweite Spalte "Volltext-Wort vorhanden?", die einen Null/Eins-Wert enthält. Die erste Spalte "Laufende Reihenfolgenummer im Eintragsindex" der Volltext-Filterindizes existiert nicht wirklich, die laufende Reihenfolgenummer ergibt sich aus der Zeilenposition.

Die Position des entsprechenden Datensatzes in dem zugehörigen Eintragsindex/in der zugeordneten Datentabelle ist durch die laufende Reihenfolgenummer im dem Volltext-Filterindex entsprechenden Eintragsindex bestimmt. Durch den Null-/Eins-Wert ist angezeigt, ob das Volltext-Wort in dem der Datentabelle entsprechendem Eintragsindex enthalten ist oder nicht.

Eine Zahl Eins gibt an, daß das betrachtete Volltext-Wort in dem der Eintragsindexzeile entsprechenden Datensatz vorhanden ist. Eine Zahl Null gibt an, daß das betrachtete Volltext-Wort in dem der Eintragsindexzeile entsprechenden Datensatz nicht enthalten ist. Der Null-/Eins-Wert nimmt einen Speicherraum von 1 Bit ein. Somit beläuft sich der Speicherraum pro Volltext-Filterindexzeile auf 1 Bit.

Der Volltext-Filterindex ist auf dem Arbeitsspeicher RAM 7 abgelegt.

Der erste Volltext-Filterindex 48 und der zweite Volltext-Filterindex 49 beziehen sich auf die erste Datentabelle 8/den ersten Eintragsindex 13. Im ersten Volltext-Filterindex 48 wird geprüft, in welchen Datensätzen der ersten Datentabelle 8 das Volltext-Wort "ist" vorhanden ist, im zweiten Volltext-Filterindex 49 wird geprüft, in welchen Datensätzen der ersten Datentabelle 8 das Volltext-Wort "mann" enthalten ist.

Nachfolgend sind eine erste Volltext-Filterindexzeile 50 und eine zweite Volltext-Filterindexzeile 51 erläutert.

Die erste Volltext-Filterindexzeile 50 des ersten Volltext-Filterindexes 48 weist in der Spalte "Laufende Reihenfolgenummer im Eintragsindex" eine Zahl "1" und in der zweiten Spalte "Volltext-Wort "ist" vorhanden?" einen Wert "1" auf. Somit enthält die erste Volltext-Filterindexzeile 50 die Information, daß der Datensatz, auf den die erste Eintragsindexzeile 15 des ersten Eintragsindexes 13 verweist, den Suchbegriff "ist" enthält. Es handelt sich um den ersten Datensatz 10 "Die Blume ist schön.".

Die zweite Volltext-Filterindexzeile 51 des zweiten Volltext-Filterindexes 49 weist in der Spalte "Laufende Reihenfolgenummer im Eintragsindex" eine Zahl "1" und in der zweiten Spalte "Volltext-Wort "ist" vorhanden?" einen Wert "0" auf. Somit enthält die zweite Volltext-Filterindexzeile 51 die Information, daß der Datensatz, auf den die erste Eintragsindexzeile 15 des ersten Eintragsindexes 13 verweist, den Suchbegriff "mann" nicht enthält. Dies ist der erste Datensatz 10 "Die Blume ist schön.".

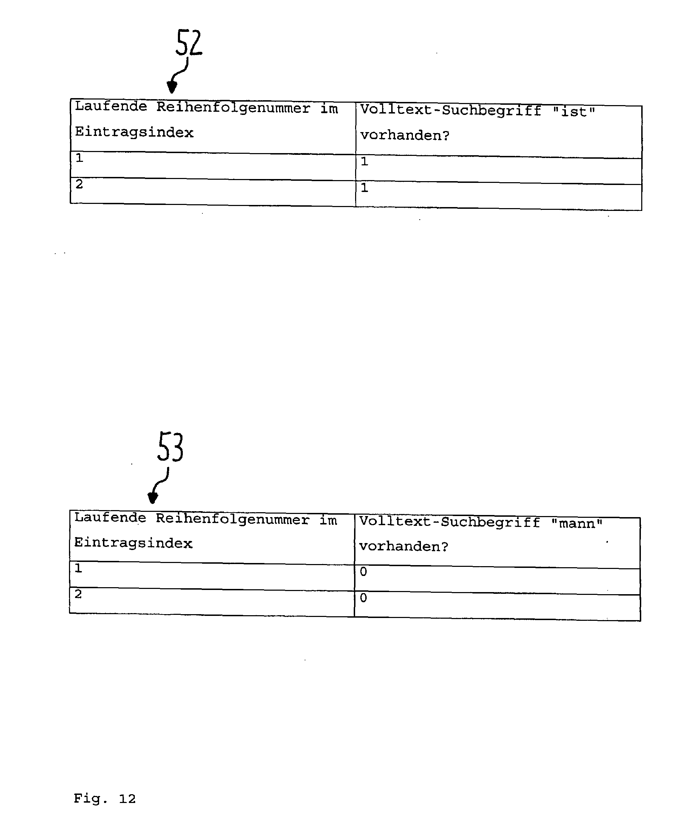

Figur 12 zeigt einen dritten Volltext-Filterindex 52 und einen vierten Volltext-Filterindex 53 zur zweiten Datentabelle 9 gemäß dem zweiten Ausführungsbeispiel.

Der dritte Volltext-Filterindex 52 und der vierte Volltext-Filterindex 53 entsprechen im Aufbau dem ersten Volltext-Filterindex 48 und dem zweiten Volltext-Filterindex 49

Der dritte Volltext-Filterindex 52 und der vierte Volltext-Filterindex 53 beziehen sich auf die zweite Datentabelle 9/den zweiten Eintragsindex 14.

Im dritten Volltext-Filterindex 52 wird geprüft, in welchen Datensätzen der zweiten Datentabelle 9 das Volltext-Wort "ist" vorhanden ist. Im vierten Volltext-Filterindex 53 wird geprüft, in welchen Datensätzen der zweiten Datentabelle 9 das Volltext-Wort "mann" vorhanden ist.

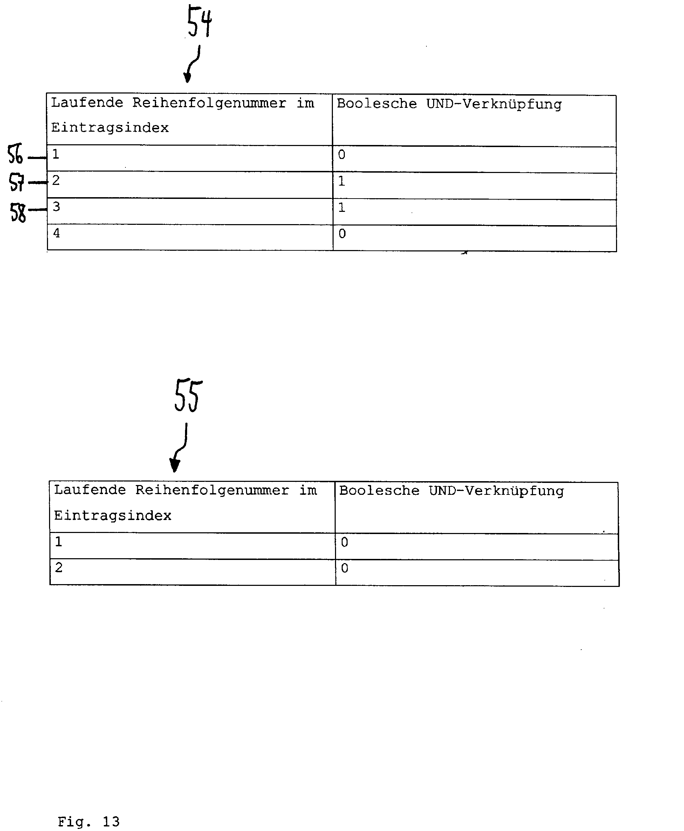

Figur 13 zeigt eine erste Verknüpfungstabelle 54 und eine zweite Verknüpfungstabelle 55 gemäß dem zweiten Ausführungsbeispiel.

Auf die Verknüpfungstabellen wird beim Auslesen von Daten aus den Datentabellen im Rahmen der Volltextsuchfunktion zugegriffen. Jede Verknüpfungstabelle entspricht genau einem Eintragsindex/einer Datentabelle.

Jede Verknüpfungstabelle weist mindestens eine Verknüpfungstabellenzeile auf. Die Anzahl der Verknüpfungstabellenzeilen in der Verknüpfungstabelle entspricht der Anzahl der Eintragsindexzeilen im zugehörigen Eintragsindex.

Die Verknüpfungstabellen gliedern sich in je eine Spalte "Laufende Reihenfolgenummer im Eintragsindex" und in je eine Spalte "Boolesche Verknüpfung", die eine logische UND-Verknüpfung der Null-/Eins-Werte aus den Volltext-Filterindizes enthält. Die erste Spalte "Laufende Reihenfolgenummer im Eintragsindex" der Verknüpfungstabellen existiert nicht wirklich, die laufende Reihenfolgenummer ergibt sich aus der Zeilenposition.

Durch die laufende Reihenfolgenummer im Eintragsindex ist die Position des entsprechenden Datensatzes in der zugeordneten Datentabelle bestimmt.

Die Null-/Eins-Werte der Felder der Spalten "Volltext-Suchbegriff vorhanden" der zugehörigen Volltext-Filterindizes werden verknüpft und in das entsprechende Feld der Spalte "Boolesche UND-Verknüpfung" der Verknüpfungstabelle eingetragen.

Diese so ermittelten Null-/Eins-Werte stellen eine Information darüber bereit, ob die jeweiligen Volltext-Suchbegriffe in dem jeweiligen Datensatz beider Datentabelle gefunden wurden oder nicht. Die Zahl Eins sagt aus, daß die Suchbegriffe in beiden Datensätzen enthalten sind, und die Zahl Null besagt, daß die Suchbegriffe entweder in dem Datensatz nicht enthalten sind oder nur in dem Datensatz einer Datentabelle enthalten sind.

In der letzten Spalte der Verknüpfungstabelle ist das Ergebnis der logischen Verknüpfung der Volltext-Suchbegriffe enthalten, die vom Benutzer bei der Volltextsuchfunktion definiert wird. Die Verknüpfung wird durch Booleschen Operatoren ausgedrückt. Mögliche Boolesche Operatoren sind "UND", "ODER", "UND NICHT".

Vorab sind alle Werte der Verknüpfungsspalten auf Null gesetzt. Nun wird für jede Zeile der Verknüpfungstabelle eine logische Verknüpfung der Null- und Eins-Werte aus den Spalten der jeweiligen Volltext-Filterindexe gebildet.

Als Ergebnis der Verknüpfung wird entweder eine Zahl Null oder eine Zahl Eins in der Spalte "Boolesche Verknüpfung" eingetragen. Dementsprechend wird in der Spalte "Boolesche Verknüpfung" festgelegt, welche Datensätze als Ergebnis der Volltextsuchfunktion auszugeben sind. Genau diejenigen Verknüpfungstabellenzeilen, die in der Spalte "Booleschen Verknüpfung" eine Zahl "1" aufweisen, werden als Ergebnis der Volltextsuchfunktion ausgegeben.

Der Speicherbedarf der Verknüpfungstabelle beträgt im Ausführungsbeispiel 1 Bit pro Verknüpfungstabellenzeile.

Die erste Verknüpfungstabelle 54 gliedert sich in eine Spalte "Laufende Reihenfolgenummer im Eintragsindex" und in eine Spalte "Boolesche UND-Verknüpfung". Die erste Verknüpfungstabelle 54 weist insgesamt vier Verknüpfungstabellenzeilen auf und entspricht der ersten Datentabelle 8/dem ersten Eintragsindex 13.

Nachfolgend sind eine erste Verknüpfungstabellenzeile 56, eine zweite Verknüpfungstabellenzeile 57 und eine dritte Verknüpfungstabellenzeile 58 der ersten Verknüpfungstabelle 54 erläutert.

Die erste Verknüpfungstabellenzeile 56 der ersten Verknüpfungstabelle 54 enthält in der Spalte "Laufende Reihenfolgenummer im Eintragsindex" eine Zahl "1". Der Wert "0" in der Spalte "Boolesche UND-Verknüpfung" besagt, daß die erste Verknüpfungstabellenzeile 56 kein Element der Ergebnismenge der Volltextsuche gemäß dem Ausführungsbeispiel darstellt.

Die zweite Verknüpfungstabellenzeile 57 mit der laufenden Reihenfolgenummer "2" und die dritte Verknüpfungstabellenzeile 58 mit der laufenden Reihenfolgenummer "3" weisen in der Spalte "Boolesche UND-Verknüpfung" eine Zahl "1" auf. Somit stellen die zweite Verknüpfungstabellenzeile 57 und die dritte Verknüpfungstabellenzeile 58 Elemente der Ergebnismenge der Volltextsuche gemäß dem Ausführungsbeispiel dar.

Das Vorgehen bei der Volltextsuche in der erfindungsgemäßen Datenbank wird nachfolgend erläutert.

Bei einer Volltextsuche werden die vom Benutzer eingegebenen Volltext-Suchbegriffe über alle Datensätze sämtlicher Datentabellen gesucht.

Bei einer Volltextsuche gibt ein Benutzer ein oder mehrere Volltext-Suchbegriffe über das Eingabemedium 2 in die Rechenund Speichereinheit 4 des Computersystems 1 ein, wobei mehrere Volltext-Suchbegriffe mit Booleschen Operatoren verknüpft werden können. Danach startet der Benutzer die Volltext-Suchfunktion des Datenbankprogramms.

Zur Verdeutlichung des Ablaufs wird gemäß dem Ausführungsbeispiel eine Volltextsuche nach "ist UND Mann" durchgeführt. Dementsprechend sollen genau diejenigen Datensätze als Suchergebnis angezeigt werden, in deren Eintragstexten sowohl der Volltext-Suchbegriff "ist" als auch der Volltext-Suchbegriff "Mann" enthalten ist.

Die Volltext-Suchfunktion geht schrittweise vor. Zuerst wird der erste Volltext-Suchbegriff in der Datenbank gesucht, danach wird der zweite Volltext-Suchbegriff in der Datenbank gesucht, und anschließend werden die beiden ermittelten Suchergebnisse miteinander verknüpft.

Beim Starten der Volltextsuche der erfindungsgemäßen Datenbank des Computersystems 1 wird auf einen ersten Volltext-Zwischenindex 27 zu der ersten Datentabelle 8 und auf einen zweiten Volltext-Zwischenindex 28 aus der zweiten Datentabelle 9 zugegriffen, die vorab im Arbeitsspeicher RAM 7 erzeugt wurden.

Danach werden die Inhalte eines etwaigen bestehenden ersten Volltext-Filterindexes, eines etwaigen bestehenden zweiten Volltext-Filterindexes und etwaiger weiterer Volltext-Filterindizes gelöscht. Sämtliche Werte in den Spalten "Volltext-Wort vorhanden?" aller Volltext-Filterindizes werden auf Null gesetzt.

Die Volltext-Suchfunktion startet mit der Suche nach dem ersten Volltext-Suchbegriff "ist" in der ersten Datentabelle 8 und den Volltext-Zwischenindizes, den Volltext-Wortindizes und den Eintragsindizes, die aus dieser ersten Datentabelle 8 bildbar sind.

Zunächst werden die ersten zwei Buchstaben des ersten Volltext-Suchbegriffs mit sämtlichen in den Zwischenindexzeilen enthaltenen ersten zwei Buchstaben der Volltext-Wörter verglichen, wobei die Zwischenindexzeilen von der Rechen- und Speichereinheit 4 gemerkt werden, die Übereinstimmungen aufweisen.

Im Ausführungsbeispiel gemäß Figur 7 werden im ersten Volltext-Zwischenindex 27 der ersten Datentabelle 8 alle Volltext-Zwischenindexzeilen gesucht, bei denen die ersten zwei Buchstaben der Volltext-Wörter mit den ersten zwei Buchstaben des ersten Volltext-Suchbegriffs "ist" übereinstimmen.

An der laufenden Ordnungsnummer "4" des ersten Volltext-Zwischenindexes 27 wird eine Zwischenindexzeile gefunden, deren erster Buchstabe ein "i" und deren zweiter Buchstabe ein "s" aufweist. Es handelt sich um die erste Volltext-Zwischenindexzeile 29 des ersten Volltext-Zwischenindexes 27.

Die laufende Ordnungsnummer dieser ersten Volltext-Zwischenindexzeile 29 im ersten Volltext-Zwischenindex 27 wird von der Rechen- und Speichereinheit 4 des Computersystems 1 gemerkt.

Genau diejenigen Volltext-Wortindexzeilen der den Volltext-Zwischenindizes entsprechenden Volltext-Wortindizes werden in den Arbeitsspeicher RAM 7 geladen, die den von der Rechen- und Speichereinheit 4 des Computersystems 1 gemerkten Volltext-Zwischenindexzeilen entsprechen.

Es erfolgt eine Überprüfung des Volltext-Suchbegriffs mit den Volltext-Wörtern, die in den entsprechenden Volltext-Wortindexzeilen enthalten sind, und zwar in voller Wortlänge. Bei denjenigen Volltext-Wortindexzeilen, in denen der Volltext-Suchbegriff mit den in den jeweiligen Volltext-Wortindexzeilen enthaltenen Volltext-Wörtern übereinstimmt, wird ein dem jeweiligen Volltext-Wortindex entsprechender Volltext-Referenzindex durch einen in der Volltext-Wortindexzeile enthaltenen Zeiger auf die laufende Nummer im Volltext-Referenzindex aufgerufen. Falls die verglichenen Wörter nicht miteinander übereinstimmen, erfolgt kein Aufruf des entsprechenden Volltext-Referenzindexes.

Im Ausführungsbeispiel gemäß Figur 8 wird die erste Volltext-Wortindexzeile 34 des ersten Volltext-Wortindexes 32 in den Arbeitsspeicher RAM 7 geladen, da sie die gleichen laufenden Ordnungsnummern aufweist wie die erste Volltext-Zwischenindexzeile 29.

Im vorliegenden Ausführungsbeispiel gemäß Figur 8 stimmt der erste Volltext-Suchbegriff "ist" mit dem in der ersten Volltext-Wortindexzeile 34 enthaltenen Volltext-Wort "ist" überein.

Dementsprechend wird durch die in den einzelnen Volltext-Wortindexzeilen enthaltenen Zeiger auf den zugehörigen Volltext-Referenzindex von jeder Volltext-Wortindexzeile genau eine zugehörige Volltext-Referenzindexzeile aufgerufen.

Von der ersten Volltext-Wortindexzeile 34 des ersten Volltext-Wortindexes 33 wird die Volltext-Referenzindexzeile mit der laufenden Nummer "10" im zugehörigen ersten Volltext-Referenzindex 39 gemäß Figur 9 aufgerufen. Es handelt sich um die erste Volltext-Referenzindexzeile 40. Diese beinhaltet die laufende Reihenfolgenummer "1" im ersten Eintragsindex 13.

Ausgehend von der ersten Volltext-Referenzindexzeile 40 wird nun der erste Volltext-Referenzindex 39 zeilenweise nach unten durchlaufen, bis die Abschlußmarke Null gefunden wird. Alle bis zum Erscheinen der Zahl Null gelesenen Werte für die laufende Reihenfolgenummer im Eintragsindex werden von der Rechen- und Speichereinheit 4 des Computersystems 1 gemerkt.

In der zweiten Volltext-Referenzindexzeile 41, welche die laufende Nummer "11" im ersten Volltext-Referenzindex 39 trägt, ist die laufende Reihenfolgenummer "2" im Eintragsindex enthalten. In den nächsten beiden Volltext-Referenzindexzeilen sind die laufenden Reihenfolgenummern "3" und "4" im ersten Eintragsindex 13 enthalten. Die dritte Volltext-Referenzindexzeile 42, welche die laufende Nummer "14" im ersten Volltext-Referenzindex 39 trägt, enthält die Abschlußmarke "0".

Die so ermittelten laufenden Reihenfolgenummern im Eintragsindex werden gemerkt und in einen Volltext-Filterindex kopiert. Jeder einzelne von der Rechen- und Speichereinheit 4 gemerkte Wert der laufenden Reihenfolgenummer im Eintragsindex entspricht einer Eintragsindexzeile des entsprechenden Eintragsindexes, in dessen zugeordneter Datentabelle der jeweilige Volltext-Suchbegriff enthalten ist.

Im Ausführungsbeispiel gemäß Figur 11 werden die laufenden Reihenfolgenummern "1", "2", "3" und "4" in den ersten Volltext-Filterindex 48 kopiert und im Arbeitsspeicher RAM 7 abgelegt. In der Spalte "Volltext-Suchbegriff "ist" vorhanden?" des ersten Volltext-Filterindexes 48 wird jeweils eine Zahl "1" eingetragen.

Der erste Volltext-Filterindex 48 ist nun erstellt.

Danach sucht die Volltextsuchfunktion nach Übereinstimmungen des ersten Volltext-Suchbegriffs "ist" mit Datensätzen aus der zweiten Datentabelle 9 und den aus der zweiten Datentabelle gebildeten Indizes.

Im Ausführungsbeispiel gemäß Figur 7 werden im zweiten Volltext-Zwischenindex 28 der zweiten Datentabelle 9 alle Volltext-Zwischenindexzeilen gesucht, deren erste zwei Buchstaben mit den ersten zwei Buchstaben des ersten Volltext-Suchbegriffs "ist" übereinstimmen.

An der laufenden Ordnungsnummer 5 des zweiten Volltext-Zwischenindexes 28 wird eine Volltext-Zwischenindexzeile gefunden, deren erster Buchstabe ein "i" und deren zweiter Buchstabe ein "s" aufweist. Es handelt sich um die dritte Volltext-Zwischenindexzeile 31 des zweiten Volltext-Zwischenindexes 28.

Es wird nun die dritte Volltext-Wortindexzeile 36 des zweiten Volltext-Wortindexes 33 in den Arbeitsspeicher RAM 7 geladen, die sich an der fünften Position innerhalb des zweiten Volltext-Wortindexes 33 befindet. Diese dritte Volltext-Wortindexzeile 36 entspricht der von der Rechen- und Speichereinheit 4 des Computersystems 1 gemerkten dritten Volltext-Zwischenindexzeile 31.

Die Überprüfung in voller Wortlänge des ersten Volltext-Suchbegriffs "ist" mit dem in der dritten Volltext-Wortindexzeile 36 enthaltenen Wort "ist" ergibt eine Übereinstimmung der verglichenen Wörter.

Im Ausführungsbeispiel gemäß Figur 8 wird von der dritten Volltext-Wortindexzeile 36 des zweiten Volltext-Wortindexes 33 die Volltext-Referenzindexzeile mit der laufenden Nummer "13" im zugehörigen zweiten Volltext-Referenzindex 45 aufgerufen. Es handelt sich um die sechste Volltext-Referenzindexzeile 46 im zweiten Volltext-Referenzindex 45 gemäß Figur 10. Diese sechste Volltext-Referenzindexzeile 46 beinhaltet die laufende Reihenfolgenummer "1" im zugehörigen zweiten Eintragsindex 14.

Ausgehend von der sechsten Volltext-Referenzindexzeile 46 wird nun der zweite Volltext-Referenzindex 45 zeilenweise nach unten durchlaufen, bis die Abschlußmarke Null gefunden wird. In der unter der sechsten Volltext-Referenzindexzeile 46 angeordneten Volltext-Referenzindexzeile befindet sich die laufende Reihenfolgenummer "2" im zugehörigen zweiten Eintragsindex 14, in der übernächsten Volltext-Referenzindexzeile ist die Abschlußmarke "0" enthalten.

Im Ausführungsbeispiel gemäß Figur 12 werden die laufenden Reihenfolgenummern "1" und "2" im Eintragsindex in den dritten Volltext-Filterindex 52 kopiert und im Arbeitsspeicher RAM 7 gespeichert. In der Spalte "Volltext-Suchbegriff "ist" vorhanden?" des ersten Volltext-Filterindexes 48 wird jeweils eine Zahl "1" eingetragen.

Der dritte Volltext-Filterindex 52 ist nun erstellt.

Danach führt die Volltext-Suchfunktion die Suche nach dem zweiten Volltext-Suchbegriff "Mann" weiter.

Zunächst werden im ersten Volltext-Zwischenindex 27 der ersten Datentabelle 8 gemäß Figur 7 alle Volltext-Zwischenindexzeilen gesucht, deren erste zwei Buchstaben mit den ersten zwei Buchstaben des zweiten Volltext-Suchbegriffs "Mann" übereinstimmen.

An der laufenden Ordnungsnummer "5" des ersten Volltext-Zwischenindexes 27 wird eine Zwischenindexzeile gefunden, deren erster Buchstabe ein "m" und deren zweiter Buchstabe ein "a" aufweist. Es handelt sich um die zweite Volltext-Zwischenindexzeile 30 des ersten Volltext-Zwischenindexes 27.

Nun wird auf die der zweiten Volltext-Zwischenindexzeile 30 entsprechenden Volltext-Wortindexzeile im ersten Volltext-Wortindex 32 zugegriffen. Es handelt sich um die zweite Volltext-Wortindexzeile 35. Genau diese zweite Volltext-Wortindexzeile 35 des ersten Volltext-Wortindexes 32 wird in den Arbeitsspeicher RAM 7 geladen. Nun erfolgt eine Überprüfung in voller Wortlänge des zweiten Volltext-Suchbegriffs "Mann" mit dem in der zweiten Volltext-Wortindexzeile 35 enthaltenen Wort "Mann", die eine Übereinstimmung der verglichenen Wörter ergibt.

Über den in der zweiten Volltext-Wortindexzeile 35 enthaltenen Zeiger auf die laufende Nummer "15" im ersten Volltext-Referenzindex 39 wird auf die vierte Volltext-Referenzindexzeile 43 im ersten Volltext-Referenzindex 39 zugegriffen.

Im Ausführungsbeispiel gemäß Figur 9 enthält diese vierte Volltext-Referenzindexzeile 43 des ersten Volltext-Referenzindexes 39 die laufende Reihenfolgenummer "2" im ersten Eintragsindex 13. Die sich darunter befindliche Volltext-Referenzindexzeile weist die laufende Reihenfolgenummer "3" im ersten Eintragsindex 13 auf. Darunter befindet sich die Abschlußmarke "0".

Im Ausführungsbeispiel gemäß Figur 11 wird in den Volltext-Filterindexzeilen des zweiten Volltext-Filterindexes 49, welche die laufenden Reihenfolgenummern im Eintragsindex "2" und "3" enthalten, in der Spalte "Volltext-Suchbegriff "Mann" vorhanden?" jeweils eine Zahl "1" eingetragen. Die restlichen Volltext-Filterindexzeilen weisen in der zweiten Spalte "Volltext-Suchbegriff "Mann" vorhanden?" jeweils eine Zahl Null auf.

Der so erstellte Volltext-Filterindex stellt den zweiten Volltext-Filterindex 49 dar.

Danach sucht die Volltext-Suchfunktion nach Übereinstimmungen des zweiten Volltext-Suchbegriffs "Mann" mit der zweiten Datentabelle 9 und den aus der zweiten Datentabelle gebildeten Indizes.

Demzufolge werden im zweiten Volltext-Zwischenindex 28 der zweiten Datentabelle 9 gemäß Figur 7 alle Volltext-Zwischenindexzeilen gesucht, deren zwei ersten Buchstaben mit den zwei ersten Buchstaben des zweiten Volltext-Suchbegriffs "Mann" übereinstimmen.

Da keine Übereinstimmungen zwischen den ersten zwei Buchstaben des zweiten Suchbegriffs "Mann" und den im zweiten Volltext-Zwischenindex 28 enthaltenen Volltext-Zwischenindexzeilen vorhanden sind, weist der vierte Volltext-Filterindex 53 in der Spalte "Volltext-Suchbegriff "Mann" vorhanden?" in allen Volltext-Filterindexzeilen jeweils eine Zahl Null auf.

Demzufolge ist auch der vierte Volltext-Filterindex 53 fertiggestellt.

Nun erstellt die Volltext-Suchfunktion zur paarweisen logischen Verknüpfung der Volltext-Filterindizes für je eine Datentabelle eine Verknüpfungstabelle, wobei die Volltext-Filterindizes, welche die gleiche Datentabelle und die aus der gleichen Datentabelle abgeleiteten Indizes betreffen, in jeweils derselben Verknüpfungstabelle enthalten sind.

In der Verknüpfungstabelle sind die Inhalte der Spalten "Volltext-Wort vorhanden?" der jeweiligen Volltext-Filterindizes enthalten und miteinander zeilenweise gemäß der Suchvorgabe des Benutzers logisch verknüpft. Diejenigen Zeilen der einzelnen Verknüpfungstabellen, die in der Spalte "Boolesche Verknüpfung" eine Zahl Eins enthalten, stellen das Ergebnis der Volltext-Stichwortsuche dar. Die den Ergebnissen dieser Verknüpfungstabellen entsprechenden Datensätze werden auf dem Ausgabemedium 3 des Computersystems 1 ausgegeben, wobei Datensätze genau einmal als Ergebnis ausgegeben werden.

Im Ausführungsbeispiel wird eine Verknüpfung mittels des Booleschen UND-Operators durchgeführt.

In der ersten Verknüpfungstabelle 54 gemäß dem Ausführungsbeispiel in Figur 13 wird der Eins-Wert der Spalte "Volltext-Suchbegriff "ist" vorhanden?" des ersten Volltext-Filterindexes 48 mit dem Null-Wert der Spalte "Volltext-Suchbegriff "mann" vorhanden?" des zweiten Volltext-Filterindexes 49 mittels des Booleschen UND-Operators miteinander verknüpft. Die UND-Verknüpfung von Null und Eins ergibt für den ersten Datensatz eine NULL. Diese Zahl Null wird in der Spalte "Boolesche UND-Verknüpfung" eingetragen, und sie sagt aus, daß der Datensatz, welcher der laufenden Nummer Eins im ersten Eintragsindex 13 zugeordnet ist, kein Ergebnis der Volltextsuche nach "ist UND mann" darstellt und somit nicht anzuzeigen ist. Es handelt sich um den ersten Datensatz 10 "Die Blume ist schön.".

Die zweite Verknüpfungstabellenzeile 57 mit der laufenden Reihenfolgenummer "2" weist in der Spalte "Boolesche UND-Verknüpfung" eine Zahl "1" auf. Diese ergibt sich aus der Booleschen UND-Verknüpfung des Wertes "1" der zweiten Zeile des ersten Volltext-Filterindexes 48 in der Spalte "Volltext-Suchbegriff "ist" vorhanden?" sowie des Wertes "1" der zweiten Zeile des zweiten Volltext-Filterindexes 49 in der Spalte "Volltext-Suchbegriff "mann" vorhanden?".

Der entsprechende zweite Datensatz 11: "Der Mann ist mutig." stellt somit ein Element der Ergebnismenge der Volltext-Suche gemäß dem Ausführungsbeispiel dar. Dieser zweite Datensatz 11 "Der Mann ist mutig." wird von der Rechen- und Speichereinheit des Computersystems 1 gemerkt.

Die dritte Verknüpfungstabellenzeile 58 mit der laufenden Reihenfolgenummer "3" weist in der Spalte "Boolesche UND-Verknüpfung" ebenfalls eine Zahl "1" auf. Diese ergibt sich aus der Booleschen UND-Verknüpfung des Wertes "1" der dritten Zeile des ersten Volltext-Filterindexes 48 in der Spalte "Volltext-Suchbegriff "ist" vorhanden?" sowie des Wertes "1" der dritten Zeile des zweiten Volltext-Filterindexes 49 in der Spalte "Volltext-Suchbegriff "mann" vorhanden?".

Der entsprechende zweite Datensatz 11 "Der Mann ist mutig." stellt somit ein Element der Ergebnismenge der Volltext-Suche gemäß dem Ausführungsbeispiel dar, wobei er auch von der zweiten Verknüpfungstabellenzeile 57 als Ergebnis der Volltextsuche gemäß dem Ausführungsbeispiel in Figur 13 ermittelt wird. Dieser zweite Datensatz 11 wird von der Rechen- und Speichereinheit des Computersystems 1 gemerkt.

In der letzten Verknüpfungstabellenzeile der ersten Verknüpfungstabelle 54 ergibt die Boolesche Und-Verknüpfung einen Wert Null.

Die zweite Verknüpfungstabelle 55 gliedert sich in eine Spalte "Laufende Reihenfolgenummer im Eintragsindex" und in eine Spalte "Boolesche UND-Verknüpfung". Die zweite Verknüpfungstabelle 55 weist insgesamt drei Verknüpfungstabellenzeilen auf und ist der zweiten Datentabelle 9/dem zweiten Eintragsindex 14 zugeordnet. Der Aufbau der zweiten Verknüpfungstabelle 55 entspricht dem Aufbau der ersten Verknüpfungstabelle 54.

In allen Verknüpfungstabellenzeilen der zweiten Verknüpfungstabelle 55 ergibt die Booleschen Und-Verknüpfung jeweils einen Wert Null.

Somit gibt es genau ein Ergebnis der Volltextsuche "ist UND Mann". Der vom Computersystem gemerkte zweite Datensatz 11 "Der Mann ist mutig." wird genau einmal als Ergebnis der Volltextsuche "ist UND Mann" auf dem Ausgabemedium 3 des Computersystems 1 ausgegeben.

Erfindungsgemäß können auch mehr als zwei Volltext-Suchbegriffe durch einen Benutzer eingegeben und durch Boolesche Operatoren verbunden für eine Volltextsuche vorgesehen werden.

Hierbei wird für jeden weiteren Volltext-Suchbegriff für jeden Eintragsindex ein separater Volltext-Filterindex erzeugt.

Anschließend wird aus zwei Volltext-Filterindexen eines Eintragsindexes eine Verknüpfungstabelle erstellt. Danach wird für jeden weiteren Volltext-Filterindex aus dem Volltext-Filterindex und der aktuellen Verknüpfungstabelle eine neue Verknüpfungstabelle erstellt, welche die vorhandene Verknüpfungstabelle ersetzt.

Bei der Eingabe der Volltext-Suchbegriffe durch den Benutzer sind Sonderfälle zu berücksichtigen: Innerhalb einer Zeichenkette des Volltext-Suchbegriffes können ein oder mehrere Allquantoren "*" und ein oder mehrere Existenzquantoren "?" vorkommen.

Für die Position des Allquantors "*" sind drei verschiedene Fälle zu betrachten.

Der erste Fall ist gegeben, wenn sich der Allquantor "*" an der ersten Position des Volltext-Suchbegriffes befindet. Wenn sowohl das erste als auch das zweite Zeichen des Suchbegriffs einen Allquantor "*" aufweisen, wird der Volltext-Suchbegriff so behandelt, als ob genau ein Allquantor "*" an der ersten Position des Volltext-Suchbegriffs vorhanden ist. In diesem Fall stellen alle Datensätze aller Datentabellen das Ergebnis der Suchanfrage nach dem Zeichen "*" dar.

Der zweite Fall tritt dann ein, wenn sich der Allquantor "*" an der zweiten Position des Volltext-Suchbegriffs befindet, wobei an der ersten Stelle ein Buchstabe vorhanden ist. In diesem Fall stellen alle diejenigen Datensätze das Ergebnis der Suchanfrage dar, deren erstes Zeichen mit dem ersten Zeichen des Volltext-Suchbegriffs übereinstimmt. Hierfür wird der Zwischenindex herangezogen.

Der dritte Fall tritt ein, wenn sich ein Allquantor "*" oder mehrere Allquantoren "*" an einer Position größer gleich der dritten Position des Volltext-Suchbegriffs befindet. In diesem Fall wird die den Allquantor enthaltende Zeichenkette von der Volltext-Suchfunktion wie ein gängiger Volltext-Suchbegriff behandelt. Es erfolgt die Überprüfung des Suchbegriffes mit den entsprechenden Volltext-Wörtern in voller Wortlänge.

Für die Position des Existenzquantors "?" sind drei verschiedene Fälle zu betrachten.

Der erste Fall ist gegeben, wenn sich der Existenzquantor "?" an der ersten Position des Volltext-Suchbegriffs befindet. In diesem Fall werden die Datensätze aller Datentabellen gefiltert, deren zweites Zeichen mit dem zweiten Zeichen des Suchbegriffes übereinstimmt. Danach erfolgt die Überprüfung des Suchbegriffes mit den entsprechenden Volltext-Wörtern in voller Wortlänge.

Der zweite Fall tritt dann ein, wenn sich der Existenzquantor "?" an der zweiten Position des Volltext-Suchbegriffs befindet, wobei an der ersten Stelle ein Buchstabe vorhanden ist. In diesem Fall werden alle Datensätze aller Datentabellen gefiltert, deren erstes Zeichen im Zwischenindex mit dem ersten Zeichen des Volltext-Suchbegriffs übereinstimmt. Danach erfolgt die Überprüfung des Volltext-Suchbegriffs mit den entsprechenden Volltext-Wörtern in voller Wortlänge.

Der dritte Fall tritt ein, wenn sich der Existenzquantor "?" an einer Position größer gleich der dritten Position des Suchbegriffes befindet. In diesem Fall wird die den Existenzquantor "?" enthaltende Zeichenkette wie ein gängiger Volltext-Suchbegriff behandelt.

Wenn sowohl das erste als auch das zweite Zeichen des Suchbegriffes je einen Existenzquantor "?" aufweisen, bewirkt der Volltext-Zwischenindex keinerlei Einschränkung der Menge der zu durchsuchenden Datensätze. Die Volltextsuchfunktion ist weiterhin möglich, sie dauert nur sehr lange. Dieser Fall stellt kein sinnvolles Suchkriterium dar.

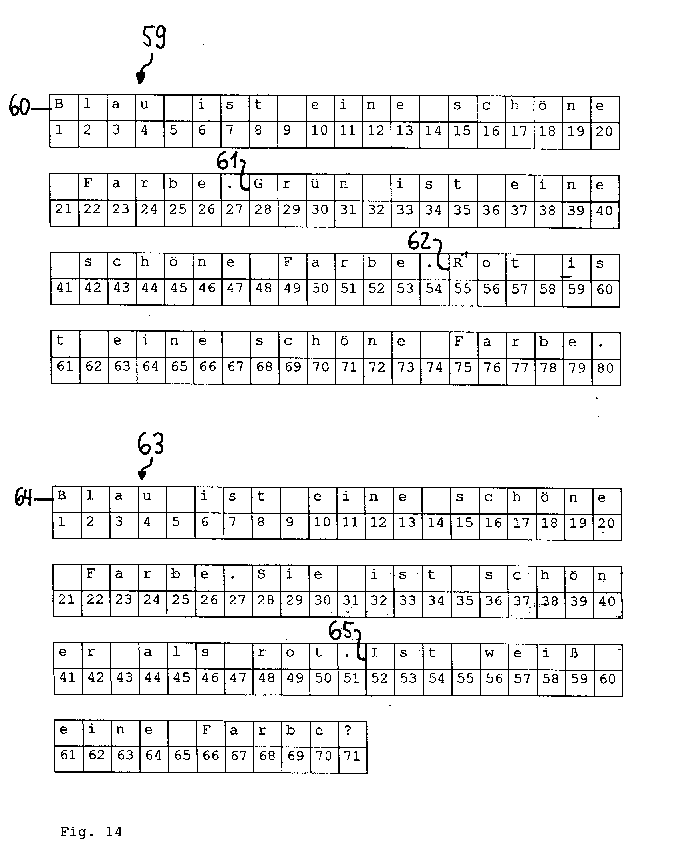

Figur 14 zeigt eine Basis-Datentabelle 59 und eine Erweiterungs-Datentabelle 63 der erfindungsgemäßen Datenbank gemäß einem dritten Ausführungsbeispiel.

Die erfindungsgemäße Datenbank umfaßt mehrere Datentabellen, die sich in genau eine Basis-Datentabelle und mindestens eine Erweiterungs-Datentabelle gliedern. Im Ausführungsbeispiel gemäß Figur 14 ist genau eine Erweiterungs-Datentabelle 63 vorgesehen. Die Basis-Datentabelle und die Erweiterungs-Datentabellen sind durchnumeriert, und sie enthalten alle in der erfindungsgemäßen Datenbank abgespeicherten Eintragstexte.

Die Basis-Datentabelle und die Erweiterungs-Datentabellen sind gleich aufgebaut, und sie benötigen häufig einen relativ großen Speicherplatz. Die Basis-Datentabelle und die Erweiterungs-Datentabellen unterscheiden sich im wesentlichen dadurch, auf welchem Speichermedium sie vorgesehen sind und durch wen sie erstellt werden.

Die Basis-Datentabelle ist häufig auf einem Nur-Lese-Medium wie einem CD/DVD-ROM-Laufwerk 5 gespeichert, das eine relativ große Speicherkapazität aufweist. Die Basis-Datentabelle ist häufig vom Produzenten der Datenbank erstellt.

Erweiterungs-Datentabellen können von einem oder von mehreren Benutzern der Datenbank erstellt werden. Sie sind vorzugsweise auf einer Festplatte 6 abgelegt, die für einen Schreib-Lese-Zugriff vorgesehen ist. Erweiterungs-Datentabellen sind auch auf einem Nur-Lese-Medium wie einem CD/DVD-ROM-Laufwerk 5 speicherbar.

Die Basis-Datentabelle und die Erweiterungs-Datentabellen weisen jeweils eine Vielzahl von Feldern auf, wobei jedes Feld genau ein Zeichen enthält. Im Ausführungsbeispiel hat je ein Feld eine Speichergröße von 1 Byte = 8 Bits. Mit der Erfindung können auch andere Speichergrößen pro Feld der Datentabelle verwirklicht werden. Im Ausführungsbeispiel gemäß Figur 14 sind die Felder der Basis-Datentabelle 59 und der Erweiterungs-Datentabelle 63 mit Ordnungsnummern fortlaufend durchnumeriert dargestellt. Diese Numerierung wird nicht mit abgespeichert, sondern vom Dateisystem des Computersystems 1 bereitgestellt.

Die Größe der Basis-Datentabelle und der Erweiterungs-Datentabellen wird durch den enthaltenen Eintragstext bestimmt. Die maximale Größe der Datentabellen ist im vorliegenden Fall auf $2^{32}$ = 4.294.967.296 Zeichen begrenzt. Mit der Erfindung können auch größere Datentabellen verwirklicht werden.

Die Felder der Basis-Datentabelle 59 und der Erweiterungs-Datentabelle 63 und allen weiteren hier nicht gezeigten Erweiterungs-Datentabellen gliedern sich in Datensätze, die hintereinander abgespeichert werden, und zwar ohne ein besonderes Trennzeichen zwischen zwei Datensätzen. Das Auffinden und die Selektion der einzelnen Datensätze der Basis-Datentabelle 59, der Erweiterungs-Datentabelle 63 und aller weiterer Datentabellen geschieht über Zeiger, die sich jeweils auf die Numerierung der jeweiligen Datentabellen beziehen und die separat in denjenigen Eintragsindizes abgelegt sind, die den jeweiligen Datentabellen entsprechen.

Die Basis-Datentabelle 59 und die Erweiterungs-Datentabelle 63 stellen je eine Datei eines hier nicht gezeigten Dateisystems des Computersystems 1 dar. Die Basis-Datentabelle 59 trägt die laufende Nummer 1. Die Erweiterungs-Datentabelle 63 trägt die laufende Nummer 2.

Im Ausführungsbeispiel gemäß Figur 14 ist die Basis-Datentabelle 59 auf dem CD/DVD-ROM-Laufwerk 5 abgelegt, und die Erweiterungs-Datentabelle 63 ist auf der Festplatte 6 abgelegt.

In Figur 14 sind ein Ausschnitt der Basis-Datentabelle 59 mit einem ersten Basis-Datensatz 60 "Blau ist eine schöne Farbe.", mit einem zweiten Basis-Datensatz 61 "Grün ist eine schöne Farbe." und mit einem dritten Basis-Datensatz 62 "Rot ist eine schöne Farbe." sowie ein Ausschnitt der Erweiterungs-Datentabelle 63 mit einem ersten Erweiterungs-Datensatz 64 "Blau ist eine schöne Farbe. Sie ist schöner als Rot." und mit einem zweiten Erweiterungs-Datensatz 65 "Ist weiß eine Farbe?" gezeigt.

Der besseren Übersichtlichkeit halber ist unter jedem Feld der Basis-Datentabelle 59 und unter jedem Feld der Erweiterungs-Datentabelle 63 die dem betreffenden Feld entsprechende Ordnungsnummer angegeben. Die Ordnungsnummern sind bei 1 beginnend aufsteigend durchnumeriert. Alle Zeichen jedes Datensatzes, auch die Leerzeichen und die Sonderzeichen, belegen jeweils separate Felder in der Basis-Datentabelle 59 und in der Erweiterungs-Datentabelle 63.

Die Größe der Basis-Datentabelle 59 beträgt 80 Zeichen, wobei der erste Basis-Datensatz 60 die Felder mit den Ordnungsnummern 1 bis 27, der zweite Basis-Datensatz 61 die Felder mit den Ordnungsnummern 28 bis 54 und der dritte Basis-Datensatz 62 die Felder mit den Ordnungsnummern 55 bis 80 belegt.

Die Größe der Erweiterungs-Datentabelle 63 beträgt 71 Zeichen, wobei der erste Erweiterungs-Datensatz 64 die Felder mit den Ordnungsnummern 1-51 belegt und der zweite Erweiterungs-Datensatz 65 die Felder mit den Ordnungsnummern 52 bis 71 in Anspruch nimmt.

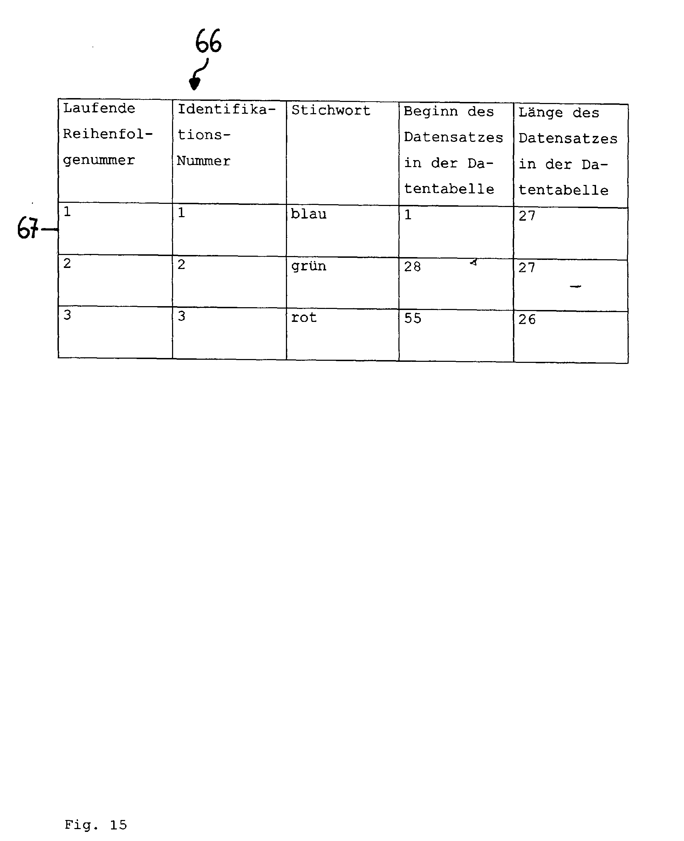

Figur 15 zeigt einen Basis-Eintragsindex 66 zur Basis-Datentabelle 59 gemäß dem dritten Ausführungsbeispiel.

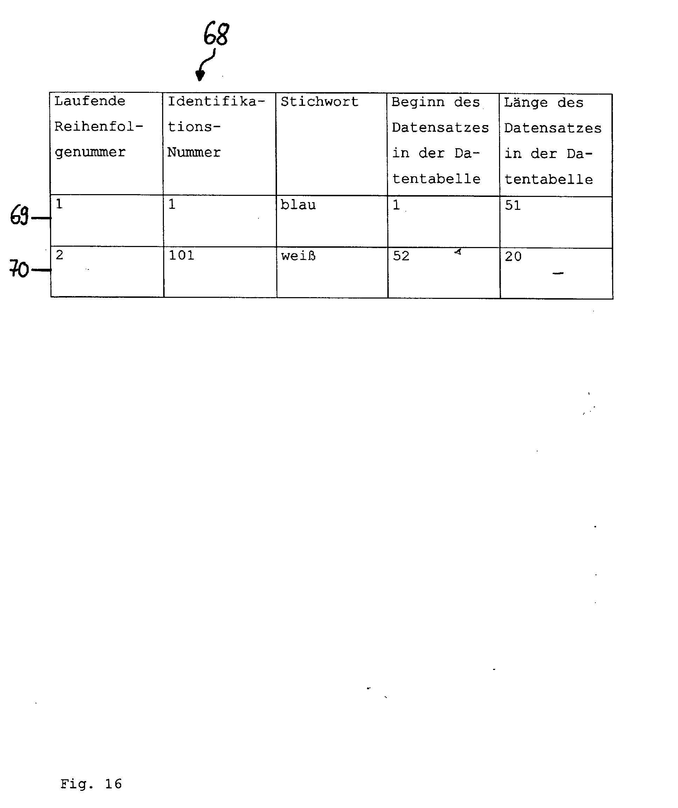

Figur 16 zeigt einen Erweiterungs-Eintragsindex 68 zur Erweiterungs-Datentabelle 63 gemäß dem dritten Ausführungsbeispiel.

Der Basis-Eintragsindex 66 und der Erweiterungs-Eintragsindex 68 gliedern sich in eine Spalte mit einer laufenden Reihenfolgenummer des Eintragsindexes, die auch vom Dateisystem bereitgestellt werden kann, in eine Spalte mit einer Identifikationsnummer, in eine Spalte mit einem Stichwort, in eine Spalte, die einen Zeiger auf den Beginn des Datensatzes in der Basis-Datentabelle 59 bzw. in der Erweiterungs-Datentabelle 63 enthält und in eine Spalte, die eine Information über die Länge des Datensatzes in der Basis-Datentabelle 59 bzw. in der Erweiterungs-Datentabelle 63 aufweist.

Der Basis-Eintragsindex 66 und der Erweiterungs-Eintragsindex 68 entsprechen hinsichtlich der Struktur dem ersten Eintragsindex 13 und dem zweiten Eintragsindex 14, wobei im Basis-Eintragsindex 66 und im Erweiterungs-Eintragsindex 68 zusätzlich eine Spalte "Identifikationsnummer" enthalten ist.

Im Basis-Eintragsindex 66 und im Erweiterungs-Eintragsindex 68 sind ebenfalls mehrere Attributswerte vorsehbar, die im vorliegenden Ausführungsbeispiel zur besseren Veranschaulichung ausgespart werden. Durch die Vergabe von Attributstexten für verschiedene Themenbereiche wie Wissen, Sprache, zeitliche Einordnung, örtliche Einordnung etc. wird ein Datensatz genauer beschrieben und abgegrenzt.

Der Basis-Eintragsindex 66 und der Erweiterungs-Eintragsindex 68 können weitere Spalten mit Attributswerten aufweisen, mit Hilfe derer den jeweiligen Datensätzen in den Basis-Eintragsindexzeilen und in den Erweiterungs-Eintragsindexzeilen Attributstexte zuordenbar sind. Jedem Attributswert ist ein Attributstext zugeordnet, wobei die Attributswerte und die Attributstexte in separaten Attributstabellen abgelegt sind.

Der Basis-Eintragsindex 66 weist eine Vielzahl von Basis-Eintragsindexzeilen auf, wobei jede Basis-Eintragsindexzeile genau einem Datensatz der entsprechenden Basis-Datentabelle zugeordnet ist. Im Ausführungsbeispiel gemäß Figur 15 weist der Basis-Eintragsindex 66 drei Basis-Eintragsindexzeilen auf.

Der Erweiterungs-Eintragsindex 68 weist eine Vielzahl von Erweiterungs-Eintragsindexzeilen auf, wobei jede Erweiterungs-Eintragsindexzeile genau einem Datensatz der entsprechenden Erweiterungs-Datentabelle zugeordnet ist. Im Ausführungsbeispiel gemäß Figur 16 weist der Erweiterungs-Eintragsindex 68 zwei Erweiterungs-Eintragsindexzeilen auf.

Durch die laufende Reihenfolgenummer des Eintragsindexes ist die Position jeder Basis-Eintragsindexzeile bzw. jeder Erweiterungs-Eintragsindexzeile innerhalb des Basis-Eintragsindexes 66 bzw. innerhalb des Erweiterungs-Eintragsindexes 68 eindeutig bestimmt. Diese wird nicht abgespeichert, sondern dient im vorliegenden Ausführungsbeispiel der besseren Übersicht.

Jeder Basis-Eintragsindexzeile bzw. jeder Erweiterungs-Eintragsindexzeile ist genau eine Identifikationsnummer zugeordnet, die zur Identifikation des zugehörigen Datensatzes der entsprechenden Basis-Datentabelle bzw. der entsprechenden Erweiterungs-Datentabelle dient. Die Identifikationsnummern können zufällig vergeben werden, oder von Eins beginnend aufsteigend sortiert werden. Identifikationsnummern werden eindeutig vergeben.

Durch das Vorsehen von Nummernkreisen für die Identifikationsnummern ermöglicht es die erfindungsgemäße Datenbank dem Benutzer, sowohl Datensätze in der Basis-Datentabelle durch neuere Datensätze in Erweiterungs-Datentabellen zu ersetzen, als auch neue Einträge in Erweiterungs-Datentabellen hinzuzufügen. Hierzu ist für die Basis-Datentabelle und für die Erweiterungs-Datentabellen jeweils genau ein fester Kreis von Identifikationsnummern vorgesehen. Durch das Vorsehen genau eines Nummernkreises für alle Erweiterungs-Datentabellen wird sichergestellt, daß mehrere Benutzer ihre Erweiterungs-Datentabellen untereinander austauschen können.

Im vorliegenden Ausführungsbeispiel ist der Nummernkreis 1 bis 99 der Identifikationsnummern vorgesehen für die Einträge in der Basis-Datentabelle 59 und für diejenigen Einträge in den Erweiterungs-Datentabellen 63, welche die Einträge mit der jeweils gleichen Identifikationsnummer in der Basis-Datentabelle 59 ersetzen.

Der Nummernkreis der Identifikationsnummern ab der Zahl 100 wird für neue Einträge in der Erweiterungs-Datentabelle 63 bereitgestellt.

Die im Basis-Eintragsindex 66 und im Erweiterungs-Eintragsindex 68 enthaltenen Stichwörter beschreiben den der jeweiligen Basis-Eintragsindexzeile bzw. den der jeweiligen Erweiterungs-Eintragsindexzeile entsprechenden Datensatz und bilden die Grundlage für die Stichwortsuchfunktion der erfindungsgemäßen Datenbank.

Durch die in den Spalten "Beginn des Datensatzes in der Datentabelle" und "Länge des Datensatzes in der Datentabelle" enthaltenen Ziffern ist die Position jedes Datensatzes in der dem Basis-Eintragsindex entsprechenden Basis-Datentabelle bzw. der dem Erweiterungs-Eintragsindex entsprechenden Erweiterungs-Datentabelle eindeutig bestimmt.

Eine beispielhaft angegebene erste Basis-Eintragsindexzeile 67 des Basis-Eintragsindexes 66 beinhaltet eine laufende Reihenfolgenummer "1", eine Identifikationsnummer "1" und ein Stichwort "blau". Der dieser Basis-Eintragsindexzeile 67 entsprechende Basis-Datensatz befindet sich in der entsprechenden Basis-Datentabelle 59 in dem Feld, welches an Position 1 beginnt und eine Länge von 27 Zeichen aufweist. Es handelt sich um den ersten Basis-Datensatz 60: "Blau ist eine schöne Farbe."

Dieser erste Basis-Datensatz 60 trägt die Identifikationsnummer "1", die sich im Nummernkreis von 1 bis 99 befindet und für die Einträge in der Basis-Datentabelle 59 vorgesehen ist.

Diesem ersten Basis-Datensatz 60 ist die laufende Reihenfolgenummer "1" im Basis-Eintragsindex 66 und das Stichwort "blau" zugeordnet.

Eine beispielhaft angegebene erste Erweiterungs-Eintragsindexzeile 69 des Erweiterungs-Eintragsindexes 68 weist eine laufende Reihenfolgenummer "1", eine Identifikationsnummer "1" und ein Stichwort "blau" auf. Der entsprechende Erweiterungs-Datensatz befindet sich in der entsprechenden Erweiterungs-Datentabelle 63 in dem Feld, welches an Position 1 beginnt und eine Länge von 51 Zeichen aufweist. Es handelt sich um den ersten Erweiterungs-Datensatz 64: "Blau ist eine schöne Farbe. Sie ist schöner als Rot."

Die Identifikationsnummer "1" des Erweiterungs-Eintragsindexes 68 befindet sich im Nummernkreis von 1-99 und ist vorgesehen für die Einträge in der Erweiterungs-Datentabelle, welche die Einträge mit der gleichen Identifikationsnummer in der Basis-Datentabelle ersetzen.

Dementsprechend ersetzt der erste Erweiterungs-Datensatz 64 der ersten Erweiterungs-Datentabelle 63 den ersten Basis-Datensatz 60 in der Basis-Datentabelle 59, der dieselbe Identifikationsnummer "1" trägt.

Diesem ersten Erweiterungs-Datensatz 64 ist die laufende Reihenfolgenummer "1" im Erweiterungs-Eintragsindex 68 und das Stichwort "blau" zugeordnet.

Eine zweite Erweiterungs-Eintragsindexzeile 70 weist eine laufende Reihenfolgenummer "2", eine Identifikationsnummer "101" und ein Stichwort "weiß" auf. Über die Einträge in den Spalten "Beginn des Datensatzes in der Datentabelle" und "Länge des Datensatzes in der Datentabelle" ist der zweiten Erweiterungs-Eintragsindexzeile 70 der zweite Erweiterungs-Datensatz 65:

"Ist weiß eine Farbe?" zugeordnet.

Die Identifikationsnummer "101" der zweiten Erweiterungs-Eintragsindexzeile 70 befindet sich im Nummernkreis ab 100 und ist für neue Einträge in den Erweiterungs-Datentabellen vorgesehen.

Dementsprechend stellt der zweite Erweiterungs-Datensatz 65, welcher der zweiten Erweiterungs-Eintragsindexzeile 70 zugeordnet ist, einen neuen Erweiterungs-Datensatz dar, der keinen vorhandenen ersetzt.

Diesem zweiten Erweiterungs-Datensatz 65 ist die laufende Reihenfolgenummer "2" im Erweiterungs-Eintragsindex 68 und das Stichwort "weiß" zugeordnet.

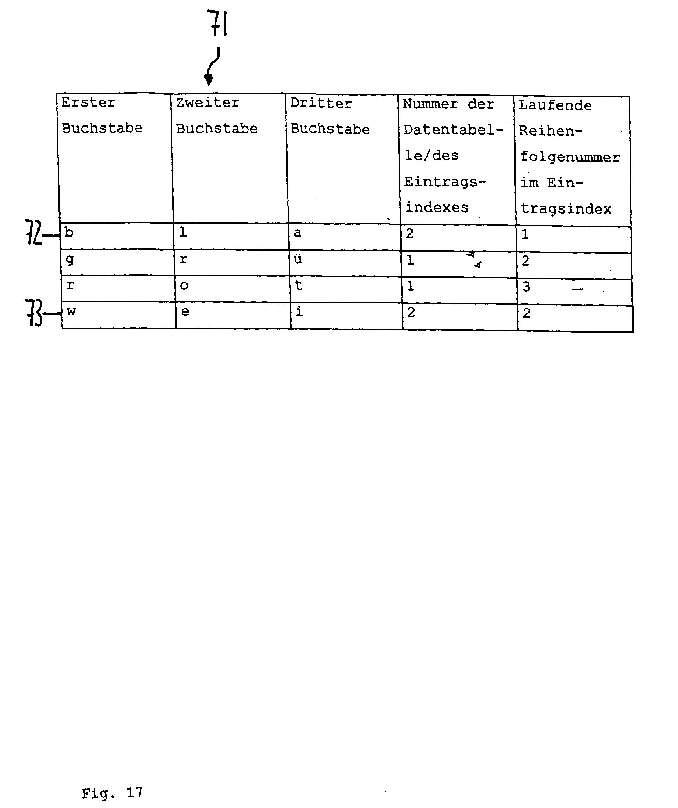

Figur 17 zeigt einen zweiten Zwischenindex 71 gemäß dem dritten Ausführungsbeispiel, die sich aus dem Basis-Eintragsindex 66 und dem Erweiterungs-Eintragsindex 68 ergibt.

Der zweite Zwischenindex 71 gliedert sich in eine Spalte "Erster Buchstabe", in eine Spalte "Zweiter Buchstabe" und in eine Spalte "Dritter Buchstabe", in eine Spalte, welche die Nummer des entsprechenden Basis-Eintragsindexes bzw. des entsprechenden Erweiterungs-Eintragsindexes enthält und in eine Spalte, welche die laufende Reihenfolgenummer im entsprechenden Basis-Eintragsindex bzw. im entsprechenden Erweiterungs-Eintragsindex enthält

Der zweite Zwischenindex 71 entspricht hinsichtlich der Struktur und des Aufbaus dem Zwischenindex 20, wobei die Spalte "Attributswert" zur besseren Erklärung ausgespart ist.

Der zweite Zwischenindex 71 weist eine Vielzahl von Zwischenindexzeilen auf, wobei jede Zwischenindexzeile einer Basis-Eintragsindexzeile bzw. einer Erweiterungs-Eintragsindexzeile entspricht. Im Ausführungsbeispiel gemäß Figur 17 weist der zweite Zwischenindex 71 insgesamt vier Zwischenindexzeilen auf.

Der zweite Zwischenindex 71 ergibt sich aus der Basis-Datentabelle 59 und der Erweiterungs-Datentabelle 63.

Der zweite Zwischenindex 71 stellt alle Datensätze der Basis-Datentabelle 59 und der Erweiterungs-Datentabelle 63 dar, auf die von der erfindungsgemäßen Datenbank zugegriffen wird.

Diejenigen Erweiterungs-Datensätze aus der Erweiterungs-Datentabelle 63, welche die gleiche Identifikationsnummer aus dem Nummernkreis "1 bis 99" aufweisen, wie entsprechende Basis-Datensätze aus der Basis-Datentabelle 59, ersetzen diese im zweiten Zwischenindex 71.

Diejenigen Datensätze aus der Erweiterungs-Datentabelle 63, die eine Identifikationsnummer aus dem Nummernkreis ab der Zahl "100" aufweisen, ergänzen die Basis-Datentabelle 59, ohne einen Basis-Datensatz zu ersetzen.

Aus Speicherplatzgründen enthält jede Zwischenindexzeile Teile eines Stichworts, das dem Stichwort der zugehörigen Basis-Eintragsindexzeile bzw. der zugehörigen Erweiterungs-Eintragsindexzeile entspricht. Im Ausführungsbeispiel gemäß Figur 17 sind genau die ersten drei Buchstaben der Stichwörter im zweiten Zwischenindex 71 enthalten.

In jeder Zwischenindexzeile ist durch einen Wert in der Spalte "Nummer der Datentabelle/des Eintragsindexes" und durch einen Wert in der Spalte "laufende Reihenfolgenummer im Eintragsindex" die Position derjenigen Basis-Eintragsindexzeile bzw. derjenigen Erweiterungs-Eintragsindexzeile bestimmt, die der Zwischenindexzeile entspricht.

Im Ausführungsbeispiel gemäß Figur 17 weist eine vierte Zwischenindexzeile 72 ein Stichwort mit einen ersten Buchstaben "b", mit einem zweiten Buchstaben "1" und mit einem dritten Buchstaben "a" auf. Die vierte Zwischenindexzeile 72 weist weiterhin eine Nummer "2" der entsprechenden Erweiterungs-Datentabelle 63/des entsprechenden Erweiterungs-Eintragsindexes 68 und eine laufende Nummer "1" im entsprechenden Erweiterungs-Eintragsindex 68 auf.

Dementsprechend ist dieser vierten Zwischenindexzeile 72 die erste Erweiterungs-Eintragsindexzeile 69 des Erweiterungs-Eintragsindexes 68 zugeordnet. Diese erste Erweiterungs-Eintragsindexzeile 69 verweist auf den ersten Erweiterungs-Datensatz 64 "Blau ist eine schöne Farbe. Sie ist schöner als Rot."

Die Identifikationsnummer "1" der ersten Erweiterungs-Eintragsindexzeile 69 befindet sich im Nummernkreis von 1 bis 99 und stimmt mit der Identifikationsnummer der ersten Basis-Eintragsindexzeile 67 überein. Dementsprechend ersetzt die erste Erweiterungs-Eintragsindexzeile 69 des Erweiterungs-Eintragsindexes 68 die erste Basis-Eintragsindexzeile 67 des Basis-Eintragsindexes 66 in der ersten Zwischenindexzeile 72.

Eine beispielhafte fünfte Zwischenindexzeile 73 weist gemäß des Ausführungsbeispiels in Figur 17 die ersten drei Buchstaben "wei", eine Nummer "2" der entsprechenden Erweiterungs-Datentabelle 63/des entsprechenden Erweiterungs-Eintragsindexes 68 und eine laufende Nummer "2" im entsprechenden Erweiterungs-Eintragsindex 68 auf.

Demzufolge verweist der dieser fünften Zwischenindexzeile 73 zugeordnete zweite Erweiterungs-Eintragsindexzeile 70 des Erweiterungs-Eintragsindexes 68 auf den zweiten Erweiterungs-Datensatz 65 "Ist weiß eine Farbe?".

Die Identifikationsnummer "101" der zweiten Erweiterungs-Eintragsindexzeile 70 befindet sich im Nummernkreis "ab 100". Somit wird der zweite Erweiterungs-Datensatz 65, welcher der zweiten Erweiterungs-Eintragsindexzeile 70 zugeordnet ist, als Neueintrag in die Datenbank aufgenommen und ersetzt keinen Basis-Datensatz.

Die erfindungsgemäße Datenbank kann vom Benutzer erweitert werden. Nachfolgend wird das Einfügen von Erweiterungs-Datensätzen in die Datenbank durch einen Benutzer erläutert.

Einzelne Erweiterungs-Datensätze sind vom Benutzer in die Erweiterungs-Datentabelle einfügbar, wobei die eingefügten Erweiterungs-Datensätze neue Inhalte der Datenbank darstellen oder vorhandene Basis-Datensätze ersetzen können.

Beim Einfügen von Erweiterungs-Datensätzen ist eine Reihe von Informationen in das Computersystem 1 einzugeben.

Die vom Benutzer einzugebenden Informationen für jeden neuen Erweiterungs-Datensatz gliedern sich in je einen Eintragstext, der in der Datentabelle abgelegt ist, in je eine Identifikationsnummer, wenigstens ein zugeordnetes Stichwort und ggf. zugeordnete Attributswerte. Die Identifikationsnummer, die zugeordneten Stichwörter und die zugeordneten Kennziffern sind in dem der Datentabelle zugehörigen Eintragsindex abgelegt.

Im Ausführungsbeispiel gemäß den Figuren 14 bis 17 wird die Eingabe von Attributswerten vernachlässigt.

Der Benutzer gibt alle benötigten Informationen der einzufügenden Erweiterungs-Datensätze über das Eingabemedium 2 in das Computersystems 1 ein, wobei vom Computersystem 1 ein Menü zum Einfügen von neuen Erweiterungs-Datensätzen bereitgestellt wird.

Zuerst ist der Eintragstext einzugeben, der den Inhalt des Erweiterungs-Datensatzes darstellt. Hierbei sind zusätzlich zu dem reinen Text auch Bild- und Toninhalte einem Datensatz zuordenbar.

Anschließend ist die Identifikationsnummer des Erweiterungs-Datensatzes einzugeben. Die Identifikationsnummer des neuen Erweiterungs-Datensatzes ist aus dem geeigneten Nummernkreis zu wählen, je nachdem ob ein bestehender Basis-Datensatz ersetzt werden soll, oder ob ein neuer Erweiterungs-Datensatz in die Erweiterungs-Datentabelle eingefügt werden soll.

Ein oder mehrere Stichwörter, die den Inhalt des Erweiterungs-Datensatzes beschreiben, sind einzugeben.

Gegebenenfalls sind Attributswerte eingebbar, mittels derer dem Erweiterungs-Datensatz geeignete Attributstexte zugeordnet werden.

Nach Eingabe aller benötigten Informationen zu einem bzw. mehreren neuen Erweiterungs-Datensätzen speichert der Benutzer die Erweiterungs-Datentabellen in geeigneter Weise auf einem Speichermedium, vorzugsweise der Festplatte 6 des Computersystems 1 ab.

Nach Abspeicherung der den neuen Erweiterungs-Datensätzen zugehörigen Informationen durch den Benutzer werden die im Eintragsindex enthaltenen Zeiger auf den Beginn der Datensätze in der Datentabelle und die im Eintragsindex enthaltenen Informationen über die Länge der neu eingegebenen Erweiterungs-Datensätze in den entsprechenden Datentabellen vom Computersystem erzeugt.

Anschließend werden auf der Benutzerplattform von der erfindungsgemäßen Datenbank die dem Erweiterungs-Datensatz entsprechenden Erweiterungs-Datentabellen, die entsprechenden Eintragsindizes, die entsprechenden Volltext-Wortindizes und die entsprechenden Volltext-Referenzindizes automatisch erzeugt bzw. aktualisiert und auf einem Speichermedium wie beispielsweise der Festplatte 6 abgelegt.

Die vom Benutzer eingegebenen Erweiterungs-Datensätze sind nun in der Datenbank integriert.

Neue Erweiterungs-Datentabellen sind durch den Benutzer in die Datenbank einfügbar. Hierzu wird vom Computersystem 1 eine Menüfunktion "Einfügen von neuen Erweiterungs-Datentabellen" bereitgestellt. Diese Menüfunktion wird vom Benutzer aufgerufen, wodurch vom Computersystem automatisch eine neue Erweiterungs-Datentabelle mit einer zugeordneten Nummer erzeugt wird. Anschließend ist mindestens ein Erweiterungs-Datensatz vom Benutzer in diese Erweiterungs-Datentabelle einzufügen.

Bei Durchführung der Stichwortsuche werden aus den Erweiterungs-Datentabellen und aus den entsprechenden Eintragsindizes ein Zwischenindex und Filterindizes erstellt und im Arbeitsspeicher RAM abgelegt.

Bei Durchführung der Volltextsuche werden aus den Erweiterungs-Datentabellen, aus den entsprechenden Eintragsindizes, aus den entsprechenden Volltext-Wortindizes und aus den entsprechenden Volltext-Referenzindizes die Volltext-Zwischenindizes und die Volltext-Filterindizes erstellt und im Arbeitsspeicher RAM abgelegt.

Nachfolgend wird anhand des Ausführungsbeispiels gemäß den Figuren 14 bis 17 das Einfügen einer Erweiterungs-Datentabelle in die Datenbank und das Einfügen von zwei Erweiterungs-Datensätzen in diese neu erstellte Erweiterungs-Datentabelle durch einen Benutzer erläutert.

Die Erweiterungs-Datentabelle 63 wird in die Datenbank eingefügt, in der vorher nur die Basis-Datentabelle 59 enthalten ist.

Hierfür wird vom Benutzer in dem vom Computersystem 1 bereitgestellten Menü die Menüfunktion "Einfügen von neuen Erweiterungs-Datentabellen" gewählt. Vom Computersystem wird eine Erweiterungs-Datentabelle angelegt und mit der Nummer "2" versehen. Es handelt sich hierbei um die Erweiterungs-Datentabelle 63.

Vom Computersystem 1 wird ein der Erweiterungs-Datentabelle 63 zugehöriger Erweiterungs-Eintragsindex 68 angelegt.

Anschließend fragt das Computersystem 1 vom Benutzer unter Verwendung eines Eingabemenüs die zu einem neu einzugebenden Erweiterungs-Datensatz gehörigen Informationen ab.

Der Benutzer gibt den ersten Erweiterungs-Datensatz 64: "Blau ist eine schöne Farbe. Sie ist schöner als rot." in das Computersystem 1 ein, der als erster Eintrag in der Erweiterungs-Datentabelle 63 abgespeichert wird. Das Computersystem 1 erzeugt eine dem ersten Erweiterungs-Datensatz 64 entsprechende erste Erweiterungs-Eintragsindexzeile 69 und legt in dieser einen Zeiger auf den Beginn des ersten Erweiterungs-Datensatzes 64 in der Datentabelle "1" und eine Information auf die Länge des ersten Erweiterungs-Datensatzes 64 in der Datentabelle "51" ab, wodurch die Position und die Länge des ersten Erweiterungs-Datensatzes 64 "Blau ist eine schöne Farbe. Sie ist schöner als Rot." in der Erweiterungs-Datentabelle 63 eindeutig bestimmt ist.

Die weiteren zu diesem ersten Erweiterungs-Datensatz 64 gehörenden Informationen werden vom Benutzer über das bereitgestellte Menü zur Eingabe von Erweiterungs-Datensätzen in das Computersystem 1 eingegeben. Es handelt sich hierbei um die Identifikationsnummer "1" und das zugeordnete Stichwort "blau". Aus diesen Informationen vervollständigt das Computersystem 1 die dem ersten Erweiterungs-Datensatz 64 entsprechende erste Erweiterungs-Eintragsindexzeile 69 mit einer laufenden Reihenfolgenummer "1", mit einer Identifikationsnummer "1" und mit einem Stichwort "blau".

Dieser erste Erweiterungs-Datensatz 64 ersetzt den ersten Basis-Datensatz 60, da beide Datensätze die Identifikationsnummer "1" aus dem Nummernkreis "1 bis 99" aufweisen.

Anschließend ruft der Benutzer die Menüfunktion "Eingabe von Erweiterungs-Datensätzen" auf und gibt den zweiten Erweiterungs-Datensatz 65: "Ist weiß eine Farbe?" in das Computersystem 1 ein, der als zweiter Eintrag direkt im Anschluß an den ersten Erweiterungs-Datensatz 64 in der Erweiterungs-Datentabelle 63 abgespeichert wird.

Das Computersystem 1 erzeugt eine zweite Erweiterungs-Eintragsindexzeile 70 und speichert in dieser einen Zeiger auf den Beginn des zweiten Erweiterungs-Datensatzes 65 in der Datentabelle "52" und eine Information auf die Länge des zweiten Erweiterungs-Datensatzes 65 in der Datentabelle "20", wodurch die Position und die Länge des zweiten Erweiterungs-Datensatzes 65 "Ist weiß eine Farbe?" in der Erweiterungs-Datentabelle 63 eindeutig bestimmt ist.

Die weiteren zu diesem zweiten Erweiterungs-Datensatz 65 gehörenden Informationen werden vom Benutzer über das bereitgestellte Menü zur Eingabe von Erweiterungs-Datensätzen in das Computersystem 1 eingegeben. Es handelt sich hierbei um die Identifikationsnummer "101" und das zugeordnete Stichwort "weiß". Mit diesen Informationen vervollständigt das Computersystem 1 die dem zweiten Erweiterungs-Datensatz 65 entsprechende zweite Erweiterungs-Eintragsindexzeile 70, die eine laufende Reihenfolgenummer "2", eine Identifikationsnummer "101" und ein Stichwort "weiß" enthält.

Dieser zweite Erweiterungs-Datensatz 65 stellt einen neuen Datensatz der Erweiterungs-Datentabelle 63 dar, da die Identifikationsnummer "101" des zweiten Erweiterungs-Datensatzes 65 in dem Nummernkreis "ab 100" enthalten ist.

Bei der Durchführung der Stichwortsuche im Ausführungsbeispiel wird auf den zweiten Zwischenindex 71 zugegriffen, der aus dem Basis-Eintragsindex 66 und aus dem Erweiterungs-Eintragsindex 68 erzeugt wird. Der einmal erzeugte zweite Zwischenindex 71 steht für eine beliebige Anzahl von Stichwortsuchen zur Verfügung. Er wird lediglich dann neu erzeugt, wenn Inhalte der Datenbank geändert werden.

Im zweiten Zwischenindex 71 ist die vierte Zwischenindexzeile 72 enthalten, welche der vom Benutzer eingegebenen ersten Erweiterungs-Eintragsindexzeile 70 entspricht. Dementsprechend ersetzt die erste Erweiterungs-Eintragsindexzeile 70 die erste Basis-Eintragsindexzeile 67.

Der zweite Zwischenindex 71 enthält an der vierten Position die fünfte Zwischenindexzeile 73, die einen neuen Inhalt in der Erweiterungs-Datentabelle 68 darstellt und die keine Basis-Eintragsindexzeile ersetzt.

Nach Beendigung der Eingaben durch den Benutzer wird die neue Erweiterungs-Datentabelle 63 mit dem zugehörigen Erweiterungs-Eintragsindex 68 vom Computersystem auf einem geeigneten Speichermedium wie der Festplatte 6 abgespeichert. Ebenfalls werden ein entsprechender Volltext-Wortindex und ein entsprechende Volltext-Referenzindex vom Computersystem 1 erzeugt und auf einem geeigneten Speichermedium wie der Festplatte 6 abgespeichert.

Bei Durchführung der Stichwortsuche werden zusätzlich ein oder mehrere Filterindizes erstellt und im Arbeitsspeicher RAM abgelegt. Bei Durchführung der Volltextsuche werden weiterhin Volltext-Zwischenindizes und Volltext-Filterindizes erstellt und im Arbeitsspeicher RAM abgelegt.

Das Einfügen der Erweiterungs-Datentabelle 68 in die Datenbank und das Einfügen des ersten Erweiterungs-Datensatzes 69 und des zweiten Erweiterungs-Datensatzes 70 in diese neu erstellte Erweiterungs-Datentabelle 68 ist damit abgeschlossen.

Bezugszeichenliste

| | |
|---|---|
| 1 | Computersystem |
| 2 | Eingabemedium |
| 3 | Ausgabemedium |
| 4 | Rechen- und Speichereinheit |
| 5 | CD/DVD-ROM-Laufwerk |
| 6 | Festplatte |
| 7 | Arbeitsspeicher RAM |
| 8 | erste Datentabelle |
| 9 | zweite Datentabelle |
| 10 | erster Datensatz |
| 11 | zweiter Datensatz |
| 12 | dritter Datensatz |
| 13 | erster Eintragsindex |
| 14 | zweiter Eintragsindex |
| 15 | erste Eintragsindexzeile |
| 16 | zweite Eintragsindexzeile |
| 17 | dritte Eintragsindexzeile |
| 18 | Attributstabelle |
| 19 | Attributstabellenzeile |
| 20 | Zwischenindex |
| 21 | erste Zwischenindexzeile |
| 22 | zweite Zwischenindexzeile |
| 23 | dritte Zwischenindexzeile |
| 24 | Filterindex |
| 25 | erste Filterindexzeile |
| 26 | zweite Filterindexzeile |
| 27 | erster Volltext-Zwischenindex |
| 28 | zweiter Volltext-Zwischenindex |
| 29 | erste Volltext-Zwischenindexzeile |
| 30 | zweite Volltext-Zwischenindexzeile |
| 31 | dritte Volltext-Zwischenindexzeile |
| 32 | erster Volltext-Wortindex |
| 33 | zweiter Volltext-Wortindex |
| 34 | erste Volltext-Wortindexzeile |

35 zweite Volltext-Wortindexzeile
36 dritte Volltext-Wortindexzeile
39 erster Volltext-Referenzindex
40 erste Volltext-Referenzindexzeile
41 zweite Volltext-Referenzindexzeile
42 dritte Volltext-Referenzindexzeile
43 vierte Volltext-Referenzindexzeile
44 fünfte Volltext-Referenzindexzeile
45 zweiter Volltext-Referenzindex
46 sechste Volltext-Referenzindexzeile
47 siebte Volltext-Referenzindexzeile
48 erster Volltext-Filterindex
49 zweiter Volltext-Filterindex
50 erste Volltext-Filterindexzeile
51 zweite Volltext-Filterindexzeile
52 dritter Volltext-Filterindex
53 vierter Volltext-Filterindex
54 erste Verknüpfungstabelle
55 zweite Verknüpfungstabelle
56 erste Verknüpfungstabellenzeile
57 zweite Verknüpfungstabellenzeile
58 dritte Verknüpfungstabellenzeile
59 Basis-Datentabelle
60 erster Basis-Datensatz
61 zweiter Basis-Datensatz
62 dritter Basis-Datensatz
63 Erweiterungs-Datentabelle
64 erster Erweiterungs-Datensatz
65 zweiter Erweiterungs-Datensatz
66 Basis-Eintragsindex
67 erste Basis-Eintragsindexzeile
68 Erweiterungs-Eintragsindex
69 erste Erweiterungs-Eintragsindexzeile
70 zweite Erweiterungs-Eintragsindexzeile
71 zweiter Zwischenindex
72 vierte Zwischenindexzeile
73 fünfte Zwischenindexzeile

## Patentansprüche

**1.** Computersystem (1) mit einem relativ schnellen Speichermedium wie einem Arbeitsspeicher RAM (7), mit wenigstens einem relativ langsamen Speichermedium (5, 6) wie einer Festplatte (6) und mit einem Datenbankprogramm, wobei das Computersystem (1) die folgenden Merkmale aufweist:

- wenigstens eine als Datei ausgebildete Datentabelle (8; 9) mit mehreren Datensätzen (10, 11; 12), die auf dem relativ langsamen Speichermedium (5, 6) angeordnet ist,
- je einen Eintragsindex (13; 14) zu jeder Datentabelle (8; 9), der auf dem relativ langsamen Speichermedium (5, 6) angeordnet ist, wobei jeder Eintragsindex (13, 14) mehrere Eintragsindexzeilen (15, 16; 17) enthält, wobei jede Eintragsindexzeile (15, 16; 17) einem Datensatz (10, 11; 12) entspricht, wobei jede Eintragsindexzeile (15, 16; 17) eine Information über die Position des entsprechenden Datensatzes (10, 11; 12) in der Datentabelle (8, 9) und ein Stichwort zu diesem Datensatz (10, 11; 12) aufweist,
- einen Zwischenindex (20), der in dem relativ schnellen Speichermedium (7) angeordnet ist, wobei jeder Zwischenindex (20) mehrere Zwischenindexzeilen (21, 22; 23) enthält, wobei jede Zwischenindexzeile (21, 22; 23) einer Eintragsindexzeile (15, 16; 17) entspricht, wobei jede Zwischenindexzeile (21, 22; 23) einen Teil des in der entsprechenden Eintragsindexzeile (15, 16; 17) vorgesehenen Stichworts und eine Information über die Position der entsprechenden Eintragsindexzeile (15, 16; 17) im jeweiligen Eintragsindex (13, 14) aufweist, wobei ein Suchbegriff in das Computersystem (1) eingebbar ist und wobei unter Heranziehung der im Zwischenindex (20) und der im Eintragsindex (13, 14) enthaltenen Informationen Datensätze (10, 11; 12) ausgebbar sind, die hinsichtlich des Stichworts Übereinstimmungen mit dem Suchbegriff aufweisen.

**2.** Computersystem (1) nach Anspruch 1,
**dadurch gekennzeichnet, daß**
der oder die Eintragsindizes (13, 14) alphabetisch nach Stichwörtern der Eintragsindexzeilen (15, 16; 17) sortiert vorliegen, wobei der Zwischenindex (20) durch Zusammenführung der Eintragsindizes (13, 14) erzeugbar ist und alphabetisch nach Stichwörtern sortiert vorliegt.

**3.** Computersystem (1) nach einem der vorhergehenden Ansprüche,
**dadurch gekennzeichnet, daß**
jede Eintragsindexzeile (15, 16; 17) eines Eintragsindexes (13; 14) und/oder jede Zwischenindexzeile (21, 22; 23) des Zwischenindexes (20) zusätzlich mindestens ein Attributsfeld zur Aufnahme von Attributswerten aufweist, wobei je ein Attributsfeld einer Attributsgruppe entspricht, wobei jede Attributsgruppe eine Vielzahl von Attributswerten und zugeordneten Attributstexten enthält, die in Attributstabellen (18) enthalten sind, wobei zusätzlich zum Suchbegriff für jede Attributsgruppe je ein Suchattributswert in das Computersystem (1) eingebbar ist und wobei unter Heranziehung der im Zwischenindex (20) und der im Eintragsindex (13; 14) enthaltenen Informationen Datensätze (10, 11; 12) ausgebbar sind, die hinsichtlich des betreffenden Stichworts und/oder hinsichtlich der Attributswerte Übereinstimmungen mit dem Suchbegriff und/oder mit den Suchattributswerten aufweisen.

**4.** Computersystem (1) nach einem der vorhergehenden Ansprüche,
**dadurch gekennzeichnet, daß**
zur Eingabe von Suchattributswerten in das Computersystem (1) die den Attributswerten entsprechenden Attributstexte anzeigbar sind und/oder daß zur Ausgabe von Datensätzen (10, 11; 12) die den jeweiligen Attributswerten zugeordneten Attributstexte ausgebbar sind.

**5.** Computersystem (1) nach einem der vorhergehenden Ansprüche,
**dadurch gekennzeichnet, daß**
der Zwischenindex (20) in den Zwischenindexzeilen (21, 22; 23) jeweils die drei ersten Buchstaben der betreffenden Stichwörter und jeweils eine Information über die Position der entsprechenden Eintragsindexzeile (15, 16; 17) im jeweiligen Eintragsindex (13, 14) enthält.

**6.** Computersystem (1) nach einem der vorhergehenden Ansprüche,
**dadurch gekennzeichnet, daß**
ein Filterindex (24) auf dem relativ schnellen Speichermedium (7) bildbar ist, der mehrere Filterindexzeilen (25, 26) enthält, wobei jede Filterindexzeile (25; 26) einer Zwischenindexzeile (21, 22; 23) zugeordnet ist, wobei jede Filterindexzeile (25, 26) eine Information über die Position der dem jeweiligen Datensatz (10, 11; 12) entsprechenden Zwischenindexzeile (21, 22; 23) im Zwischenindex (20) aufweist, wobei die Filterindexzeilen (25; 26) unter Heranziehung des Suchbegriffs aus den Zwischenindexzeilen (21, 22; 23) bildbar sind, die Übereinstimmung hinsichtlich des Suchbegriffs und/oder der Suchattributswerte aufweisen und wobei unter Heranziehung der im Filterindex (24), der im Zwischenindex (20) und der in den entsprechenden Eintragsindizes (13, 14) enthaltenen Informationen diejenigen Datensätze (10, 11; 12) bestimmbar sind, die als Ergebnis ausgegeben werden.

**7.** Computersystem (1) nach einem der vorhergehenden Ansprüche,
**dadurch gekennzeichnet, daß**
sich die einem Datensatz (10, 11; 12) zugehörigen Informationen gliedern in einen Eintragstext, in Stichwörter, in Attributswerte und in Informationen über die Position des Datensatzes (10, 11; 12) in der Datentabelle (8, 9), wobei der Eintragstext in einer Datentabelle (8, 9) gespeichert ist und die den Datensätzen (10, 11; 12) zugeordneten Stichwörter, die Attributswerte und die Informationen über die Position des Datensatzes (10, 11; 12) in der Datentabelle (8, 9) separat in den Eintragsindexzeilen (15, 16; 17) der den Datentabellen (8, 9) zugehörigen Eintragsindizes (13, 14) abgelegt sind.

**8.** Computersystem (1) nach einem der vorhergehenden Ansprüche,
**dadurch gekennzeichnet, daß**
die Datentabellen (8; 9), die Eintragsindizes (13; 14) und der Zwischenindex (20) auf Nur-Lese-Medien wie CD-ROM, DVD-ROM oder Internet vorliegen.

**9.** Verfahren zum Auslesen von Datensätzen (10, 11; 12) aus einer Datenbank auf einem Computersystem (1) gemäß einem der vorhergehenden Ansprüche, wobei das Verfahren die folgenden Schritte aufweist:

Schritt 1: Einlesen eines Suchbegriffs in das Computersystem (1)
Schritt 2: Vergleich wenigstens eines Teils des Suchbegriffs mit den in Zwischenindexzeilen (21, 22; 23) enthaltenen Informationen auf Übereinstimmung und Merken der Übereinstimmung aufweisenden Zwischenindexzeilen (21, 22; 23),
Schritt 3: Einlesen derjenigen Eintragsindexzeilen (15, 16; 17) in den Arbeitsspeicher RAM (7), die den Zwischenindexzeilen (21, 22; 23) entsprechen, bei denen in Schritt 2 eine Übereinstimmung gefunden wurde.
Schritt 4: Vergleich des Suchbegriffs in voller Länge mit den Stichwörtern der in Schritt 3 eingelesenen Eintragsindexzeilen (15, 16; 17) auf Übereinstimmung.
Schritt 5: Ausgabe derjenigen Datensätze (10, 11; 12) in alphabetisch aufsteigender Sortierung, bei denen in Schritt 4 Übereinstimmungen gefunden wurden.

**10.** Verfahren nach Anspruch 9,
**dadurch gekennzeichnet, daß**
der oder die Eintragsindizes (13, 14) alphabetisch nach Stichwörtern der Eintragsindexzeilen (15, 16; 17) sortiert vorliegen, wobei der Zwischenindex (20) durch Zusammenführung der Eintragsindizes (13, 14) alphabetisch nach Stichwörtern sortiert erstellt wird.

**11.** Verfahren nach Anspruch 9 oder 10,
**dadurch gekennzeichnet, daß**
anstelle der Schritte 1 und 2 die folgenden Schritte 1a und 2a durchgeführt werden:

Schritt 1a: Einlesen eines Suchbegriffs und wenigstens eines Suchattributswerts in das Computersystem (1)
Schritt 2a: Vergleich wenigstens eines Teils des Suchbegriffs mit den in den Zwischenindexzeilen (21, 22; 23) enthaltenen Informationen auf Übereinstimmung und/oder Vergleich der eingelesenen Suchattributswerte mit den in den jeweiligen Zwischenindexzeilen (21, 22; 23) enthaltenen Attributswerten und Merken der hinsichtlich des Suchbegriffs und/oder der Suchattributswerte Übereinstimmung aufweisenden Zwischenindexzeilen (21, 22; 23).

**12.** Verfahren nach einem der Ansprüche 9 bis 11,
**dadurch gekennzeichnet, daß**
zur Eingabe von Suchattributswerten in das Computersystem (1) die den Attributswerten entsprechenden Attributstexte anzeigbar sind und daß zur Ausgabe von Datensätzen (10, 11; 12) die den jeweiligen Attributswerten zugeordneten Attributstexte ausgebbar sind, wobei jede Eintragsindexzeile (15, 16; 17) eines Eintragsindexes (13; 14) und/oder jede Zwischenindexzeile (21, 22; 23) des Zwischenindexes (20) zusätzlich mindestens ein Attributsfeld zur Aufnahme von Attributswerten aufweist, wobei je ein Attributsfeld einer Attributsgruppe entspricht, wobei jede Attributsgruppe eine Vielzahl von Attributswerten und zugeordneten Attributstexten enthält, die in Attributstabellen (18) enthalten sind, wobei zusätzlich zum Suchbegriff für jede Attributsgruppe je ein Suchattributswert in das Computersystem (1) eingebbar ist und wobei unter Heranziehung der im Zwischenindex (20) und der im Eintragsindex (13; 14) enthaltenen Informationen Datensätze (10, 11; 12) ausgebbar sind, die hinsichtlich des betreffenden Stichworts und/oder hinsichtlich der Attributswerte Übereinstimmungen mit dem Suchbegriff und/oder mit den Suchattributswerten aufweisen.

**13.** Verfahren nach einem der Ansprüche 9 bis 12,
**dadurch gekennzeichnet, daß**
in den Zwischenindexzeilen (21, 22; 23) jeweils die drei ersten Buchstaben der betreffenden Stichwörter enthalten sind, und daß im Schritt 2 bzw. Schritt 2a des Verfahrens die drei ersten Buchstaben des Suchbegriffs mit den jeweils in den Zwischenindexzeilen (21, 22; 23) enthaltenen drei ersten Buchstaben der Stichwörter auf Übereinstimmung geprüft werden, wobei die Übereinstimmung aufweisenden Zwischenindexzeilen (21, 22; 23) gemerkt werden und wobei in Schritt 3 des Verfahrens diejenigen Eintragsindexzeilen (21, 22; 23) in das relativ schnelle Speichermedium (7) geladen werden, die den in Schritt 2 bzw. Schritt 2a des Verfahrens ermittelten Zwischenindexzeilen (21, 22; 23) entsprechen.

**14.** Verfahren nach einem der Ansprüche 9 bis 13,
**dadurch gekennzeichnet, daß**

- Schritt 2 bzw. Schritt 2a des Verfahrens zusätzlich das Erzeugen genau eines Filterindexes (24) insbesondere auf dem relativ schnellen Speichermedium (7) vorsieht, wobei jeder Filterindex (24) eine oder mehrere Filterindexzeilen (25, 26) aufweist, wobei jede Filterindexzeile (25, 26) einer Zwischenindexzeile (21, 22; 23) zugeordnet ist, wobei der Filterindex (24) in Filterindexzeilen (25; 26) Informationen über die Position der den gesuchten Datensätzen (10, 11; 12) entsprechenden Zwischenindexzeilen (21, 22; 23) im Zwischenindex (20) enthält und wobei der Filterindex (24) aus denjenigen Zwischenindexzeilen (21, 22; 23) bildbar ist, bei denen in Schritt 2 bzw. in Schritt 2a des Verfahrens eine Übereinstimmung wenigstens eines Teils des Suchbegriffs mit den in den Zwischenindexzeilen (21, 22; 23) enthaltenen Informationen und/oder eine Übereinstimmung der Suchattributswerte mit den in den Zwischenindexzeilen (21, 22; 23) enthaltenen Attributswerten vorkommt und
- daß in Schritt 3 diejenigen Eintragsindexzeilen (15, 16; 17) in das relativ schnelle Speichermedium (7) eingelesen werden, die den in Schritt 2 bzw. Schritt 2a ermittelten Zwischenindexzeilen (21, 22; 23) entsprechen.

**15.** Verfahren nach einem der Ansprüche 9 bis 14,
**dadurch gekennzeichnet, daß**
sich die einem Datensatz (10, 11; 12) zugehörigen Informationen gliedern in einen Eintragstext, in Stichwörter, in Attributswerte und in Informationen über die Position des Datensatzes (10, 11; 12) in der Datentabelle (8, 9), wobei die Eintragstexte in einer Datentabelle (8, 9) hintereinander abgespeichert werden und die weiteren Informationen, wie zugeordnete Stichwörter, Attributswerte und Informationen über die Position des Datensatzes (10, 11; 12) in der Datentabelle (8, 9) separat in den Eintragsindexzeilen (15, 16; 17) der den Datentabellen (8, 9) zugehörigen Eintragsindizes (13, 14) abgelegt werden.

**16.** Computersystem (1) mit einem relativ schnellen Speichermedium wie einem Arbeitsspeicher RAM (7), mit wenigstens einem relativ langsamen Speichermedium wie einer Festplatte (6) und mit einem Datenbankprogramm, wobei das Computersystem (1) die folgenden Merkmale aufweist:

- wenigstens eine als Datei ausgebildete Datentabelle (8, 9) mit mehreren insbesondere Wörter enthaltenden Datensätzen (10, 11, 12), die auf dem relativ langsamen Speichermedium (5, 6) angeordnet ist,
- je einen Eintragsindex (13, 14) zu jeder Datentabelle (8, 9), der auf dem relativ langsamen Speichermedium (5, 6) angeordnet ist, wobei jeder Eintragsindex (13, 14) mehrere Eintragsindexzeilen (15, 16, 17) enthält, wobei jede Eintragsindexzeile (15, 16, 17) einem Datensatz (10, 11, 12) entspricht, wobei jede Eintragsindexzeile (15, 16, 17) eine Information über die Position des entsprechenden Datensatzes (10, 11, 12) in der Datentabelle (8, 9) aufweist,
- zu jeder Datentabelle (8, 9) je einen auf dem relativ schnellen Speichermedium (7) angeordneten Volltext-Zwischenindex (27, 28) mit mehreren Volltext-Zwischenindexzeilen (29, 30, 31), wobei jede Volltext-Zwischenindexzeile (29, 30, 31) einer Eintragsindexzeile (15, 16, 17)) entspricht, wobei Volltext-Zwischenindexzeilen (29, 30, 31) Teile der in den Datensätzen (10, 11, 12) enthaltenen Wörter aufweisen,
- zu jeder Datentabelle (8, 9) je einen auf dem relativ langsamen Speichermedium (5, 6) angeordneten Volltext-Wortindex (32, 33) mit mehreren Volltext-Wortindexzeilen (34, 35, 36), wobei jede Volltext-Wortindexzeile (34, 35, 36) genau einer Volltext-Zwischenindexzeile (29, 30, 31) zugeordnet ist, wobei jede Volltext-Wortindexzeile (34, 35, 36) ein Wort aus einem Datensatz (10, 11; 12) und einen Zeiger auf eine Volltext-Referenzindexzeile (40, 41, 42, 43, 44, 46, 47) eines Volltext-Referenzindexes (39, 45) aufweist, wobei der Volltext-Referenzindex (39, 45) mehrere Volltext-Referenzindexzeilen (40, 41, 42, 43, 44, 46, 47) enthält und auf dem relativ langsamen Speichermedium (5, 6) angeordnet ist, wobei jede Volltext-Referenzindexzeile (40, 41, 42, 43, 44; 46, 47) je ein Zeichen aufweist, das entweder auf eine Eintragsindexzeile (15, 16, 17) verweist oder das eine Abschlußmarke enthält,
- zu jedem Eintragsindex (13, 14) mindestens einen auf dem relativ schnellen Speichermedium (7) angeordneten Volltext-Filterindex (48, 52, 49, 53) mit mehreren Volltext-Filterindexzeilen (50, 51), wobei jeder Volltext-Filterindex (48, 52, 49, 53) einem Eintragsindex (13, 14) zugeordnet ist, wobei jede Volltext-Filterindexzeile (50, 51) je einen Zeiger auf eine entsprechende Eintragsindexzeile (15, 16, 17) und je eine Information aufweist, die aussagt, ob ein Suchbegriff in dem der entsprechenden Eintragsindexzeile (15, 16, 17) zugeordneten Datensatz (10, 11, 12) enthalten ist,

und wobei wenigstens ein Suchbegriff in das Computersystem (1) eingebbar ist und wobei unter Heranziehung der in den Eintragsindizes (13, 14), der in den Volltext-Zwischenindizes (27, 28), der in den Volltext-Wortindizes (32, 33), der in den Volltext-Referenzindizes (39, 45) und der in den Volltext-Filterindizes (48, 52, 49, 53) enthaltenen Informationen Datensätze (10, 11, 12) ausgebbar sind, die Übereinstimmungen mit dem bzw. den Suchbegriffen aufweisen.

**17.** Computersystem (1) nach Anspruch 16,
**dadurch gekennzeichnet, daß**
das Computersystem (1) zusätzlich das folgende Merkmal aufweist:

- zu jeder Datentabelle (8, 9) je eine auf dem relativ schnellen Speichermedium (7) angeordnete Verknüpfungstabelle (54, 55) mit mehreren Verknüpfungstabellenzeilen (56, 57, 58), die aus mehreren Volltext-Filterindizes (48, 52; 49, 53) bildbar ist, wobei jede Verknüpfungstabellenzeile (56, 57, 58) einer Eintragsindexzeile (15, 16, 17) entspricht,

und wobei mehrere Suchbegriffe durch Boolesche Operatoren wie "UND", "ODER", "UND NICHT" miteinander verknüpft in das Computersystem (1) eingebbar sind, wobei unter Heranziehung der in den Eintragsindizes (13, 14), der in den Volltext-Zwischenindizes (27, 28), der in den Volltext-Wortindizes (32, 33), der in den Volltext-Referenzindizes (39, 45), der in den Volltext-Filterindizes (48, 52, 49, 53) und der in den Verknüpfungstabellen (54, 55) enthaltenen Informationen Datensätze (10, 11, 12) ausgebbar sind, die Übereinstimmungen mit den durch Boolesche Operatoren logisch verknüpften Suchbegriffen aufweisen.

**18.** Verfahren zum Auslesen von Datensätzen (10, 11, 12) aus einer Datenbank auf einem Computersystem (1) gemäß Anspruch 16,
**dadurch gekennzeichnet, daß**
das Verfahren die folgenden Schritte aufweist:

Schritt 1: Einlesen eines Suchbegriffs in das Computersystem (1)

Schritt 2: Vergleich wenigstens eines Teils des Suchbegriffs mit den in den Volltext-Zwischenindexzeilen (29, 30, 31) enthaltenen Informationen auf Übereinstimmung und Merken der Übereinstimmung aufweisenden Volltext-Zwischenindexzeilen (29, 30, 31),

Schritt 3: Einlesen derjenigen Volltext-Wortindexzeilen (34, 35, 36) der Volltext-Wortindizes (32, 33) in das relativ schnelle Speichermedium (7), deren entsprechende Volltext-Zwischenindexzeilen (29, 30, 31) in Schritt 2 eine Übereinstimmung aufweisen,

Schritt 4: Vergleich des Suchbegriffs in voller Länge mit den Stichwörtern der in Schritt 3 eingelesenen Volltext-Wortindexzeilen (34, 35, 36) auf Übereinstimmung und Merken der Übereinstimmung aufweisenden Volltext-Wortindexzeilen (34, 35, 36),

Schritt 5: Aufruf der Volltext-Referenzindexzeilen (40, 41, 42, 43, 44, 46, 47) der Volltext-Referenzindizes (39, 45), die den in Schritt 4 gemerkten Volltext-Wortindexzeilen (34, 35, 36) entsprechen, wobei die Volltext-Referenzindexzeilen (40, 41, 42, 43, 44, 46, 47) zeilenweise bis zum Auffinden der Abschlußmarke nach unten durchlaufen werden, und wobei die in den Volltext-Referenzindexzeilen (40, 41, 42, 43, 44, 46, 47) enthaltenen laufenden Nummern der Eintragsindexzeilen (15, 16, 17) gemerkt werden,

Schritt 6: Erzeugen je eines Volltext-Filterindizes (48, 52, 49, 53) für jeden Eintragsindex (13, 14) insbesondere im relativ schnellen Speichermedium (7) aus den in Schritt 5 gemerkten laufenden Nummern der Eintragsindexzeilen (15, 16, 17), wobei jede Volltext-Filterindexzeile (50, 51) einer Eintragsindexzeile (15, 16, 17) zugeordnet ist, wobei jede Volltext-Filterindexzeile (50, 51) einen Zeiger auf eine Eintragsindexzeile (15, 16, 17) und eine Information aufweist, die aussagt, ob der Suchbegriff in dem der entsprechenden Eintragsindexzeile (15, 16, 17) zugeordneten Datensatz (10, 11, 12) enthalten ist,

Schritt 7: Bestimmung derjenigen Volltext-Filterindexzeilen (50, 51), welche die Information enthalten, daß der Suchbegriff in dem der entsprechenden Eintragsindexzeile (15, 16, 17) zugeordneten Datensatz (10, 11, 12) enthalten ist,

Schritt 8: Ausgabe derjenigen Datensätze (10, 11, 12), die den in Schritt 7 ermittelten Volltext-Filterindexzeilen (50, 51) entsprechen, wobei zur Ermittlung der Position dieser Datensätze (10, 11, 12) in den Datentabellen (8, 9) die den Volltext-Filterindexzeilen (50, 51) entsprechenden Eintragsindexzeilen (15, 16, 17) verwendet werden.

**19.** Verfahren zum Auslesen von Datensätzen (10, 11, 12) aus einer Datenbank auf einem Computersystem (1) gemäß Anspruch 17,
**dadurch gekennzeichnet, daß**
mehrere Suchbegriffe in das Computersystem (1) eingebbar sind, wobei die Suchbegriffe durch Boolesche Operatoren miteinander verknüpfbar sind und wobei anstelle der Schritte 1, 7 und 8 die folgenden Schritte 1a, 7a und 8a durchgeführt werden:

Schritt 1a: Einlesen mehrerer Suchbegriffe in das Computersystem (1), wahlweise durch Boolesche Operatoren miteinander verknüpft, wobei für jeden Suchbegriff die Schritte 2 bis 6 einzeln durchlaufen werden,

Schritt 7a: Erzeugen je einer Verknüpfungstabelle (54, 55) für jeden Eintragsindex (13, 14) aus den Informationen der in Schritt 6 ermittelten Volltext-Filterindizes (48, 52, 49, 53) vorzugsweise im relativ schnellen Speichermedium (7), wobei jede Verknüpfungstabellenzeile (56, 57, 58) genau einer Eintragsindexzeile (15, 16, 17) entspricht, wobei die Informationen der Volltext-Filterindizes (48, 52, 49, 53) in je einer Verknüpfungstabelle (54, 55) zusammengefaßt und zeilenweise mittels des in Schritt 1a eingelesenen Booleschen Operators miteinander verknüpft werden,

Schritt 8a: Bestimmung derjenigen Verknüpfungstabellenzeilen (56, 57, 58), welche die Information enthalten, daß die Volltext-Suchbegriffe in der gesuchten logischen Verknüpfung in den jeweils über die Eintragsindexzeilen (15, 16, 17) zugeordneten Datensätzen (10, 11, 12) enthalten sind und Ausgabe derjenigen Datensätze (10, 11, 12), die den ermittelten Verknüpfungstabellenzeilen (56, 57, 58) entsprechen, wobei zur Ermittlung der Position dieser Datensätze (10, 11, 12) in den Datentabellen (8, 9) die den Verknüpfungstabellenzeilen (50, 51) entsprechenden Eintragsindexzeilen (15, 16, 17) verwendet werden.

**20.** Verfahren nach Anspruch 19,
**dadurch gekennzeichnet, daß**
in Schritt 1a drei oder mehr Suchbegriffe eingelesen werden, wobei in Schritt 7a für jeden Eintragsindex (13, 14) je eine Verknüpfungstabelle (54, 55) erstellt wird, wobei aus den Informationen der ersten zwei in Schritt 6 ermittelten Volltext-Filterindizes (48, 52, 49, 53) mittels des in Schritt 1a eingelesenen Booleschen Operators eine erste Verknüpfungstabelle (54, 55) erstellt wird, wobei anschließend für jeden weiteren Volltext-Filterindex (48, 49, 52, 53) eine neue Verknüpfungstabelle (54, 55) erstellt wird, welche die vorhandene Verknüpfungstabelle (54, 55) ersetzt, indem die Informationen des Volltext-Filterindexes (48, 49, 52, 53) mit den Informationen der vorhandenen Verknüpfungstabelle (54, 55) in einer neuen Verknüpfungstabelle (54, 55) mittels des in Schritt 1a eingelesenen Booleschen Operators miteinander verknüpft werden.

**21.** Verfahren nach einem der Ansprüche 18 bis 20,
**dadurch gekennzeichnet, daß**
in den Volltext-Zwischenindexzeilen (29, 30, 31) jeweils die zwei ersten Buchstaben der betreffenden Wörter enthalten sind.

**22.** Computersystem (1) mit einem relativ schnellen Speichermedium wie einem Arbeitsspeicher RAM (7), mit wenigstens einem relativ langsamen Speichermedium wie einer DVD/CD-ROM (5) oder einer Festplatte (6) und mit einem Datenbankprogramm, wobei das Computersystem (1) die folgenden Merkmale aufweist:

- eine als Datei ausgebildete Basis-Datentabelle (59) mit mehreren Basis-Datensätzen (60, 61, 62), die auf dem relativ langsamen Speichermedium (5, 6) angeordnet ist,
- wenigstens eine als Datei ausgebildete Erweiterungs-Datentabelle (63) mit mehreren Erweiterungs-Datensätzen (64, 65), die auf dem relativ langsamen Speichermedium (5, 6) oder auf dem relativ schnellen Speichermedium (7) angeordnet ist,
- je einen Eintragsindex (66, 68) zu der Basis-Datentabelle (59) und zu jeder Erweiterungs-Datentabelle (63), der auf dem relativ langsamen Speichermedium (5, 6) angeordnet ist, wobei jeder Eintragsindex (66, 68) mehrere Eintragsindexzeilen (67, 69, 70) enthält, wobei jede Eintragsindexzeile (67, 69, 70) einem Basis-Datensatz (60, 61, 62) oder einem Erweiterungs-Datensatz (64, 65) entspricht, wobei jede Eintragsindexzeile (67; 69, 70) eine Information über die Position des entsprechenden Basis-Datensatzes (60, 61, 62) in der Basis-Datentabelle (59) oder des entsprechenden Erweiterungs-Datensatzes (64, 65) in der Erweiterungs-Datentabelle (63) sowie ein Stichwort zu dem Basis-Datensatz (60, 61, 62) oder zu dem Erweiterungs-Datensatz (64, 65) aufweist,
- einen Zwischenindex (71), der in dem relativ schnellen Speichermedium (7) angeordnet ist, wobei jeder Zwischenindex (71) mehrere Zwischenindexzeilen (72, 73) aufweist, wobei jede Zwischenindexzeile (72, 73) einer Eintragsindexzeile (67, 69, 70) entspricht, wobei jede Zwischenindexzeile (72, 73) einen Teil des in der entsprechenden Eintragsindexzeile (67; 69, 70) vorgesehenen Stichworts und eine Information über die Position der der Zwischenindexzeile (72, 73) entsprechenden Eintragsindexzeile (67; 69, 70) im jeweiligen Eintragsindex (66, 68) aufweist.

**23.** Computersystem (1) nach Anspruch 22,
**dadurch gekennzeichnet, daß**

jede Eintragsindexzeile (67, 69, 70) und/oder jede Zwischenindexzeile (72, 73) zusätzlich ein Feld zur Aufnahme einer Identifikationsnummer aufweist, wobei die Identifikationsnummer den der Eintragsindexzeile (67, 69, 70) und/ oder der Zwischenindexzeile (72, 73) entsprechenden Basis-Datensatz (60, 61, 62) bzw. Erweiterungs-Datensatz (64, 65) eindeutig bestimmt.

**24.** Computersystem (1) nach Anspruch 23,
**dadurch gekennzeichnet, daß**
verschiedene Nummernkreise für die Identifikationsnummern vorgesehen sind, aus denen die Identifikationsnummern wählbar sind, wobei ein Nummernkreis vorgesehen ist für Basis-Datensätze (60, 61, 62) und für Erweiterungs-Datensätze (64, 65), die Basis-Datensätze (60, 61, 62) ersetzen und wobei ein weiterer Nummernkreis vorgesehen ist für Erweiterungs-Datensätze (64, 65), die neue Datensätze der Erweiterungs-Datentabelle (63) darstellen und die keine vorhandenen Basis-Datensätze (60, 61, 62) ersetzen.

**25.** Verfahren zum Einfügen von Erweiterungs-Datensätzen (64, 65) in eine als Datei ausgestaltete Erweiterungs-Datentabelle (63) einer erweiterbaren Datenbank mit einem Datenbankprogramm auf einem Computersystem (1) gemäß einem der Ansprüche 22 bis 24, wobei das Verfahren die folgenden Schritte aufweist:

- Eingabe eines Eintragstextes und wenigstens eines zugeordneten Stichworts in das Computersystem (1) durch einen Benutzer,
- Speicherung des Eintragstextes als Erweiterungs-Datensatz (64, 65) in einer Erweiterungs-Datentabelle (63) auf dem relativ langsamen Speichermedium (6) durch das Datenbankprogramm,
- Erzeugen einer dem Erweiterungs-Datensatz (64, 65) entsprechenden Erweiterungs-Eintragsindexzeile (69, 70) in dem der Erweiterungs-Datentabelle (63) entsprechenden und mehrere Erweiterungs-Eintragsindexzeilen (69, 70) aufweisenden Erweiterungs-Eintragsindex (68) durch das Datenbankprogramm und Speicherung des Erweiterungs-Eintragsindexes (68) auf dem relativ langsamen Speichermedium (6), wobei in jeder Erweiterungs-Eintragsindexzeile (69, 70) Informationen über die Position des entsprechenden Erweiterungs-Datensatzes (64, 65) in der Erweiterungs-Datentabelle (63) und das dem Erweiterungs-Datensatz (64, 65) zugeordnete Stichwort enthalten sind,
- Wiederholen der vorhergehenden Schritte für jeden weiteren von einem Benutzer eingegebenen Eintragstext,
- Aktualisieren des mehrere Zwischenindexzeilen (72, 73) aufweisenden Zwischenindexes (20, 71) auf dem Computersystem (1) durch das Datenprogramm, wobei im Zwischenindex (20, 71) jeder Erweiterungs-Eintragsindexzeile (69, 70) eine Zwischenindexzeile (72, 73) entspricht, wobei jede Zwischenindexzeile (72, 73) einen Teil des in der entsprechenden Eintragsindexzeile (67, 69, 70) vorgesehenen Stichworts und eine Information über die Position der entsprechenden Eintragsindexzeile (67, 69, 70) im jeweiligen Eintragsindex (66, 68) aufweist.

**26.** Verfahren nach Anspruch 25,
**dadurch gekennzeichnet, daß**
nach dem Einfügen von Erweiterungs-Datensätzen (64, 65) die Indizes der Datenbank insbesondere die Volltext-Wortindizes (32, 33) und die Volltext-Referenzindizes (39, 45) automatisch ergänzt und abgespeichert werden.

**27.** Verfahren nach einem der Ansprüche 25 oder 26,
**dadurch gekennzeichnet, daß**
bei der Eingabe von Erweiterungs-Datensätzen (64, 65) durch einen Benutzer zusätzlich je eine dem Erweiterungs-Datensatz (64, 65) zugeordnete Identifikationsnummer in das Computersystem (1) eingegeben wird, wobei die Identifikationsnummer in dem der Erweiterungs-Datentabelle (63) entsprechenden Erweiterungs-Eintragsindex (68) abgelegt wird.

**28.** Verfahren nach Anspruch 27,
**dadurch gekennzeichnet, daß**
verschiedene Nummernkreise für die Identifikationsnummern vorgesehen sind, aus denen die Identifikationsnummern wählbar sind, wobei durch die Wahl der Identifikationsnummern aus den Nummernkreisen festlegbar ist, ob ein Erweiterungs-Datensatz (64, 65), der dieselbe Identifikationsnummer aufweist wie ein vorhandener Basis-Datensatz (60, 61, 62), diesen im Zwischenindex (20, 71) ersetzt oder ob ein Erweiterungs-Datensatz (64, 65) als neuer Datensatz in die Erweiterungs-Datentabelle (63) eingefügt wird und keinen vorhandenen Basis-Datensatz (60, 61, 62) ersetzt.

**29.** Verfahren zum Einfügen von als Datei ausgestalteten Erweiterungs-Datentabellen (63) in eine erweiterbare Datenbank mit einem Datenbankprogramm auf einem Computersystem (1),
**dadurch gekennzeichnet, daß**
eine Erweiterungs-Datentabelle (63) und ein entsprechender Erweiterungs-Eintragsindex (68) durch das Datenbankprogramm erzeugt werden und anschließend in einem Verfahren gemäß einem der Ansprüche 25 bis 28 wenigstens ein Erweiterungs-Datensatz (64, 65) in die erzeugte Erweiterungs-Datentabelle (63) und wenigstens ein zugeordnetes Stichwort und/oder eine zugeordnete Identifikationsnummer in den erzeugten Erweiterungs-Eintragsindex (68) eingefügt werden, wobei die Erweiterungs-Datentabelle (63) und der Erweiterungs-Eintragsindex (68) auf dem relativ langsamen Speichermedium (6) oder auf dem relativ schnellen Speichermedium (7) abgelegt werden.

**30.** Verfahren nach Anspruch 29,
**dadurch gekennzeichnet, daß**
nach dem Erzeugen der Erweiterungs-Datentabelle (63) und des Erweiterungs-Eintragsindexes (68) die entsprechenden Indizes insbesondere die Volltext-Wortindizes (32, 33) und die Volltext-Referenzindizes (39, 45) automatisch erstellt und abgespeichert werden.

**31.** Computerprogrammprodukt sowie Computerprogramm zur Stichwortsuche in Datenbanken nach Eingabe von Suchbegriffen in das Computersystem, das so ausgebildet ist, daß ein Verfahren gemäß einem der Ansprüche 9 bis 15, 18 bis 21 oder 25 bis 30 ausführbar ist.

**32.** Datenträger mit einem Computerprogrammprodukt bzw. Computerprogramm nach Anspruch 31.

**33.** Computerprogramm nach Anspruch 31, das auf einem Speichermedium enthalten ist.

**34.** Computerprogramm nach Anspruch 31, das in einem Computerspeicher abgelegt ist.

**35.** Computerprogramm nach Anspruch 31, das in einem Direktzugriffsspeicher enthalten ist.

**36.** Computerprogramm nach Anspruch 31, das auf einem elektrischen Trägersignal übertragen wird.

**37.** Datenträger mit einem Computerprogrammprodukt bzw. Computerprogramm nach Anspruch 31.

**38.** Verfahren, bei dem ein Computerprogrammprodukt bzw. Computerprogramm nach Anspruch 31 aus einem elektronischen Datennetz wie beispielsweise aus dem Internet auf einen an das Datennetz angeschlossenen Computer heruntergeladen wird.

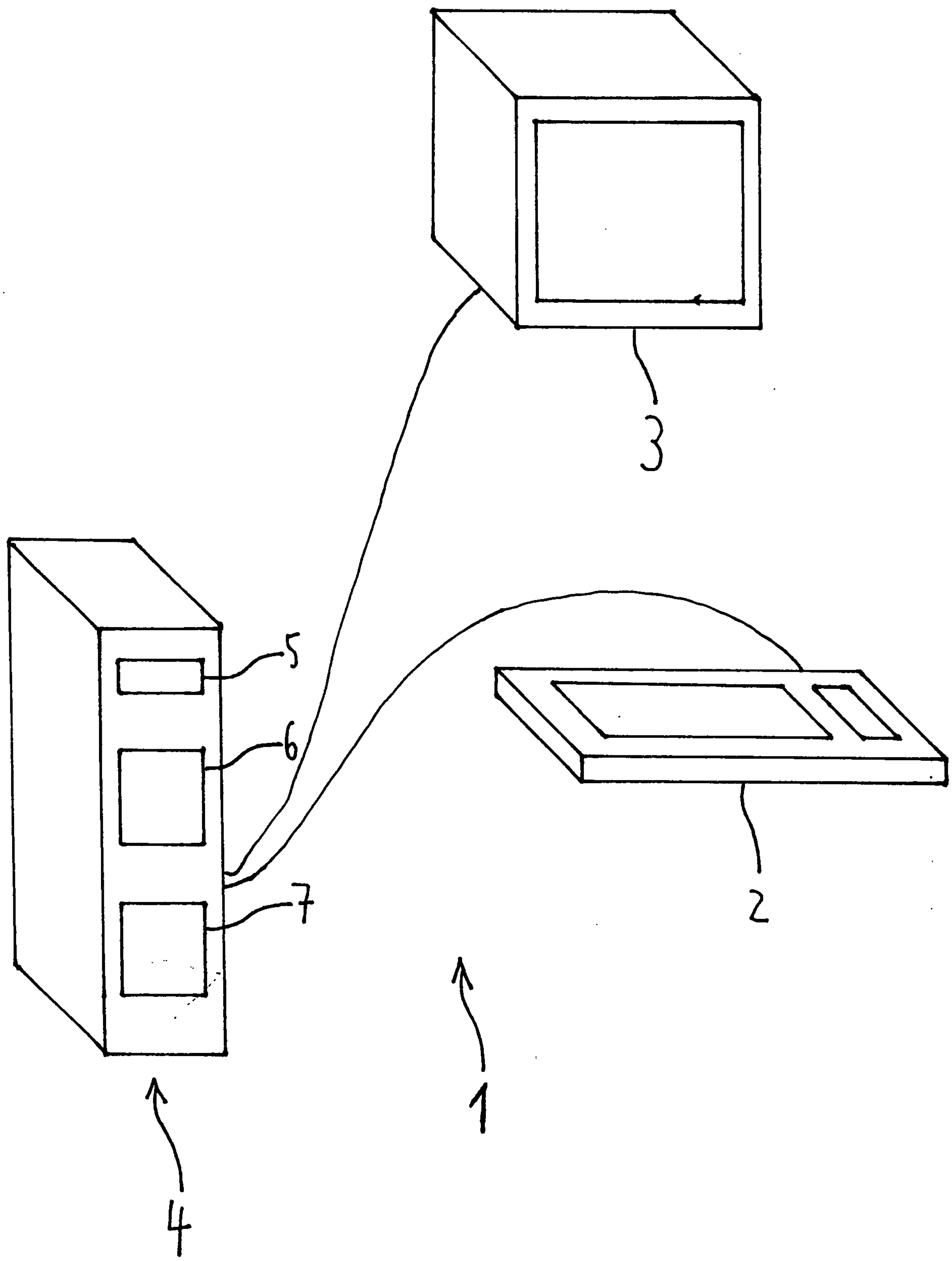


Fig. 1

8

10

| | | | | | | | | | | | | | | | | | | | |
|---|---|---|---|---|---|---|---|---|---|---|---|---|---|---|---|---|---|---|---|
| D | i | e | | B | l | u | m | e | | i | s | t | | s | c | h | ö | n | . |
| 1 | 2 | 3 | 4 | 5 | 6 | 7 | 8 | 9 | 10 | 11 | 12 | 13 | 14 | 15 | 16 | 17 | 18 | 19 | 20 |

11

| | | | | | | | | | | | | | | | | | | |
|---|---|---|---|---|---|---|---|---|---|---|---|---|---|---|---|---|---|---|
| D | e | r | | M | a | n | n | | i | s | t | | m | u | t | i | g | . |
| 22 | 23 | 24 | 26 | 27 | 28 | 29 | 30 | 31 | 32 | 33 | 34 | 34 | 34 | 35 | 36 | 37 | 38 | 39 |

9

12

| | | | | | | | | | | | | | | | | | | | |
|---|---|---|---|---|---|---|---|---|---|---|---|---|---|---|---|---|---|---|---|
| E | i | n | | B | l | u | m | e | n | l | a | d | e | n | | i | s | t | |
| 1 | 2 | 3 | 4 | 5 | 6 | 7 | 8 | 9 | 10 | 11 | 12 | 13 | 14 | 15 | 16 | 17 | 18 | 19 | 20 |

| | | | | | | | | | | | | | | | | | | | |
|---|---|---|---|---|---|---|---|---|---|---|---|---|---|---|---|---|---|---|---|
| s | o | n | n | t | a | g | s | | h | ä | u | f | i | g | | g | e | s | c |
| 22 | 23 | 24 | 26 | 27 | 28 | 29 | 30 | 31 | 32 | 33 | 34 | 34 | 34 | 35 | 36 | 37 | 38 | 39 | 40 |

| | | | | | | | |
|---|---|---|---|---|---|---|---|
| h | l | o | s | s | e | n | . |
| 41 | 42 | 43 | 44 | 45 | 46 | 47 | 48 |

Fig. 2

13

| Laufende Reihenfolgenummer | Stichwort | Attributswert | Beginn des Datensatzes in der Datentabelle | Länge des Datensatzes in der Datentabelle |
|---|---|---|---|---|
| 1 | Blume | 1 | 1 | 20 |
| 2 | Mann | 2 | 21 | 19 |
| 3 | Mut | 2 | 21 | 19 |
| 4 | Schönheit | 1 | 1 | 20 |

15, 16

14

| Laufende Reihenfolgenummer | Stichwort | Attributswert | Beginn des Datensatzes in der Datentabelle | Länge des Datensatzes in der Datentabelle |
|---|---|---|---|---|
| 1 | Blume | 1 | 1 | 48 |
| 2 | Öffnungszeit | 1 | 1 | 48 |

17

Fig. 3

18

19

| Attributswert | Attribut |
|---|---|
| 1 | Pflanzen |
| 2 | Menschen |

Fig. 4

20

| | Erster Buchstabe | Zweiter Buchstabe | Dritter Buchstabe | Attri-butswert | Nummer der Datenta-belle/des Eintrags-indexes | Laufende Reihen-folgenum-mer im Eintrags-index |
|---|---|---|---|---|---|---|
| 21 | b | l | u | 1 | 1 | 1 |
| 22 | b | l | u | 1 | 2 | 1 |
| 23 | m | a | n | 2 | 1 | 2 |
| | m | u | t | 2 | 1 | 3 |
| | ö | f | f | 1 | 2 | 2 |
| | s | c | h | 1 | 1 | 4 |

Fig. 5

24

| | Laufende Nummer im Zwischenindex |
|---|---|
| 25 | 1 |
| 26 | 2 |

Fig. 6

27

| Laufende Ordnungsnummer | Erster Buchstabe | Zweiter Buchstabe |
|---|---|---|
| 1 | b | l |
| 2 | d | e |
| 3 | d | i |
| 29 — 4 | i | s |
| 30 — 5 | m | a |
| 6 | m | u |
| 7 | s | c |

28

| Laufende Ordnungsnummer | Erster Buchstabe | Zweiter Buchstabe |
|---|---|---|
| 1 | b | l |
| 2 | e | i |
| 3 | h | ä |
| 4 | g | e |
| 31 — 5 | i | s |
| 6 | s | o |

Fig. 7

32

| | Laufende Ordnungs-nummer | Wort | Zeiger auf laufende Nummer im Volltext-Referenzindex |
|---|---|---|---|
| | 1 | blume | 1 |
| | 2 | der | 4 |
| | 3 | die | 7 |
| 34 | 4 | ist | 10 |
| 35 | 5 | mann | 15 |
| | 6 | mutig | 18 |
| | 7 | schön | 21 |

33

| | Laufende Ordnungs-nummer | Wort | Zeiger auf laufende Nummer im Volltext-Referenzindex |
|---|---|---|---|
| | 1 | blumenladen | 1 |
| | 2 | ein | 4 |
| | 3 | häufig | 7 |
| | 4 | geschlossen | 10 |
| 36 | 5 | ist | 13 |
| | 6 | sonntags | 16 |

Fig. 8

39

| | Laufende Nummer | Laufende Reihenfolgenummer im Eintragsindex |
|---|---|---|
| | 1 | 1 |
| | 2 | 4 |
| | 3 | 0 |
| | 4 | 2 |
| | 5 | 3 |
| | 6 | 0 |
| | 7 | 1 |
| | 8 | 4 |
| | 9 | 0 |
| 40 | 10 | 1 |
| 41 | 11 | 2 |
| | 12 | 3 |
| | 13 | 4 |
| 42 | 14 | 0 |
| 43 | 15 | 2 |
| | 16 | 3 |
| 44 | 17 | 0 |
| | 18 | 2 |
| | 19 | 3 |
| | 20 | 0 |
| | 21 | 1 |
| | 22 | 4 |
| | 23 | 0 |

Fig. 9

45

| Laufende Nummer | Laufende Reihenfolgenummer im Eintragsindex |
|---|---|
| 1 | 1 |
| 2 | 2 |
| 3 | 0 |
| 4 | 1 |
| 5 | 2 |
| 6 | 0 |
| 7 | 1 |
| 8 | 2 |
| 9 | 0 |
| 10 | 1 |
| 11 | 2 |
| 12 | 0 |
| 13 | 1 |
| 14 | 2 |
| 15 | 0 |
| 16 | 1 |
| 17 | 2 |
| 18 | 0 |

46 (row 13), 47 (row 15)

Fig. 10

48

| | Laufende Reihenfolgenummer im Eintragsindex | Volltext-Suchbegriff "ist" vorhanden? |
|---|---|---|
| 50 | 1 | 1 |
| | 2 | 1 |
| | 3 | 1 |
| | 4 | 1 |

49

| | Laufende Reihenfolgenummer im Eintragsindex | Volltext-Suchbegriff "mann" vorhanden? |
|---|---|---|
| 51 | 1 | 0 |
| | 2 | 1 |
| | 3 | 1 |
| | 4 | 0 |

Fig. 11

52

| Laufende Reihenfolgenummer im Eintragsindex | Volltext-Suchbegriff "ist" vorhanden? |
|---|---|
| 1 | 1 |
| 2 | 1 |

53

| Laufende Reihenfolgenummer im Eintragsindex | Volltext-Suchbegriff "mann" vorhanden? |
|---|---|
| 1 | 0 |
| 2 | 0 |

Fig. 12

54

| Laufende Reihenfolgenummer im Eintragsindex | Boolesche UND-Verknüpfung |
|---|---|
| 1 | 0 |
| 2 | 1 |
| 3 | 1 |
| 4 | 0 |

(56, 57, 58 → rows 1, 2, 3)

55

| Laufende Reihenfolgenummer im Eintragsindex | Boolesche UND-Verknüpfung |
|---|---|
| 1 | 0 |
| 2 | 0 |

Fig. 13

59

60

| | | | | | | | | | | | | | | | | | | | |
|---|---|---|---|---|---|---|---|---|---|---|---|---|---|---|---|---|---|---|---|
| B | l | a | u | | i | s | t | | e | i | n | e | | s | c | h | ö | n | e |
| 1 | 2 | 3 | 4 | 5 | 6 | 7 | 8 | 9 | 10 | 11 | 12 | 13 | 14 | 15 | 16 | 17 | 18 | 19 | 20 |

61

| | | | | | | | | | | | | | | | | | | | |
|---|---|---|---|---|---|---|---|---|---|---|---|---|---|---|---|---|---|---|---|
| | F | a | r | b | e | . | G | r | ü | n | | i | s | t | | e | i | n | e |
| 21 | 22 | 23 | 24 | 25 | 26 | 27 | 28 | 29 | 30 | 31 | 32 | 33 | 34 | 35 | 36 | 37 | 38 | 39 | 40 |

62

| | | | | | | | | | | | | | | | | | | | |
|---|---|---|---|---|---|---|---|---|---|---|---|---|---|---|---|---|---|---|---|
| | s | c | h | ö | n | e | | F | a | r | b | e | . | R | o | t | | i | s |
| 41 | 42 | 43 | 44 | 45 | 46 | 47 | 48 | 49 | 50 | 51 | 52 | 53 | 54 | 55 | 56 | 57 | 58 | 59 | 60 |

| | | | | | | | | | | | | | | | | | | | |
|---|---|---|---|---|---|---|---|---|---|---|---|---|---|---|---|---|---|---|---|
| t | | e | i | n | e | | s | c | h | ö | n | e | | F | a | r | b | e | . |
| 61 | 62 | 63 | 64 | 65 | 66 | 67 | 68 | 69 | 70 | 71 | 72 | 73 | 74 | 75 | 76 | 77 | 78 | 79 | 80 |

63

64

| | | | | | | | | | | | | | | | | | | | |
|---|---|---|---|---|---|---|---|---|---|---|---|---|---|---|---|---|---|---|---|
| B | l | a | u | | i | s | t | | e | i | n | e | | s | c | h | ö | n | e |
| 1 | 2 | 3 | 4 | 5 | 6 | 7 | 8 | 9 | 10 | 11 | 12 | 13 | 14 | 15 | 16 | 17 | 18 | 19 | 20 |

| | | | | | | | | | | | | | | | | | | | |
|---|---|---|---|---|---|---|---|---|---|---|---|---|---|---|---|---|---|---|---|
| | F | a | r | b | e | . | S | i | e | | i | s | t | | s | c | h | ö | n |
| 21 | 22 | 23 | 24 | 25 | 26 | 27 | 28 | 29 | 30 | 31 | 32 | 33 | 34 | 35 | 36 | 37 | 38 | 39 | 40 |

65

| | | | | | | | | | | | | | | | | | | | |
|---|---|---|---|---|---|---|---|---|---|---|---|---|---|---|---|---|---|---|---|
| e | r | | a | l | s | | r | o | t | . | I | s | t | | w | e | i | ß | |
| 41 | 42 | 43 | 44 | 45 | 46 | 47 | 48 | 49 | 50 | 51 | 52 | 53 | 54 | 55 | 56 | 57 | 58 | 59 | 60 |

| | | | | | | | | | | |
|---|---|---|---|---|---|---|---|---|---|---|
| e | i | n | e | | F | a | r | b | e | ? |
| 61 | 62 | 63 | 64 | 65 | 66 | 67 | 68 | 69 | 70 | 71 |

Fig. 14

66

| Laufende Reihenfolgenummer | Identifikations-Nummer | Stichwort | Beginn des Datensatzes in der Datentabelle | Länge des Datensatzes in der Datentabelle |
|---|---|---|---|---|
| 1 | 1 | blau | 1 | 27 |
| 2 | 2 | grün | 28 | 27 |
| 3 | 3 | rot | 55 | 26 |

67

Fig. 15

68

| | Laufende Reihenfolgenummer | Identifikations-Nummer | Stichwort | Beginn des Datensatzes in der Datentabelle | Länge des Datensatzes in der Datentabelle |
|---|---|---|---|---|---|
| 69 | 1 | 1 | blau | 1 | 51 |
| 70 | 2 | 101 | weiß | 52 | 20 |

Fig. 16

71

| | Erster Buchstabe | Zweiter Buchstabe | Dritter Buchstabe | Nummer der Datentabelle/des Eintragsindexes | Laufende Reihenfolgenummer im Eintragsindex |
|---|---|---|---|---|---|
| 72 | b | l | a | 2 | 1 |
| | g | r | ü | 1 | 2 |
| | r | o | t | 1 | 3 |
| 73 | w | e | i | 2 | 2 |

Fig. 17

Europäisches Patentamt

# EUROPÄISCHER RECHERCHENBERICHT

Nummer der Anmeldung
EP 01 11 9749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | SPINELLIS D: "The design and implementation of a legal text database" DATABASE AND EXPERT SYSTEMS APPLICATIONS. 5TH INTERNATIONAL CONFERENCE, DEXA '94 PROCEEDINGS, PROCEEDINGS OF DEXA 94, ATHENS, GREECE, 7-9 SEPT. 1994, Seiten 339-348, XP002207223 1994, Berlin, Germany, Springer-Verlag, Germany ISBN: 3-540-58435-8 * Seite 343, Zeile 8, Absatz 3 - Seite 347, Zeile 2 * ---- | 1,2,6-9, 14-20, 22,25, 29,31-38 | G06F17/30 |
| A | ZOBEL J ET AL: "Searching large lexicons for partially specified terms using compressed inverted files" 19TH INTERNATIONAL CONFERENCE ON VERY LARGE DATA BASES PROCEEDINGS, PROCEEDING OF 19TH INTERNATIONAL CONFERENCE ON VERY LARGE DATA BASES, DUBLIN, IRELAND, 24-27 AUG. 1993, Seiten 290-301, XP002207224 1993, Palo Alto, CA, USA, Morgan Kaufmann Publishers, USA * Seite 295, linke Spalte, Zeile 6, Absatz 5 - Seite 297, rechte Spalte, Zeile 1; Abbildung 1 * ---- | 1-38 | RECHERCHIERTE SACHGEBIETE (Int.Cl.7) G06F |
| A | US 6 278 992 B1 (CURTIS JOHN ANDREW ET AL) 21. August 2001 (2001-08-21) * Zusammenfassung * * Spalte 5, Zeile 17 - Spalte 6, Zeile 15 * * Spalte 17, Zeile 38 - Spalte 18, Zeile 59 * * Spalte 19, Zeile 23 - Zeile 55 * ---- -/-- | 1 | |

Der vorliegende Recherchenbericht wurde für alle Patentansprüche erstellt

| Recherchenort | Abschlußdatum der Recherche | Prüfer |
|---|---|---|
| DEN HAAG | 23. Juli 2002 | Fournier, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 01 11 9749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 1997, no. 04,<br>30. April 1997 (1997-04-30)<br>& JP 08 329112 A (FUJITSU LTD),<br>13. Dezember 1996 (1996-12-13)<br>* Zusammenfassung * | 1 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 23. Juli 2002 | Fournier, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR. EP 01 11 9749

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2002

| Im Recherchenbericht angeführtes Patentdokument | | Datum der Veröffentlichung | Mitglied(er) der Patentfamilie | Datum der Veröffentlichung |
|---|---|---|---|---|
| US 6278992 | B1 | 21-08-2001 | KEINE | |
| JP 08329112 | A | 13-12-1996 | KEINE | |

EPO FORM P0461

Für nähere Einzelheiten zu diesem Anhang : siehe Amtsblatt des Europäischen Patentamts, Nr.12/82